(19) Europäisches Patentamt
European Patent Office
Office européen des brevets

(11) **EP 4 707 338 A1**

(12) **EUROPEAN PATENT APPLICATION**
published in accordance with Art. 153(4) EPC


(43) Date of publication:
**11.03.2026 Bulletin 2026/11**

(21) Application number: **24903793.8**

(22) Date of filing: **13.12.2024**

(51) International Patent Classification (IPC):
***C08L 91/00*** *(2006.01)* ***C08K 5/20*** *(2006.01)*
***C08L 83/08*** *(2006.01)* ***C09K 3/18*** *(2006.01)*
***D21H 17/03*** *(2006.01)* ***D21H 21/16*** *(2006.01)*

(52) Cooperative Patent Classification (CPC):
**C08K 5/00; C08K 5/20; C08L 83/08; C08L 91/00; C08L 101/02; C09K 3/18; D21H 17/03; D21H 17/07; D21H 17/14; D21H 21/16; D21H 21/28; D21J 5/00**

(86) International application number:
**PCT/JP2024/044222**

(87) International publication number:
**WO 2025/127140 (19.06.2025 Gazette 2025/25)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **13.12.2023 JP 2023210536**



(71) Applicant: **Daikin Industries, Ltd.**
**Osaka-shi, Osaka 530-0001 (JP)**

(72) Inventors:
- **AKUTA, Ryo**
  **Osaka-Shi, Osaka 530-0001 (JP)**
- **HIGASHI, Masahiro**
  **Osaka-Shi, Osaka 530-0001 (JP)**
- **MATSUMOTO, Akane**
  **Osaka-Shi, Osaka 530-0001 (JP)**
- **SAKAMAKI, Tatsunori**
  **Osaka-Shi, Osaka 530-0001 (JP)**
- **SHIMAOKA, Yuki**
  **Osaka-Shi, Osaka 530-0001 (JP)**
- **TOGO, Yukinori**
  **Osaka-Shi, Osaka 530-0001 (JP)**
- **KISHIKAWA, Yosuke**
  **Osaka-Shi, Osaka 530-0001 (JP)**
- **TSUCHII, Takane**
  **Osaka-Shi, Osaka 530-0001 (JP)**

(74) Representative: **Hoffmann Eitle**
**Patent- und Rechtsanwälte PartmbB**
**Arabellastraße 30**
**81925 München (DE)**


(54) **COMPOSITION**


(57) Provided is a novel composition comprising a hydrophobic compound (A) formed from a hydrophobic compound (A1) and a hydrophobic compound (A2) different from the hydrophobic compound (A1), wherein the endothermic peak of the hydrophobic compound (A1) in differential scanning calorimetry is shifted by 0.5°C to 80°C to the lower temperature side in differential scanning calorimetry of the hydrophobic compound (A), and the composition can impart liquid repellency to a base material.


EP 4 707 338 A1

## Description

### Technical Field

The present disclosure relates to a composition, and in particular to a composition which can impart liquid repellency to a substrate.

### Background Art

Patent Literature 1 discloses a composition for papermaking in powder form that can improve paper quality such as bulkiness and size, as well as workability.

### Citation List

### Patent Literature

Patent Literature 1: Japanese Patent Laid-Open No. 2005-60921

### Summary of Invention

### Technical Problem

Patent Literature 1 does not describe or suggest the use of multiple combinations of hydrophobic compounds. In addition, Patent Literature 1 does not consider the addition of liquid repellency to substrates.

An object of the present disclosure is to provide a novel composition which can impart liquid repellency to a substrate.

### Solution to Problem

The present disclosure includes the following embodiments.

[Item 1]
A composition comprising a hydrophobic compound (A) consisting of a hydrophobic compound (A1) and a hydrophobic compound (A2) which is different from the hydrophobic compound (A1), wherein
an endothermic peak in differential scanning calorimetry of the hydrophobic compound (A1) is shifted to a lower temperature by 0.5°C or more and 80°C or less in differential scanning calorimetry of the hydrophobic compound (A).
[Item 2]
The composition according to item 1, wherein the composition is a water-dispersion composition.
[Item 3]
The composition according to item 1 or 2, wherein the composition is a repellent.
[Item 4]
The composition according to any one of items 1 to 3, wherein the hydrophobic compound (A1) has a hexadecane contact angle of 30° or more.
[Item 5]
The composition according to any one of items 1 to 4, wherein the endothermic peak is a melting peak of the hydrophobic compound (A1).
[Item 6]
The composition according to any one of items 1 to 5, wherein the hydrophobic compound (A1) and the hydrophobic compound (A2) are each independently a compound having a hydrocarbon group having 6 or more and 40 or less carbon atoms.
[Item 7]
The composition according to any one of items 1 to 6, wherein the hydrophobic compound (A1) and the hydrophobic compound (A2) are each independently a compound selected from the group consisting of a modified body of amine, a modified body of polyol, a modified body of polycarboxylic acid and another liquid or solid oil.
[Item 8]
The composition according to any one of items 1 to 7, wherein

the hydrophobic compound (A1) has an amide structure, and

the hydrophobic compound (A2) has no amide structure.

[Item 9]
The composition according to any one of items 1 to 8, wherein

the hydrophobic compound (A1) is a compound selected from the group consisting of a modified body of amine, a modified body of polyol and a modified body of polycarboxylic acid;
the modified body of amine is a compound which has an amine backbone and one or more groups represented by the following formula:

$$-Y^{N}-Z^{N}{}_{n}$$

wherein $Y^{N}$ is a 1+n valent group composed of one or more selected from the group consisting of $Y^{N1}$ and $Y^{N2}$,
$Y^{N1}$ is a group composed of one or more selected from the group consisting of a direct bond, -O-, -C(=O)-, -C(=NR')-, - C(=S)-, -S-, $-S(=O)_2-$, -NR'-, -C(OR')R'-, $-C(OR')(-)_2$ and $-N(-)_2$, wherein R' is independently at each occurrence a hydrogen atom or a hydrocarbon group having 1 to 30 carbon atoms,
$Y^{N2}$ is a group composed of one or more selected from the group consisting of a divalent to tetravalent aliphatic hydrocarbon group having 1 to 40 carbon atoms and optionally having a substituent, a divalent to tetravalent hydrocarbon aromatic ring optionally having a substituent, and a divalent to tetravalent heterocyclic ring optionally having a substituent,
$Z^{N}$ is a monovalent hydrocarbon group having 1 or more and 40 or less carbon atoms and optionally having a substituent or a monovalent polysiloxane group, and
n is an integer of 1 or more and 3 or less, and
in which at least one $-Y^{N}-Z^{N}{}_{n}$ is bonded to the nitrogen atom of the amine backbone;
the modified body of polyol is a compound formed by replacing one or more hydroxy groups in the polyol with a group represented by the following formula:

$$-Y^{O}-Z^{O}{}_{n}$$

wherein $Y^{O}$ is a 1+n valent group composed of one or more selected from the group consisting of $Y^{O1}$ and $Y^{O2}$,
$Y^{O1}$ is a group composed of one or more selected from the group consisting of a direct bond, -O-, -C(=O)-, -C(=NR')-, - C(=S)-, -S-, $-S(=O)_2-$, -NR'-, -C(OR')R'-, $-C(OR')(-)_2$ and $-N(-)_2$, wherein R' is independently at each occurrence a hydrogen atom or a hydrocarbon group having 1 to 30 carbon atoms,
$Y^{O2}$ is a group composed of one or more selected from the group consisting of a divalent to tetravalent aliphatic hydrocarbon group having 1 to 40 carbon atoms and optionally having a substituent, a divalent to tetravalent hydrocarbon aromatic ring optionally having a substituent, and a divalent to tetravalent heterocyclic ring optionally having a substituent,
$Z^{O}$ is a monovalent hydrocarbon group having 1 or more and 40 or less carbon atoms and optionally having a substituent or a monovalent polysiloxane group, and
n is an integer of 1 or more and 3 or less;
the modified body of polycarboxylic acid is a compound formed by replacing a hydroxy group in one or more carboxyl groups in the polycarboxylic acid with a group represented by the following formula:

$$-Y^{C}-Z^{C}{}_{n}$$

wherein $Y^{C}$ is a 1+n valent group composed of one or more selected from the group consisting of $Y^{C1}$ and $Y^{C2}$,
$Y^{C1}$ is a group composed of one or more selected from the group consisting of a direct bond, -O-, -C(=O)-, -C(=NR')-, - C(=S)-, -S-, $-S(=O)_2-$, -NR'-, -C(OR')R'-, $-C(OR')(-)_2$ and $-N(-)_2$, wherein R' is independently at each occurrence a hydrogen atom or a hydrocarbon group having 1 to 30 carbon atoms,
$Y^{C2}$ is a group composed of one or more selected from the group consisting of a divalent to tetravalent aliphatic hydrocarbon group having 1 to 40 carbon atoms and optionally having a substituent, a divalent to tetravalent hydrocarbon aromatic ring optionally having a substituent, and a divalent to tetravalent heterocyclic ring optionally having a substituent,
$Z^{C}$ is a monovalent hydrocarbon group having 1 or more and 40 or less carbon atoms and optionally having a substituent or a monovalent polysiloxane group, and
n is an integer of 1 or more and 3 or less.

[Item 10]

The composition according to any one of items 1 to 9, wherein

the hydrophobic compound (A2) has a hydrocarbon group having 3 or more carbon atoms, and
a melting point of the hydrophobic compound (A2) is 40°C or less.

[Item 11]
The composition according to any one of items 1 to 10, wherein

a melting point of the hydrophobic compound (A1) is 50°C or more, and
the melting point of the hydrophobic compound (A2) is 40°C or less.

[Item 12]
The composition according to any one of items 1 to 11, wherein the melting point of the hydrophobic compound (A1) is 30°C or more higher than the melting point of the hydrophobic compound (A2).
[Item 13]
The composition according to any one of items 1 to 12, wherein the amount of the hydrophobic compound (A1) is 15% by weight or more and 95% by weight or less based on the hydrophobic compound (A).
[Item 14]
The composition according to any one of items 1 to 13, wherein the amount of the hydrophobic compound (A2) is 5 parts by weight or more and 500 parts by weight or less based on 100 parts by weight of the hydrophobic compound (A1).
[Item 15]
The composition according to any one of items 1 to 14, wherein

the composition comprises a dispersant, and
the amount of the dispersant is 0.1 parts by weight or more and 100 parts by weight or less based on 100 parts by weight of the hydrophobic compound (A).

[Item 16]
A kit of additive for papermaking, comprising a first agent and a second agent, wherein

the first agent comprises a hydrophobic compound (A1), and
the second agent comprises a hydrophobic compound (A2) which is different from the hydrophobic compound (A1),
wherein an endothermic peak in differential scanning calorimetry of the hydrophobic compound (A1) is shifted to a lower temperature by 0.5°C or more and 80°C or less in differential scanning calorimetry of the hydrophobic compound (A), and
wherein the kit is used by separately adding and mixing the first agent and the second agent to a pulp substrate.

[Item 17]
A product comprising:

a substrate, and
a hydrophobic compound (A) consisting of a hydrophobic compound (A1) and a hydrophobic compound (A2) which is different from the hydrophobic compound (A1),
wherein an endothermic peak in differential scanning calorimetry of the hydrophobic compound (A1) is shifted to a lower temperature by 0.5°C or more and 80°C or less in differential scanning calorimetry of the hydrophobic compound (A) .

[Item 18]
The product according to item 17, wherein

the substrate is a pulp substrate, and
the product is a pulp product.

[Item 19]
A method for producing a product, comprising treating a substrate with the composition according to any one of items 1 to 15 or the kit of additive for papermaking according to item 16.

## Advantageous Effect of Invention

According to the present disclosure, good liquid repellency can be imparted to substrates.

## Description of Embodiments

### <Definition of Terms>

As used herein, the "n valent group" refers to a group having n bonds, i.e., a group forming n bonds. The "n valent organic group" refers to a n valent group containing carbon. Such organic groups are not limited, but can be hydrocarbon groups or derivatives thereof. The derivative of the hydrocarbon group refers to a group that has one or more of N, O, S, Si, amide, sulfonyl, siloxane, carbonyl, carbonyloxy, halogen and the like at the end or in the molecular chain of a hydrocarbon group.

As used herein, the "hydrocarbon group" refers to a group containing carbon and hydrogen and a group in which a hydrogen atom is removed from the hydrocarbon. Such hydrocarbon groups are not limited, but include $C_{1-20}$ hydrocarbon groups, such as an aliphatic hydrocarbon group and an aromatic hydrocarbon group. The above "aliphatic hydrocarbon group" may be either linear, branched, or cyclic, and may be either saturated or unsaturated. The hydrocarbon group may include one or more ring structures. In an explicit term, the hydrocarbon group may be substituted by one or more substituents.

Whether or not the phrases "independently at each occurrence", "independently with each other", "each independently" or similar expressions are explicitly described herein, unless otherwise described that they are exceptions, when a plurality of terms (symbols) that can occur in a chemical structure is defined, such definition is applied independently to each occurrence.

The chemical structures described herein should be understood not to encompass chemical structures that are recognized by those skilled in the art as being chemically impossible or extremely unstable.

### <Composition>

The composition of the present disclosure comprises a hydrophobic compound (A) consisting of a hydrophobic compound (A1) and a hydrophobic compound (A2) which is different from the hydrophobic compound (A1). The composition of the present disclosure may be used as a treatment agent (for example, a barrier coating agent, a surface treatment agent, a repellent (a liquid repellent), in particular, a repellent) and adheres to a substrate (in particular, a pulp substrate) and imparts liquid-repellency, for example, water resistance, oil resistance, water-repellency, oil-repellency and/or antifouling properties to the substrate, and may function as a water-resistant agent, an oil-resistant agent, a water-repellent agent, an oil-repellent agent and/or an antifouling agent. For example, the repellent according to the present disclosure has excellent oil resistance (e.g., oil resistance at room temperature, high temperature oil resistance and antifouling properties), and the amount required to be added can be reduced.

The composition of the present disclosure may be the hydrophobic compound (A) itself, and the hydrophobic compound (A) itself may be used as a treatment agent (a repellent, in particular), or may be combined with other components described below.

The composition of the present disclosure may not have any one selected from the group consisting of a compound having a fluoroalkyl group having 8 or more carbon atoms, a compound having a perfluoroalkyl group having 8 or more carbon atoms, a compound having a fluoroalkyl group having 4 or more carbon atoms, a compound having a perfluoroalkyl group having 4 or more carbon atoms, a compound having a perfluoroalkyl group, a compound having a fluoroalkyl group, and a compound having a fluorine atom. The composition of the present disclosure can impart liquid-repellency to a substrate without including these fluorine-containing compounds.

The volume abundance ratio of particles with a size of 100 μm or larger in the composition of the present disclosure may be 0.1% or more, 0.3% or more, 0.5% or more, 1% or more, 1.5% or more, 3% or more, 4% or more, 5% or more, or 10% or more, and may be 50% or less, 30% or less, 20% or less, 15% or less, 10% or less, 5% or less, 3% or less, or 1.5% or less, as measured by laser diffraction scattering. The method for setting the volume abundance ratio of particles with a size of 100 μm or larger as measured by laser diffraction scattering to the above range is not limited, and for example, particles in the raw material and/or dispersion may be formed into fine particles using a pulverizer or a homogenizer.

The composition in the present disclosure may have a volume median diameter as measured by laser diffraction scattering of 0.1 μm or more, 0.3 μm or more, 0.5 μm or more, 0.7 μm or more, 1 μm or more, 3 μm or more, 5 μm or more, 10 μm or more, 15 μm or more, 30 μm or more, or 50 μm or more, and 300 μm or less, 200 μm or less, 100 μm or less, 50 μm or less, 30 μm or less, 20 μm or less, 10 μm or less, 5 μm or less, or 1 μm or less. In the present disclosure, the volume median diameter refers to the median diameter (D50) in a volume-based particle size distribution by laser diffraction scattering.

When the composition includes a liquid medium (e.g., when the composition is a water dispersion), the residue obtained by removing the liquid medium from the composition may have a penetration at 25°C of 5 or more, 10 or more, 15 or more, 20 or more, 25 or more, 30 or more, 35 or more, 40 or more, or 45 or more, and 200 or less, 150 or less, 125 or less, or 100 or less.

Conditions of measuring penetration may be as specified in JIS K 2235 6.4, Penetration.

When the composition includes a liquid medium (e.g., when the composition is a water dispersion), the hardness of the residue obtained by removing the liquid medium from the composition may be as described below. The Shore A hardness [PEAK] at the peak intensity in the test may be 0.5 or more, 1.0 or more, 1.5 or more, 2.0 or more, 2.5 or more, 3.0 or more, 4.0 or more, 5.0 or more, 7.5 or more, or 10.0 or more, and may be 80 or less, 75 or less, 70 or less, 65 or less, or 60 or less.

The Shore A hardness [1s], which is the Shore A hardness 1 second after the start of the test, may be 0.5 or more, 1.0 or more, 1.5 or more, 2.0 or more, 2.5 or more, 3.0 or more, 4.0 or more, 5.0 or more, 7.5 or more, or 10.0 or more, and may be 80 or less, 75 or less, 70 or less, 65 or less or 60 or less.

The Shore A hardness [3s], which is the Shore A hardness 3 seconds after the start of the test, may be 0.5 or more, 1.0 or more, 1.5 or more, 2.0 or more, 2.5 or more, 3.0 or more, 4.0 or more, 5.0 or more, 7.5 or more, or 10.0 or more, and may be 80 or less, 75 or less, 70 or less, 65 or less, or 60 or less.

{Hydrophobic compound (A)}

The hydrophobic compound (A) in the present disclosure is a mixture consisting of a hydrophobic compound (A1) and a hydrophobic compound (A2) which is different from the hydrophobic compound (A1). The hydrophobic compound (A) in the present disclosure is an active ingredient when the composition of the present disclosure is used as a repellent, and the hydrophobic compound (A) adheres to a substrate (in particular, a pulp substrate) and imparts liquid repellency such as water resistance, oil resistance, water-repellency, oil-repellency and/or antifouling properties to the substrate.

[Characteristics]

The possible characteristics of the hydrophobic compound (A), the hydrophobic compound (A1) and the hydrophobic compound (A2) will be described below. In the following, when reference is made to the characteristics of the hydrophobic compound (A) itself, the hydrophobic compound (A) means a mixture obtained by melting and mixing the hydrophobic compound (A1) and the hydrophobic compound (A2) at the melting point or higher and then cooling at room temperature.

(Dissolution properties)

The hydrophobic compound (A1) and the hydrophobic compound (A2) are hydrophobic and less water-soluble. The hydrophobic compound (A1) and the hydrophobic compound (A2) each independently may have a solubility in water at 25°C of 3.0 g/l or less, 1.0 g/l or less, 0.5 g/l or less, 0.1 g/l or less, or 0.01 g or less, and for example, 1.0 g/l or less. Solubility in water may be calculated from the amount of dissolution when a compound is added to a predetermined amount of water (25°C) in small quantities and is no longer dissolved (the compound floats, precipitates, is deposited or becomes cloudy). Highly water-soluble compounds (for example, a compound that is water-miscible liquid) are not a hydrophobic compound.

The hydrophobic compounds (A1) and (A2) each independently may have a solubility parameter (SP value) of 3.0 or more, 4.0 or more, 5.0 or more, 6.0 or more, 7.0 or more, 8.0 or more, 9.0 or more, 10.0 or more, or 11.0 or more, and each independently may have a solubility parameter (SP value) of 15.0 or less, 14.0 or less, 13.0 or less, 12.0 or less, 10.0 or less, 9.0 or less, or 8.0 or less, preferably 10.5 or less, and particularly 10.0 or less. The SP value may be calculated by the Fedors equation (Polym. Eng. Sci., 14[2], 147 (1974)). Eng. Sci., 14[2], 147 (1974)). Only the hydrophobic compound (A1), only the hydrophobic compound (A2) or both of them may meet the above range, and preferably both meet the above range.

The difference in the SP value of the hydrophobic compound (A1) and the hydrophobic compound (A2) may be more than 0, 0.1 or more, 0.2 or more, 0.3 or more, 0.4 or more, 0.5 or more, 0.6 or more, 0.7 or more, 0.8 or more, 0.9 or more, 1.0 or more, 2.0 or more, 3.0 or more, 4.0 or more, or 5.0 or more, and 6.0 or less, 5.0 or less, 4.0 or less, 3.0 or less, 2.0 or less, 1.5 or less, 1.0 or less, 0.8 or less, 0.6 or less, or 0.5 or less, and preferably 5.0 or less, and more preferably 3.0 or less. The hydrophobic compound (A1) may have a larger value or the hydrophobic compound (A2) may have a larger value. When a plurality of compounds are present in each of the hydrophobic compounds (A1) and (A2), the weighted average based on the weight ratio may be used to calculate the respective values. In the present disclosure, the difference is an absolute difference unless otherwise specified.

The octanol/water partition coefficient (logPow) of the hydrophobic compounds (A1) and (A2) may be each

independently 0 or more, 0.1 or more, 0.3 or more, 0.5 or more, 1 or more, 1.5 or more, 2.0 or more, 2.5 or more, 3.0 or more, 3.5 or more, 4.0 or more, 4.5 or more, 5.0 or more, 5.5 or more, or 6.0 or more, and preferably 0.5 or more, 1.5 or more, 2.5 or more, or 3.5 or more, and 10.0 or less, 9.0 or less, 8.0 or less, 7.0 or less, 6.0 or less, 5.0 or less, 4.0 or less, 3.0 or less, 2.0 or less, or 1.0 or less. Only the hydrophobic compound (A1), only the hydrophobic compound (A2) or both of them may meet the above range, and preferably both meet the above range.

The difference in the octanol/water partition coefficient (logPow) of the hydrophobic compound (A1) and the hydrophobic compound (A2) may be more than 0, 0.1 or more, 0.3 or more, 0.5 or more, 1.0 or more, 1.5 or more, or 2.0 or more, and 5.0 or less, 4.5 or less, 4.0 or less, 3.0 or less, 2.5 or less, 2.0 or less, 1.5 or less, 1.0 or less, 0.5 or less, 0.3 or less, or 0.1 or less, and preferably 2.5 or less, and more preferably 1.0 or less. The hydrophobic compound (A1) may have a larger value or the hydrophobic compound (A2) may have a larger value. When a plurality of compounds are present in each of the hydrophobic compounds (A1) and (A2), the weighted average based on the weight ratio may be used to calculate the respective values.

The hydrophobic compound (A2) may have an HLB value (a value of hydrophile-lipophile balance) of 0.5 or more, or 1.0 or more, and 11.5 or less, 11.0 or less, 10.5 or less, 10.0 or less, 9.5 or less, 9.0 or less, 8.5 or less, 8.0 or less, 7.5 or less, or 7.0 or less. The upper limit or less described above allows the effect of the present disclosure to be achieved well.

The HLB value (the value of hydrophile-lipophile balance) was devised by W.C. Griffin. It is a numerical value for nonionic surfactants that expresses the balance of strength between a lipophilic group (e.g., an alkyl group) and a hydrophilic group (e.g., a polyoxyalkylene chain) of a nonionic surfactant. In the present invention, the HLB value employed is a value calculated by the method of Griffin (reference: W. G. Griffin, J. Soc. Cosmetic Chemists, 1, 311 (1949) and W. G. Griffin, J. Soc. Cosmetic Chemists, 5, 249 (1954)). For those with a catalog value, the catalog value may be adopted as a convenient way to judge, but if the catalog value differs from the calculated value, the calculated value shall be adopted.

The hydrophobic compound (A1) may have a larger HLB value than the hydrophobic compound (A2) or the hydrophobic compound (A2) may have a larger HLB value. When a plurality of compounds are present in each of the hydrophobic compounds (A1) and (A2), the weighted average based on the weight ratio may be used to calculate the respective values.

(Thermal properties)

The endothermic peak in DSC of the hydrophobic compound (A1) (alone) may shift to lower temperatures when the hydrophobic compound (A1) is mixed with the hydrophobic compound (A2) to make the hydrophobic compound (A) (mixture). The endothermic peak temperature in differential scanning calorimetry of the hydrophobic compound (A1) may be shifted to a lower temperature by 2°C or more and 80°C or less in differential scanning calorimetry of the hydrophobic compound (A). The endothermic peak that is shifted to lower temperatures may be any peak of the hydrophobic compound (A1) (e.g., the maximum peak, any endothermic peak with the top 30% peak intensity, etc.). At least one peak of all peaks (e.g., 50% or more, 70% or more, 100%) in the range of -50°C to 300°C (e.g., -30°C to 240°C, especially -20°C to 180°C, especially 0°C to 180°C) may be shifted to a low temperature. The low temperature shift width may be 0.5°C or more, 1°C or more, 1.5°C or more, 2°C or more, 2.5°C or more, 3°C or more, 4°C or more, 6°C or more, 8°C or more, 10°C or more, 12°C or more, 15°C or more, 20°C or more, or 30°C or more, and 80°C or less, 75°C or less, 65°C or less, 55°C or less, 45°C or less, 35°C or less, 25°C or less, 20°C or less, 15°C or less, 12°C or less, 11°C or less, or 10°C or less, and for example 20°C or less, and in an embodiment, the low temperature shift width may be 0.5°C or more and 80°C or less, in particular 0.5°C or more and 20°C or less, 3°C or more and 12°C or less, or 3°C or more and 11°C or less. The combination of the two hydrophobic compounds is expected to change the thermal properties and cause a low temperature shift of the endothermic peak in DSC. The hydrophobic compound (A1) may have one or more endothermic peaks at 45°C or more, and the endothermic peaks may be shifted to lower temperatures. Preferably, the endothermic peak of the hydrophobic compound (A1) which is shifted to low temperature is the endothermic peak at the highest temperature in the measurement range, and may be, for example, the peak associated with melting (melting point peak). The endothermic peaks do not include an endothermic peak due to decomposition of the compound, but are an endothermic peak in the range where the compound does not decompose. For compounds that decompose without melting, it is understood that the melting point of the compound is the decomposition temperature or higher.

Measurement conditions of DSC may be as follows. In DSC, the endothermic peaks observed in the process of cooling to - 20°C or less and then increasing temperature to 180°C or more at 10°C/ minute in nitrogen atmosphere are measured. The amount of heat absorbed is determined by calculating the amount of heat within a range of ±10°C around the endothermic peak temperature.

The melting points of the hydrophobic compounds (A1) and (A2) may be each independently -100°C or more, -75°C or more, -50°C or more, -25°C or more, 0°C or more, 30°C or more, 40°C or more, 50°C or more, 60°C or more, 80°C or more, 100°C or more, or 120°C or more, and are preferably 40°C or more, and may be each independently 250°C or less, 225°C or less, 200°C or less, 150°C or less, 130°C or less, 120°C or less, 110°C or less, 100°C or less, 80°C or less, 50°C or

less, 40°C or less, 30°C or less, 20°C or less, 10°C or less, 0°C or less, or - 10°C or less. Only the hydrophobic compound (A1), only the hydrophobic compound (A2) or both of them may meet the above range, and preferably both meet the above range. The hydrophobic compound (A1) may be solid at room temperature (melting point of 30°C or more, for example, 50°C or more), and the hydrophobic compound (A2) may have a melting point of 40°C or less, for example 30°C or less (less than 30°C), and, in particular, may be liquid at room temperature (melting point of 20°C or less). In particular, the melting point of the hydrophobic compound (A1) may be 50°C or more, and the melting point of the hydrophobic compound (A2) may be 40°C or less.

The difference in the melting point of the hydrophobic compound (A1) and the hydrophobic compound (A2) may be more than 0°C, 5°C or more, 10°C or more, 15°C or more, 20°C or more, 25°C or more, 30°C or more, 50°C or more, 70°C or more, 90°C or more, 110°C or more, 130°C or more, 150°C or more, 175°C or more, or 200°C or more, and for example, 30°C or more, 50°C or more, 70°C or more, or 90°C or more, preferably 30°C or more, more preferably 70°C or more, further preferably 90°C or more, and 300°C or less, 250°C or less, 200°C or less, 150°C or less, 100°C or less, 80°C or less, 60°C or less, 50°C or less, 40°C or less, 30°C or less, 20°C or less, or 10°C or less. The hydrophobic compound (A1) may have a higher melting point, or the hydrophobic compound (A2) may have a higher melting point, and preferably the hydrophobic compound (A1) has a higher melting point. When a plurality of compounds are present in each of the hydrophobic compounds (A1) and (A2), the weighted average based on the weight ratio may be used to calculate the respective values. For example, the hydrophobic compound (A1) may have a higher melting point than the hydrophobic compound (A2). For example, the melting point of the hydrophobic compound (A1) may be 30°C or more higher than the melting point of the hydrophobic compound (A2).

(Mechanical properties)

The hydrophobic compound (A1) may have a penetration at 25°C of 5 or more, 10 or more, 15 or more, 20 or more, 25 or more, 30 or more, 35 or more, 40 or more, or 45 or more, and 200 or less, 150 or less, 125 or less, or 100 or less.

Conditions of measuring penetration may be as specified in JIS K 2235 6.4.

The penetration at 25°C of the hydrophobic compound (A) may be smaller than the larger one of the penetration at 25°C of the hydrophobic compound (A1) or that of the hydrophobic compound (A2). The difference ([larger value of penetration at 25°C of hydrophobic compound (A1) or (A2)] - [penetration at 25°C of hydrophobic compound (A)]) may be more than 0, 2 or more, 5 or more, 10 or more, 15 or more, 20 or more, 30 or more, 40 or more, or 50 or more, and 100 or less, 80 or less, 70 or less, 60 or less, 50 or less, 40 or less, 30 or less, 20 or less, or 10 or less.

Shore A hardness [PEAK] of the hydrophobic compound (A) may be as follows.

The Shore A hardness [PEAK] at the peak in the test may be 0.5 or more, 1.0 or more, 1.5 or more, 2.0 or more, 2.5 or more, 3.0 or more, 4.0 or more, 5.0 or more, 7.5 or more, or 10.0 or more, and is for example 5.0 or more, and may be 80 or less, 75 or less, 70 or less, 65 or less, or 60 or less, and is for example, 60 or less.

The Shore A hardness [1s], which is the Shore A hardness 1 second after the start of the test, may be 0.5 or more, 1.0 or more, 1.5 or more, 2.0 or more, 2.5 or more, 3.0 or more, 4.0 or more, 5.0 or more, 7.5 or more, or 10.0 or more, and is for example, 10 or more, and may be 80 or less, 75 or less, 70 or less, 65 or less, or 60 or less, and is for example, 60 or less.

The Shore A hardness [3s], which is the Shore A hardness 3 seconds after the start of the test, may be 0.5 or more, 1.0 or more, 1.5 or more, 2.0 or more, 2.5 or more, 3.0 or more, 4.0 or more, 5.0 or more, 7.5 or more, or 10.0 or more, and is for example, 10 or more, and may be 80 or less, 75 or less, 70 or less, 65 or less, or 60 or less, and is for example, 60 or less.

The Shore A hardness of the hydrophobic compound (A) is preferably smaller than the larger one of the Shore A hardness of the hydrophobic compound (A1) and the Shore A hardness of the hydrophobic compound of (A2). The difference may be as follows.

[Larger one of Shore A hardness [PEAK] of hydrophobic compounds (A1) and (A2)] - [Shore A hardness [PEAK] of hydrophobic compound (A)] may be more than 0, 2 or more, 5 or more, 10 or more, 15 or more, 20 or more, 25 or more, 30 or more, 35 or more, 40 or more, 45 or more, or 50 or more, and may be 10 or more, particularly 20 or more, 25 or more, 30 or more, 35 or more, 40 or more, 50 or more, 55 or more, 60 or more, 65 or more, or 70 or more, and for example, 56 or more, and may be 100 or less, 90 or less, 80 or less, 70 or less, 60 or less, 50 or less, 40 or less, 30 or less, 20 or less, or 10 or less, preferably 90 or less, and particularly 80 or less, and in an embodiment, the difference may be 10 or more and 100 or less, 30 or more and 90 or less, 35 or more and 90 or less, 40 or more and 90 or less, 56 or more and 90 or less, and in particular 56 or more and 80 or less.

[Larger one of Shore A hardness [PEAK] of hydrophobic compounds (A1) and (A2)[1s]] - [Shore A hardness [PEAK] of hydrophobic compound (A) [1s]] may be more than 0, 2 or more, 5 or more, 10 or more, 15 or more, 20 or more, 25 or more, 30 or more, 35 or more, 40 or more, 45 or more or 50 or more, for example, 10 or more, particularly 20 or more, 25 or more, 30 or more, 35 or more, 40 or more, 50 or more, 55 or more, 60 or more, 65 or more, or 70 or more, and for example, 56 or more, and may be 100 or less, 90 or less, 80 or less, 70 or less, 60 or less, 50 or less, 40 or less, 30 or less, 20 or less, or 10 or less, preferably 90 or less, and particularly 80 or less, and in an embodiment, the difference may be 10 or more and 100 or less, 30 or more and 90 or less, 35 or more and 90 or less, 40 or more and 90 or less, and 56 or more and 90 or less,

and particularly 56 or more and 80 or less.

[Larger one of Shore A hardness [PEAK] of hydrophobic compounds (A1) and (A2)[3s]] - [Shore A hardness [PEAK] of hydrophobic compound (A) [3s]] may be more than 0, 2 or more, 5 or more, 10 or more, 15 or more, 20 or more, 25 or more, 30 or more, 35 or more, 40 or more, 45 or more or 50 or more, for example 10 or more, particularly 20 or more, 25 or more, 30 or more, 35 or more, 40 or more, 50 or more, 55 or more, 60 or more, 65 or more, or 70 or more, and may be, for example, 56 or more, and 100 or less, 90 or less, 80 or less, 70 or less, 60 or less, 50 or less, 40 or less, 30 or less, 20 or less, or 10 or less, preferably 90 or less, and particularly 80 or less, and in an embodiment, the difference may be 10 or more and 100 or less, 30 or more and 90 or less, 35 or more and 90 or less, 40 or more and 90 or less, 56 or more and 90 or less, and particularly 56 or more and 80 or less.

The Shore A hardness of the hydrophobic compound (A1) may be larger than the Shore A hardness of the hydrophobic compound (A2).

(Liquid-repellent properties)

The hydrophobic compound (A1) and (A2) each independently may have a HD (n-hexadecane) contact angle of 10° or more, 20° or more, 25° or more, 30° or more, 35° or more, 40° or more, 45° or more, 50° or more, 55° or more, 60° or more, or 65° or more, and is preferably 25° or more, more preferably 30° or more, and each independently may have a HD (n-hexadecane) contact angle of 100° or less, 90° or less, or 75° or less. When the hydrophobic compounds (A1) and (A2) each independently have a HD contact angle of the lower limit or more, good liquid-repellency (in particular oil-repellency) can be imparted to the substrate. The HD contact angle is a static contact angle of the hydrophobic compound (A) to a spin-coated film, which is obtained by dropping 2 μL of HD on a spin-coated film and measuring the contact angle one second after the droplet reaches the film. Only the hydrophobic compound (A1), only the hydrophobic compound (A2) or both of them may meet the above range, and preferably both meet the above range.

The difference in the HD contact angle of the hydrophobic compound (A1) and that of the hydrophobic compound (A2) may be more than 0°, 5° or more, 10° or more, 15° or more, 20° or more, 25° or more, or 30° or more, and 60° or less, 50° or less, 40° or less, 30° or less, 20° or less, or 10° or less. The hydrophobic compound (A1) may have a larger value or the hydrophobic compound (A2) may have a larger value. When a plurality of compounds are present in each of the hydrophobic compounds (A1) and (A2), the weighted average based on the weight ratio may be used to calculate the respective values.

The hydrophobic compound (A1) and (A2) each independently has a water contact angle of 35° or more, 40° or more, 45° or more, 50° or more, 55° or more, 65° or more, 75° or more, 85° or more, 90° or more, or 100° or more, and each independently may have 160° or less, 140° or less, 130° or less, 120° or less, 110° or less, 100° or less or 90° or less. A water contact angle of the hydrophobic compound (A1) and (A2) each independently of the lower limit or more can impart good liquid-repellency (in particular water-repellency) to a substrate. The water contact angle is a static contact angle of a hydrophobic compound (A1) to a spin-coated film, which is obtained by dropping 2 μL of water on a spin-coated film and measuring the contact angle one second after the droplet reaches the film. Only the hydrophobic compound (A1), only the hydrophobic compound (A2) or both of them may meet the above range, and preferably both meet the above range.

The difference in the water contact angle of the hydrophobic compound (A1) and that of the hydrophobic compound (A2) may be more than 0°, 5° or more, 10° or more, 15° or more, 20° or more, 25° or more, or 30° or more, and 60° or less, 50° or less, 40° or less, 30° or less, 20° or less, or 10° or less. The hydrophobic compound (A1) may have a larger value or the hydrophobic compound (A2) may have a larger value. When a plurality of compounds are present in each of the hydrophobic compounds (A1) and (A2), the weighted average based on the weight ratio may be used to calculate the respective values.

(Other characteristics)

The hydrophobic compound (A1) and (A2) is preferably a biobased compound with carbon of biobased origin. A biobased content is measured in accordance with ASTM D6866. The biobased content of the hydrophobic compound (A1) and (A2) each independently may be 20% or more, preferably 30% or more, more preferably 50% or more, even more preferably 60% or more, still more preferably 70% or more, and most preferably 80% or more or 90% or more, and for example, 100%. A high biobased content means that the amount of use of fossil resource materials, which are typically petroleum, is small, and a higher biobased content of the hydrophobic compound (A1) is preferred from that point of view. Only the hydrophobic compound (A1), only the hydrophobic compound (A2) or both of them may meet the above range, and preferably both meet the above range.

The hydrophobic compound (A1) and (A2) each independently has a biodegradation as of the $180^{th}$ day of preferably 5% or more. A higher biodegradation is preferred because of small environmental load. The hydrophobic compound (A1) and (A2) each independently may have a biodegradation as of the $180^{th}$ day of, for example, 10% or more, 20% or more, 30% or more, 50% or more, 60% or more, 70% or more, 80% or more, or 90% or more, and preferably 30% or

more, more preferably 50% or more, further preferably 70% or more, and most preferably 80% or more. The hydrophobic compound (A1) and (A2) each independently has a biodegradation as of the $60^{th}$ day of preferably 5% or more. A higher biodegradation is preferred because of small environmental load. The hydrophobic compound (A1) and (A2) each independently may have a biodegradation as of the $60^{th}$ day of, for example, 10% or more, 15% or more, 20% or more, 25% or more, 30% or more, 35% or more, 40% or more, or 45% or more, and preferably 10% or more, and more preferably 30% or more. This biodegradation refers to the biodegradation specified in JIS K 6953-1 or ASTM D6400. Only the hydrophobic compound (A1), only the hydrophobic compound (A2) or both of them may meet the above range, and preferably both meet the above range.

The hydrophobic compound (A) has a biodegradation as of the $180^{th}$ day of preferably 5% or more. A higher biodegradation is preferred because of small environmental load. The hydrophobic compound (A) may have a biodegradation as of the $180^{th}$ day of, for example, 10% or more, 20% or more, 30% or more, 50% or more, 60% or more, 70% or more, 80% or more, or 90% or more, preferably 30% or more, more preferably 50% or more, further preferably 70% or more, and most preferably 80% or more. The hydrophobic compound (A) has a biodegradation as of the $60^{th}$ day of preferably 5% or more. A higher biodegradation is preferred because of small environmental load. The hydrophobic compound (A) may have a biodegradation as of the $60^{th}$ day of, for example, 10% or more, 15% or more, 20% or more, 25% or more, 30% or more, 35% or more, 40% or more, or 45% or more, preferably 10% or more, and more preferably 30% or more. It is preferable that the biodegradation of the hydrophobic compound (A) is higher than the lower one of the biodegradations of the hydrophobic compound (A1) and the hydrophobic compound (A2). The difference may be more than 0%, 5% or more, 10% or more, 15% or more, 20% or more, 25% or more, or 30% or more, and 60% or less, 50% or less, 40% or less, 30% or less, 20% or less, or 10% or less.

The biodegradation as of the $180^{th}$ day of the hydrophobic compound (A) may be higher than the biodegradation as of the $180^{th}$ day of the hydrophobic compound (A1) or higher than the biodegradation as of the $180^{th}$ day of the hydrophobic compound (A2). The difference between the biodegradation as of the $180^{th}$ day of the hydrophobic compound (A) and the biodegradation as of the $180^{th}$ day of the hydrophobic compound (A1) may be 1% or more, 2.5% or more, 5% or more, 7.5% or more, 10% or more, 15% or more, 25% or more, 30% or more, or 40% or more, and may be 90% or less, 80% or less, 70% or less, 60% or less, 50% or less, 40% or less, 30% or less, or 20% or less. The difference between the biodegradation as of the $180^{th}$ day of the hydrophobic compound (A) and the biodegradation as of the $180^{th}$ day of the hydrophobic compound (A2) may be 1% or more, 2.5% or more, 5% or more, 7.5% or more, 10% or more, 15% or more, 25% or more, 30% or more, or 40% or more, and 90% or less, 80% or less, 70% or less, 60% or less, 50% or less, 40% or less, 30% or less, or 20% or less.

[Structure]

The structure and other features of the hydrophobic compound (A) will be described below, but only one of the hydrophobic compounds (A) (only the hydrophobic compound (A1) or only the hydrophobic compound (A2)) or both may satisfy the description of the structure and other features, and preferably both satisfy the features.

The hydrophobic compound (A1) and (A2) in the present disclosure each independently may not have any one selected from the group consisting of a fluoroalkyl group having 8 or more carbon atoms, a perfluoroalkyl group having 8 or more carbon atoms, a fluoroalkyl group having 4 or more carbon atoms, a perfluoroalkyl group having 4 or more carbon atoms, a perfluoroalkyl group, a fluoroalkyl group, and a fluorine atom. The hydrophobic compound (A1) and (A2) each independently can impart liquid-repellency without including these fluorine-containing groups to a substrate.

The hydrophobic compounds (A1) and (A2) may each independently be a compound having a monovalent hydrocarbon group having 1 or more and 40 or less carbon atoms and optionally having a substituent or a monovalent polysiloxane group. The hydrophobic compounds (A1) and (A2) may each independently have a hydrocarbon group having 3 or more and 40 or less carbon atoms (e.g., an aliphatic hydrocarbon group) from the viewpoint of the improvement in liquid-repellency. The hydrophobic compound (A1) may have a hydrocarbon group having 6 or more and 40 or less carbon atoms, and the hydrophobic compound (A2) may have a hydrocarbon group having 3 or more and 40 or less carbon atoms.

(Monovalent hydrocarbon group optionally having a substituent)

The hydrophobic compound (A1) and (A2) each independently may have a monovalent hydrocarbon group optionally having a substituent.

The hydrocarbon group may be a monovalent hydrocarbon group having 1 or more and 40 or less carbon atoms. The hydrocarbon group may be an aromatic hydrocarbon group or an aliphatic hydrocarbon group, and may be an aliphatic hydrocarbon group, and for example, preferably a saturated or unsaturated aliphatic hydrocarbon group. Examples of hydrocarbon groups include an alkyl group and a group having 1 to 4 (e.g., 1 to 2) unsaturated carbon bonds. The hydrocarbon group may be branched, cyclic or linear, and preferably linear. It is preferable that one or both of the

hydrophobic compounds (A1) and (A2) have an unsaturated hydrocarbon group.

The hydrocarbon group may have 1 or more, 3 or more, 6 or more, 8 or more, 10 or more, 12 or more, 14 or more, 16 or more, 18 or more, 20 or more, or 22 or more, preferably 3 or more, 6 or more, 10 or more, 12 or more, or 16 or more carbon atoms, and for example, have 10 or more, and 40 or less, 35 or less, 30 or less, 25 or less, 20 or less, 15 or less, or 10 or less, preferably 30 or less, 25 or less, or 20 or less carbon atoms.

The hydrocarbon group may have a substituent, and the number of substituents is preferably 4 or less, more preferably 1, and the hydrocarbon group is more preferably non-substituted. Examples of substituents include -OR', -$N(R')_2$, -COOR', and a halogen atom (wherein R' is independently at each occurrence a hydrogen atom or a hydrocarbon group having 1 to 30, 1 to 20, 1 to 10, or 1 to 4 carbon atoms). The substituent may or may not have active hydrogen. The number of substituents may be 6 or less, 5 or less, 4 or less, 3 or less, 2 or less, 1 or less, or 0. In the hydrocarbon group having a substituent, the amount of carbon atom relative to the carbon atom and the heteroatom may be 70 mol% or more, 80 mol% or more, 90 mol% or more, 95 mol% or more, or 99 mol% or more, and preferably 75 mol% or more, and may be 95 mol% or less, 90 mol% or less, 85 mol% or less, or 80 mol% or less. The hydrocarbon group may have 1 to 3 (for example, 1) -OR' (in particular, -OH) as a substituent (for example at a site other than the end).

(Monovalent polysiloxane group)

The hydrophobic compounds (A1) and (A2) may each independently have a monovalent polysiloxane group. The (monovalent) polysiloxane group can impart liquid-repellency to the substrate as the (monovalent) hydrocarbon group does.

The polysiloxane group may also be represented by the following formula:

$$-[-Si(R^s)_2-O-]_a-$$

[wherein $R^s$ is independently at each occurrence a hydrocarbon group having 1 to 40 carbon atoms or a reactive group, and a is an integer of 5 or more and 10,000 or less].

$R^s$ is a hydrocarbon group having 1 to 40 carbon atoms or a reactive group.

Examples of hydrocarbon groups having 1 to 40 carbon atoms include a hydrocarbon group having 1 to 5 carbon atoms and a hydrocarbon group having 6 to 40 carbon atoms.

Examples of hydrocarbon groups having 1 to 5 carbon atoms include a hydrocarbon group having 1 to 5 carbon atoms such as a methyl group, an ethyl group, a propyl group, a butyl group and a pentyl group (in particular an aliphatic hydrocarbon group, in particular an alkyl group, for example, a methyl group or an ethyl group, and in particular a methyl group).

The hydrocarbon group having 6 to 40 carbon atoms may be an aromatic hydrocarbon group or an aliphatic hydrocarbon group, and is preferably an aliphatic hydrocarbon group, and in particular a saturated aliphatic hydrocarbon group (an alkyl group). The hydrocarbon group may be cyclic, linear or branched, and preferably linear. The hydrocarbon group may have 6 or more, 8 or more, 10 or more, 12 or more, 14 or more, 16 or more, or 18 or more, preferably 10 or more, more preferably 12 or more carbon atoms, and 40 or less, 35 or less, 30 or less, 25 or less, 20 or less, 15 or less, or 10 or less, preferably 30 or less, and more preferably 25 or less carbon atoms.

Examples of reactive groups include a group having a functional group (for example, a hydroxy group, an amino group, a mercapto group, an epoxy group, a carboxyl group, a halogen-substituted alkyl group, a vinyl group, a (meth)acrylic group, a (meth)acryloyloxy group, a (meth)acrylamide group, and a hydrogen atom directly bonded to a silicon atom). These functional groups may be directly bonded to a silicon atom, or may be bonded to an organic group directly bonded to a silicon atom. The organic group may be a hydrocarbon group, and for example, an alkylene group or a divalent aromatic group. The hydrocarbon group may have 2 or more and 12 or less carbon atoms. An alkylene group having 2 or more and 10 or less carbon atoms is preferred. A divalent aromatic group having 6 or more and 12 or less carbon atoms is preferred. The reactive group may be a group selected from the group consisting of a hydroxy group, an epoxy ring, a carboxyl group, a (meth)acrylic group and an amino group, and for example, may be at least one selected from the group consisting of an epoxy ring, a hydroxy group, a (meth)acrylic group and a carboxyl group.

a is 3 or more, 5 or more, 10 or more, 30 or more, 50 or more, 100 or more, 500 or more, 1,000 or more, 2,000 or more, or 3,000 or more, and preferably 10 or more, and 10,000 or less, 7,500 or less, 5,000 or less, 3,000 or less, 1,500 or less, 1,000 or less, 500 or less, 300 or less, 200 or less, 100 or less, or 50 or less, and preferably 500 or less.

In the polysiloxane group, the amount of $R^s$ which is a hydrocarbon group having 1 to 5 carbon atoms may be 20 mol% or more, 40 mol% or more, 60 mol% or more, or 80 mol% or more, and preferably 50 mol% or more, and 100 mol% or less, 90 mol% or less, 80 mol% or less, or 70 mol% or less relative to the total amount of $R^s$. For example, 50 mol% or more of the total amount of the $R^s$ group may be a methyl group or an ethyl group (in particular, a methyl group).

In the polysiloxane group, the amount of $R^s$ which is a hydrocarbon group having 6 to 40 carbon atoms may be 3 mol% or more, 10 mol% or more, 20 mol% or more, or 30 mol% or more, and 100 mol% or less, 90 mol% or less, 80 mol% or

less, or 70 mol% or less relative to the total amount of $R^s$.

In the polysiloxane group, the amount of $R^s$ which is a reactive group may be 5 mol% or more, 10 mol% or more, 20 mol% or more, or 30 mol% or more, and 50 mol% or less, 40 mol% or less, 30 mol% or less, or 20 mol% or less relative to the total amount of $R^s$.

The $R^s$ group may be introduced randomly or in block, and preferably randomly.

The end structure of the polysiloxane group is not limited, and may be $-OR^s$, $-Si(R^s)_3$ and the like. $R^s$ in the end structure may have one or more reactive groups. Examples of reactive groups are as described above, and may be at least one selected from the group consisting of an epoxy ring, a hydroxy group, a (meth)acrylic group and a carboxyl group.

The polysiloxane group may have a linker. The raw material compound and the polysiloxane group may be linked by a linker, and examples of linkers are not limited, and include a hydrocarbon group having 1 to 40 (for example, 1 to 20) carbon atoms optionally disconnected via an oxygen atom, and may be, for example, a (poly)oxyalkylene group having 1 to 40 (for example 1 to 20) carbon atoms.

Examples of polysiloxane groups include

$$-[-Si(R^s)_2-O-]_a-Si(R^s)_3$$

$$-L^{s1}-[-Si(R^s)_2-O-]_a-Si(R^s)_3$$

$$-L^{s1}-O-L^{s1}-[-Si(R^3)_2-O-]_a-R^s$$

$$-L^{s1}-[-Si(R^s)_2-O-]_a-Si(R^s)_3$$

$$-L^{s1}-O-L^{s1}-[-Si(R^s)_2-O-]_a-R^s$$

$$-L^{s1}-[-Si(R^s)_2-O-]_a-Si(R^s)_3,$$

$$-L^{s1}-[-Si(R^s)_2-O-]_a-R^s$$

[wherein $R^s$ is independently at each occurrence a hydrocarbon group having 1 to 40 carbon atoms or a reactive group, $R^s$ at the end has one or more reactive groups,
methyl groups account for 50 mol% or more of the total amount of the $R^s$ group,
$L^{s1}$ is a hydrocarbon group having 1 to 20 carbon atoms, and
a is 5 or more and 10,000 or less], and

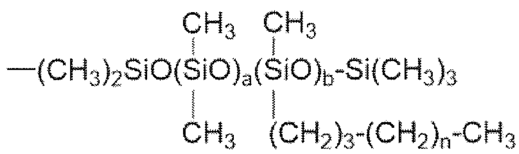

[wherein a is an integer of 0 to 150, b is an integer of 1 to 150, (a + b) is 5 to 200 and n is an integer of 0 to 36].

[Examples of hydrophobic compound (A)]

Examples of hydrophobic compounds (A) include a hydrocarbon compound and a compound having a hydrocarbon group. Examples of hydrocarbon groups and preferred ranges are as described above.

Examples of hydrophobic compounds (A) include at least one selected from the group consisting of a modified body of amine, a modified body of polyol, a modified body of polycarboxylic acid and another liquid or solid oil (described in detail below). For example, the hydrophobic compound (A1) may be a compound selected from the group consisting of a modified body of amine, a modified body of polyol, a modified body of polycarboxylic acid, paraffin wax and microcrystalline wax (for example, a compound selected from the group consisting of a modified body of amine, a modified body of polycarboxylic acid, paraffin wax and microcrystalline wax; in particular, a modified body of amine). The hydrophobic compound (A2) may be a liquid or solid oil which does not correspond to the compound (A1) (for example, a liquid or solid oil other than the modified body of amine; in particular a liquid or solid oil which is not a compound selected from the group consisting of a modified body of amine, a modified body of polycarboxylic acid, paraffin wax and microcrystalline wax; in an embodiment, a liquid or solid oil which is not a compound selected from the group consisting of a modified body of amine, a modified body of polyol, a modified body of polycarboxylic acid, paraffin wax and microcrystalline wax).

The hydrophobic compound (A) may be hydrocarbon, or may be a non-hydrocarbon compound having a

functional group such as an ester group, an ether group and an amide group (an amide structure). For example, the hydrophobic compound (A) may include a compound having an amide structure. Herein the amide structure may be an amide structure in the broad sense, and may be selected from the amide structure in amide (carboxylic acid amide), urea, urethane, imide, thioamide, thiourea, thiourethane, thioimide, sulfone amide, sulfone urea, sulfone urethane and sulfone imide. The amide structure may be selected from the group consisting of $-(C=O)N(-)_2$, $-(C=S)N(-)_2$ and $-S(=O)_2N(-)_2$ (each group may be left-right inverted). In this regard, of the bonds possessed by N in the amide structure, at least one may be bonded to a hydrogen atom. The amide structure is preferably $-(C=O)N(-)_2$, and may be an amide structure in a group selected from the group consisting of an amide group, a urea group, a urethane group and an imide group.

For example, the hydrophobic compound (A1) may have an amide structure, and the hydrophobic compound (A2) may not have an amide structure.

[Composition of hydrophobic compound (A)]

The amount of the hydrophobic compound (A1) may be 15% by weight or more, 25% by weight or more, 35% by weight or more, 45% by weight or more, 55% by weight or more, 65% by weight or more, 75% by weight or more, 85% by weight or more, or 95% by weight or more, and 97.5% by weight or less, 95% by weight or less, 90% by weight or less, 80% by weight or less, 70% by weight or less, 60% by weight or less, 50% by weight or less, 40% by weight or less, 30% by weight or less, 20% by weight or less, or 10% by weight or less based on the hydrophobic compound (A).

The amount of the hydrophobic compound (A1) may be 5 parts by weight or more, 10 parts by weight or more, 25 parts by weight or more, 50 parts by weight or more, 75 parts by weight or more, 100 parts by weight or more, 200 parts by weight or more, or 300 parts by weight or more, and 2,000 parts by weight or less, 1,750 parts by weight or less, 1,500 parts by weight or less, 1,250 parts by weight or less, 1,000 parts by weight or less, 750 parts by weight or less, 500 parts by weight or less, 250 parts by weight or less, 100 parts by weight or less, 75 parts by weight or less, 50 parts by weight or less, 30 parts by weight or less, or 10 parts by weight or less based on 100 parts by weight of the hydrophobic compound (A2).

The amount of the hydrophobic compound (A2) may be 15% by weight or more, 25% by weight or more, 35% by weight or more, 45% by weight or more, 55% by weight or more, 65% by weight or more, 75% by weight or more, 85% by weight or more, or 95% by weight or more, and 97.5% by weight or less, 95% by weight or less, 90% by weight or less, 80% by weight or less, 70% by weight or less, 60% by weight or less, 50% by weight or less, 40% by weight or less, 30% by weight or less, 20% by weight or less, or 10% by weight or less based on the hydrophobic compound (A).

The amount of the hydrophobic compound (A2) may be 5 parts by weight or more, 10 parts by weight or more, 25 parts by weight or more, 50 parts by weight or more, 75 parts by weight or more, 100 parts by weight or more, 200 parts by weight or more, or 300 parts by weight or more, and 2,000 parts by weight or less, 1,750 parts by weight or less, 1,500 parts by weight or less, 1,250 parts by weight or less, 1,000 parts by weight or less, 750 parts by weight or less, 500 parts by weight or less, 250 parts by weight or less, 100 parts by weight or less, 75 parts by weight or less, 50 parts by weight or less, 30 parts by weight or less, or 10 parts by weight or less based on 100 parts by weight of the hydrophobic compound (A1).

[Amount of hydrophobic compound (A)]

The amount of the hydrophobic compound (A) may be 0.01% by weight or more, 0.5% by weight or more, 1% by weight or more, 3% by weight or more, 5% by weight or more, 10% by weight or more, 20% by weight or more, or 30% by weight or more, and 60% by weight or less, 50% by weight or less, 40% by weight or less, 30% by weight or less, 20% by weight or less, 10% by weight or less, 5% by weight or less, or 3% by weight or less in the composition. The hydrophobic compound (A) alone may be used as the composition.

{Modified body of amine}

The modified body of amine, which is an example of the hydrophobic compounds (A1) and (A2), will be described. A modified body of amine is a compound prepared by chemically modifying an amine compound so that the compound exhibits liquid repellency.

The modified body of amine according to the present disclosure is highly dispersible in liquid medium due to its structure, and thus the composition of the present disclosure can have stable properties. Compositions using a polymer compound as an active ingredient tend to have a wide molecular weight distribution and contain relatively large amounts of impurity components. On the other hand, the molecular weight of the modified body of amine can be reduced and the molecular weight distribution of the modified body of amine can be narrowed (monodisperse), and this can lead to better performance.

The modified body of amine has a melting point of 30°C or more, 40°C or more, 60°C or more, 80°C or more, 100°C or more, or 120°C or more, and preferably 40°C or more, 50°C or more, 60°C or more, 70°C or more, or 80°C or more, and 250°C or less, 225°C or less, 200°C or less, 150°C or less, 130°C or less, 120°C or less, 110°C or less, 100°C or

less, 80°C or less, or 50°C or less, and for example, 150°C or less, or 100°C or less. The melting point of the modified body of amine may be measured according to JIS K 2235-1991.

[Structure]

The modified body of amine has a molecular weight of 200 or more, 300 or more, 350 or more, 400 or more, 500 or more, 550 or more, or 750 or more, and 3,000 or less, 2,500 or less, 2,000 or less, 1,500 or less, 1,000 or less, 900 or less, 800 or less, 750 or less, or 500 or less.

In some embodiments, the modified body of amine according to the present disclosure does not have an active hydrogen-containing group. Examples of active hydrogen-containing groups include an amino group (an amino group not adjacent to a carbonyl group, e.g., a primary or secondary amino group), a hydroxy group and a carboxyl group. In some embodiments, the modified body of amine according to the present disclosure does not have a primary or secondary amino group which is not adjacent to a carbonyl group.

The modified body of amine according to the present disclosure may be polyamide having a plurality of amide groups, and for example, may be a polyamide in which amine (a raw material amine compound, for example, polyamine) is modified with a plurality of modifying group (e.g., $Z^N$ described below) through an amide group. Here, amide may have an amide moiety included in a urethane group, a urea group and imide.

The modified body of amine may be a compound in which amine (a raw material amine compound) is modified with a monovalent hydrocarbon group having 1 or more and 40 or less carbon atoms and optionally having a substituent or a monovalent polysiloxane group.

In the modified body of amine, one or more of amino groups in amine are replaced with a modifying group. The modifying group is preferably a monovalent hydrocarbon group optionally having a substituent or a monovalent polysiloxane group. The modified body of amine may have a structure in which amine is modified by an aliphatic hydrocarbon group having 3 or more and 40 or less (for example, 6 or more and 40 or less) carbon atoms from the viewpoint of the improvement in liquid repellency.

For details of the monovalent hydrocarbon group optionally having a substituent and the monovalent polysiloxane group, the same embodiments in the description in the above (Monovalent hydrocarbon group optionally having a substituent) and (Monovalent polysiloxane group) apply.

(Amine backbone)

The modified body of amine according to the present disclosure has an amine backbone. The amine backbone has one or more amino groups which have a predetermined number of bonds (valence), obtained by removing a predetermined number of atoms or atomic groups (e.g., hydrogen) from an amine compound. The amino group in the amine backbone refers to a group selected from the group consisting of $-NH_2$, -NH- and $-N(-)_2$, and also includes an amino group adjacent to a carbonyl group, which is included in an amide group, a urethane group, a urea group, imide and the like. The amine backbone may be an aliphatic group or an aromatic group having one or more amino groups, and this does not exclude the presence of a heteroatom other than nitrogen.

The amine backbone may have a molecular weight of 30 or more, 50 or more, 100 or more, 200 or more, 300 or more, 400 or more, or 500 or more, and 2,800 or less, 2,500 or less, 2,000 or less, 1,500 or less, 1,000 or less, 750 or less, 600 or less, 450 or less, 300 or less, or 250 or less.

The amine backbone may have 1 or more, 2 or more, 3 or more, 4 or more, 6 or more, 8 or more, 10 or more, 12 or more, 14 or more, 16 or more, or 18 or more and 100 or less, 80 or less, 60 or less, 40 or less, 30 or less, 20 or less, 10 or less, or 5 or less, and preferably 50 or less, and particularly preferably 30 or less carbon atoms.

The amine backbone has one or more amino groups. The amino group is a mono to trivalent amino group and is one or more groups selected from the group consisting of $-NH_2$, -NH- and $-N(-)_2$. The amine backbone may have 1 or more, 2 or more, 3 or more, 4 or more, 5 or more, or 6 or more, and has preferably 2 or more, and may have 12 or less, 10 or less, 8 or less, 6 or less, 4 or less, 3 or less, 2 or less, or 1 amino group.

The amine backbone has a hydrocarbon group (an aliphatic hydrocarbon group or an aromatic hydrocarbon group). The hydrocarbon group may be cyclic, branched or linear. The hydrocarbon group may be saturated or unsaturated (for example, saturated). In this case, the hydrocarbon group may be interrupted by an oxygen atom and/or sulfur atom, and may be composed of only a carbon atom, a nitrogen atom and a hydrogen atom. The hydrocarbon group may be a hydrocarbon group optionally interrupted by an oxygen atom and/or a sulfur atom (e.g., a chain saturated aliphatic hydrocarbon group or an aromatic hydrocarbon group having 1 or 2 hydrocarbon aromatic rings), a usual hydrocarbon group (e.g., a chain saturated aliphatic hydrocarbon group or an aromatic hydrocarbon group having 1 or 2 hydrocarbon aromatic rings). When the hydrocarbon group is interrupted by an oxygen atom and/or a sulfur atom, the amine backbone has an ether, thioether, polyether or polythioether structure. The amine backbone may have 1 or more, 2 or more, 3 or more, 4 or more, 5 or more, or 6 or more, and 12 or less, 10 or less, 8 or less, 6 or less, 4 or less, 3 or less, 2 or

less, or 1 hydrocarbon group.

The amine backbone may be composed of mono to trivalent amino group and a chain saturated aliphatic hydrocarbon group or aromatic hydrocarbon group optionally interrupted by an oxygen atom and/or a sulfur atom.

The molar ratio between the carbon atom and the nitrogen atom (C/N ratio) in the amine backbone may be 1 or more, 2 or more, 2.5 or more, 3 or more, 3.5 or more, or 4 or more, and 8 or less, 7 or less, 6 or less, 5 or less, 4 or less, 3.5 or less, 3 or less, 2.5 or less, or 2 or less, and preferably 6 or less or 4 or less.

($-Y^N-Z^N{}_n$)

The modified body of amine according to the present disclosure has one or more groups represented by the following formula:

$-Y^N-Z^N{}_n$

[wherein $Y^N$ is a direct bond or a 1+n valent group,

$Z^N$ is a monovalent hydrocarbon group having 1 or more and 40 or less carbon atoms and optionally having a substituent, or a monovalent polysiloxane group and
n is an integer of 1 or more and 3 or less], and
at least one $-Y^N-Z^N{}_n$ is bonded to the nitrogen atom of the amine backbone.

The modified body of amine may have 1 or more, 2 or more, 3 or more, 4 or more, 5 or more, or 6 or more, and is preferably 2 or more, and may have 12 or less, 10 or less, 8 or less, 6 or less, 4 or less, 3 or less, 2 or less, or 1 $-Y^N-Z^N{}_n$.

At least one $-Y^N-Z^N{}_n$ in the modified body of amine is bonded to the nitrogen atom of the amine backbone. The proportion of the number of $-Y^N-Z^N{}_n$ bonded to the nitrogen atom of the amine backbone to the total number of $-Y^N-Z^N{}_n$ in the modified body of amine may be 10% or more, 30% or more, 60% or more, 80% or more, or 100%, and 75% or less, 50% or less, or 25% or less. $-Y^N-Z^N{}_n$ not bonded to the nitrogen atom of the amine backbone is bonded to another group (e.g., a hydrocarbon group) of the amine backbone.

($Y^N$)

$Y^N$ is a direct bond or a 1+n valent group, and preferably a 1+n valent group. $Y^N$ functions as a linker connecting the amine backbone and n $Z^N$ groups.

n is the number of $Z^N$ bonded to $Y^N$, and may be an integer of 1 or more and 3 or less. n may be 1 or more, 2 or more, or 3 or more, and 3 or less, 2 or less, or 1 or less, and for example, 2 or less.

$Y^N$ may be an aliphatic group (unsaturated aliphatic group or saturated aliphatic group) or an aromatic group.

$Y^N$ may have a molecular weight of 10 or more, 50 or more, 100 or more, 200 or more, 300 or more, 500 or more, or 750 or more, and 2,000 or less, 1,500 or less, 1,000 or less, 750 or less, 500 or less, or 300 or less.

$Y^N$ may have a carbonyl group. $Y^N$ may have one or more selected from the group consisting of an amide group, a urea group, a urethane group and an imide group. Alternatively, $Y^N$ may form one or more selected from the group consisting of an amide group, a urea group, a urethane group and imide with the amino group in the amine backbone. Examples of the amide group, urea group, urethane group and imide group include: -O-C(=O)-NR'-,

-NR'-C(=O)-,

-NR'-C(=O)-O-,

-NR'-C(=O)-NR'-

-C(=O)-NR'-

-C(=O)-NR'-C(=O)-

[wherein R' is a hydrogen atom or a hydrocarbon group having 1 to 30 (e.g., 1 to 20, 1 to 10, or 1 to 4) carbon atoms]. $Y^N$ is preferably bonded to a nitrogen atom in the amine backbone through a -(C=O)- group.

$Y^N$ may be a 1+n valent group composed of one or more selected from the group consisting of a direct bond, -O-, -C(=O)-, -C(=NR')-, -S-, $-S(=O)_2-$, -NR'-, -C(OR')R'-, $-C(OR')(-)_2$, $-N(-)_2$, a divalent to tetravalent aliphatic hydrocarbon group having 1 to 20 carbon atoms, a divalent to tetravalent hydrocarbon aromatic ring and a divalent to tetravalent

heterocyclic ring wherein R' is a hydrogen atom or a hydrocarbon group having 1 to 30 (for example, 1 to 20, 1 to 10, or 1 to 4) carbon atoms.

$Y^N$ may be a 1+n valent group composed of one or more selected from the group consisting of $Y^{N1}$ and $Y^{N2}$, wherein

$Y^{N1}$ may be a group composed of one or more selected from the group consisting of a direct bond, -O-, -C(=O)-, -C(=NR')-, -S-, $-S(=O)_2-$, -C(=S)-, -NR'-, -C(OR')R'-, - $C(OR')(-)_2$ and $-N(-)_2$ (wherein R' is independently at each occurrence a hydrogen atom or a hydrocarbon group having 1 to 30 (for example, 1 to 20, 1 to 10, or 1 to 4) carbon atoms),

$Y^{N2}$ may be a group composed of one or more selected from the group consisting of a divalent to tetravalent aliphatic hydrocarbon group having 1 to 20 carbon atoms, a divalent to tetravalent hydrocarbon aromatic ring, and a divalent to tetravalent heterocyclic ring.

In the present description, the left side of the group represented by $Y^N$ is bonded to the amine backbone and the right side thereof is bonded to $Z^N$.

o $Y^{N1}$

$Y^{N1}$ is a non-hydrocarbon linker

$Y^{N1}$ is a direct bond or a divalent or higher valent group. $Y^{N1}$ may have a valence of 2 to 4, 2 or 3, or 2. It is preferable that $Y^{N1}$ is not limited to direct bond.

$Y^{N1}$ may have a molecular weight of 10 or more, 50 or more, 100 or more, 200 or more, 300 or more, or 500 or more, and 2,000 or less, 1,500 or less, 1,000 or less, 750 or less, or 500 or less.

$Y^{N1}$ may be composed of one or more selected from the group consisting of a direct bond, -O-, -C(=O)-, -C(=NR')-, -S-, - $S(=O)_2-$, -C(=S)-, -NR'-, -C(OR')R'-, $-C(OR')(-)_2$, $-N(-)_2$ (wherein R' is independently at each occurrence a hydrogen atom or a hydrocarbon group having 1 to 30 (for example, 1 to 20, 1 to 10, or 1 to 4) carbon atoms). Examples of $Y^{N1}$ include:

a direct bond,

-O-,

-O-C(=O)-,

-O-C(=O)-O-,

-O-C(=O)-NR'-,

-NR'-,

-NR'-C(=O)-,

-NR'-C(=O)-O-,

-NR'-C(=O)-NR'-,

-C(=O)-,

-C(=O)-O-,

-C(=O)-NR'-,

-C(=O)-NR'-C(=O)-,

-C(=NR')-,

-S-,

$-SO_2-$,

$-SO_2NR'-$,

-C(OR')R'-,

$-C(OR')(-)_2$,

$-N(-)_2$

[wherein R' is independently at each occurrence a hydrogen atom or a hydrocarbon group having 1 to 30 (for example, 1 to 20, 1 to 10, or 1 to 4) carbon atoms]. When $Y^{N1}$ is bonded to the nitrogen atom of the amine backbone, the nitrogen atom is regarded as a part of the amine backbone (an amino group).

o $Y^{N2}$

$Y^{N2}$ is a linker composed of one or more selected from the group consisting of a hydrocarbon group optionally having a substituent, a hydrocarbon aromatic ring optionally having a substituent and a heterocyclic ring optionally having a substituent.

$Y^{N2}$ may be a hydrocarbon group or a non-hydrocarbon group (including a heteroatom). $Y^{N2}$ may be aliphatic or aromatic. $Y^{N2}$ may be linear, branched or cyclic.

$Y^{N2}$ is a divalent or higher valent group. $Y^{N2}$ may have a valence of, for example, 2 to 4, 2 or 3, or 2.

$Y^{N2}$ may have 1 or more, 2 or more, 3 or more, 4 or more, 6 or more, 8 or more, 10 or more, 12 or more, 14 or more, 16 or more, or 18 or more carbon atoms, and 40 or less, 35 or less, 30 or less, 25 or less, 20 or less, 15 or less, 10 or less, or 5 or less carbon atoms.

$Y^{N2}$ is composed of one or more selected from the group consisting of a divalent to tetravalent aliphatic hydrocarbon group having 1 to 40 carbon atoms and optionally having a substituent, a divalent to tetravalent hydrocarbon aromatic ring optionally having a substituent, and a divalent to tetravalent heterocyclic ring optionally having a substituent.

The divalent to tetravalent aliphatic hydrocarbon group having 1 to 40 carbon atoms may be a cyclic, branched or linear hydrocarbon group. The divalent to tetravalent aliphatic hydrocarbon group having 1 to 40 carbon atoms may be a saturated or unsaturated (e.g., saturated) aliphatic hydrocarbon group. The aliphatic hydrocarbon group having 1 to 40 carbon atoms may have 1 or more, 2 or more, 3 or more, 4 or more, 6 or more, 8 or more, or 10 or more carbon atoms, and 35 or less, 30 or less, 25 or less, 20 or less, 15 or less, 10 or less, or 5 or less carbon atoms. The aliphatic hydrocarbon group may have a valence of 2 or more, 3 or more, or 4, and 4 or less, 3 or less, or 2.

The aliphatic hydrocarbon group may have a substituent. Examples of substituents include -OR', $-N(R')_2$, -COOR', and a halogen atom (wherein R' is independently at each occurrence a hydrogen atom or a hydrocarbon group having 1 to 30, 1 to 20, 1 to 10, or 1 to 4 carbon atoms). The substituent may have or be free of active hydrogen. The number of substituents may be 6 or less, 5 or less, 4 or less, 3 or less, 2 or less, 1 or less, or 0. In the aliphatic hydrocarbon group having a substituent, the amount of carbon atom relative to the amount of carbon atom and heteroatom may be 70 mol% or more, 80 mol% or more, 90 mol% or more, 95 mol% or more, or 99 mol% or more, and preferably 75 mol% or more, and may be 95 mol% or less, 90 mol% or less, 85 mol% or less, or 80 mol% or less.

Examples of the divalent to tetravalent hydrocarbon aromatic ring include groups obtained by removing 2 to 4 hydrogen atoms from hydrocarbon aromatic rings such as benzene, naphthalene, anthracene, phenanthrene, tetracene (naphthacene), pentacene, pyrene, and coronene. The number of ring constituting atoms of the hydrocarbon aromatic ring is 3 to 20, 4 to 16, or 5 to 12 and preferably 5 to 12. The hydrocarbon aromatic ring may have a valence of 2 or more, 3 or more, or 4, and may be 4 or less, 3 or less, or 2.

The hydrocarbon aromatic ring may have a substituent. Examples of substituents include -R', -OR', $-N(R')_2$, -COOR' and a halogen atom (wherein R' is independently at each occurrence a hydrogen atom or a hydrocarbon group having 1 to 30, 1 to 20, 1 to 10, or 1 to 4 carbon atoms). The substituent may have or be free of active hydrogen. The number of substituents may be 6 or less, 5 or less, 4 or less, 3 or less, 2 or less, 1 or less, or 0. In the hydrocarbon aromatic ring having a substituent, the amount of carbon atom relative to the amount of carbon atom and heteroatom may be 70 mol% or more, 80 mol% or more, 90 mol% or more, 95 mol% or more, or 99 mol% or more, and preferably 75 mol% or more, and may be 95 mol% or less, 90 mol% or less, 85 mol% or less, or 80 mol% or less.

The divalent to tetravalent heterocyclic ring may be an aliphatic group or an aromatic group. Examples of the divalent to tetravalent heterocyclic rings include groups obtained by removing 2 to 4 hydrogen atoms from pyridine, pyrazine, pyrimidine, pyridazine, triazine, quinoline, isoquinoline, quinazoline, cinnoline, phthalazine, quinoxaline, pyrrole, indole, furan, benzofuran, thiophene, benzothiophene, pyrazole, imidazole, benzimidazole, triazole, oxazole, benzoxazole, thiazole, benzothiazole, isothiazole, benzisothiazole, pyrrolidine, piperidine, piperazine, imidazolidine,

thiazoline, and the like. The number of ring constituting atom of the heterocyclic ring is 3 to 20, 4 to 16, or 5 to 12 and preferably 5 to 12. A valence of the heterocyclic ring may be 2 or more, 3 or more, or 4, may be 4 or less, 3 or less, or 2.

The heterocyclic ring may have a substituent. Examples of substituents include -R', -OR', $-N(R')_2$, -COOR' and a halogen atom (wherein R' is independently at each occurrence a hydrogen atom or hydrocarbon group having 1 to 30, 1 to 20, 1 to 10, or 1 to 4 carbon atoms). The substituent may or may not have active hydrogen. The number of substituents may be 6 or less, 5 or less, 4 or less, 3 or less, 2 or less, 1 or less, or 0. In the heterocyclic ring having a substituent, the amount of carbon atom relative to the amount of carbon atom and heteroatom may be 60 mol% or more, 70 mol% or more, 80 mol% or more, 90 mol% or more, 95 mol% or more, or 99 mol% or more, and for example 65 mol% or more, and may be 95 mol% or less, 90 mol% or less, 85 mol% or less, 80 mol% or less, or 70 mol% or less.

Examples of $Y^{N2}$ include

-Ali-

-Cy-

$-Ali(-)_2$

$-Cy(-)_2$

$(-)_2Ali-$

$(-)_2Cy-$

$(-)_2Ali(-)_2$

$(-)_2Cy(-)_2$

-Ali-Cy-

-Cy-Ali-

-Cy-Ali-Cy-

-Ali-Cy-Ali-

[wherein Ali is an aliphatic hydrocarbon group having 1 to 20 carbon atoms and Cy is a hydrocarbon aromatic ring or a heterocyclic ring].

Specific examples of $Y^{N2}$ include:

$-(CH_2)_p-$ (p is 1 to 40, 1 to 20, or 1 to 10),
a linear hydrocarbon group having 1 to 40, 1 to 20, or 1 to 10 carbon atoms and having an unsaturated bond,
a branched hydrocarbon group having 1 to 40, 1 to 20, or 1 to 10 carbon atoms, and
$-(CH_2)_q-Cy-(CH_2)_r-$ (q and r are each independently 0 to 20, for example, 1 to 10, and Cy is a hydrocarbon aromatic ring or a heterocyclic ring).

Examples of $Y^N$

Examples of $Y^N$ will be described. In the following, R' is independently at each occurrence a hydrogen atom or a hydrocarbon group having 1 to 30 (for example, 1 to 20, 1 to 10, or 1 to 4) carbon atoms.

When $Y^N$ is divalent, examples of $Y^N$ include $-Y^{N1}-$, $-Y^{N1}-Y^{N2}-$, $-Y^{N1}-Y^{N2}-Y^{N1}-$, $-Y^{N1}-Y^{N2}-Y^{N1}-Y^{N2}-$, $-Y^{N2}-$, $-Y^{N2}-Y^{N1}-$, $-Y^{N2}-Y^{N1}-Y^{N2}-$ and $-Y^{N2}-Y^{N1}-Y^{N2}-Y^{N1}-$.

When $Y^N$ is trivalent, examples of $Y^N$ include $-Y^{N1}(-)_2$, $-Y^{N1}-Y^{N2}(-)_2$, $-Y^{N1}-(Y^{N2}-)_2$, $-Y^{N1}-Y^{N2}-Y^{N1}(-)_2$, $-Y^{N1}-Y^{N2}(-Y^{N1}-)_2$, $-Y^{N1}-(Y^{N2}-Y^{N1}-)_2$, $-Y^{N1}-Y^{N2}-Y^{N1}-Y^{N2}(-)_2$, $-Y^{N1}-Y^{N2}-Y^{N1}-(Y^{N2}-)_2$, $-Y^{N1}-Y^{N2}-(Y^{N1}-Y^{N2}-)_2$, $-Y^{N1}-(Y^{N2}-Y^{N1}-Y^{N2}-)_2$; $-Y^{N2}(-)_2$, $-Y^{N2}-Y^{N1}(-)_2$ , $-Y^{N2}-(Y^{N1}-)_2$, $-Y^{N2}-Y^{N1}-Y^{N2}(-)_2$, $-Y^{N2}-Y^{N1}(-Y^{N2}-)_2$, $-Y^{N2}-(Y^{N1}-Y^{N2}-)_2$, $-Y^{N2}-Y^{N1}-Y^{N2}-Y^{N1}(-)_2$, $-Y^{N2}-Y^{N1}-Y^{N2}-(Y^{N1}-)_2$,$-Y^{N2}-Y^{N1}-(Y^{N2}-Y^{N1}-)_2$, and $-Y^{N2}-(Y^{N1}-Y^{N2}-Y^{N1}-)_2$.

When $Y^N$ is tetravalent, examples of $Y^N$ include $-Y^{N1}(-)_3$,$-Y^{N1}-Y^{N2}(-)_3$, $-Y^{N1}-(Y^{N2}-)_3$, $-Y^{N1}-Y^{N2}-Y^{N1}(-)_3$, $-Y^{N1}-Y^{N2}(-Y^{N1}-)_3$, $-Y^{N1}-(Y^{N2}-Y^{N1}-)_3$, $-Y^{N1}-Y^{N2}-Y^{N1}-Y^{N2}(-)_3$, $-Y^{N1}-Y^{N2}-Y^{N1}-(Y^{N2}-)_3$, $-Y^{N1}-Y^{N2}-(Y^{N1}-Y^{N2}-)_3$, $-Y^{N1}-(Y^{N2}-Y^{N1}-Y^{N2}-)_3$; $-Y^{N2}(-)_3$, $-Y^{N2}-Y^{N1}(-)_3$, $-Y^{N2}-(Y^{N1}-)_3$, $-Y^{N2}-Y^{N1}-Y^{N2}(-)_3$, $-Y^{N2}Y^{N1}(-Y^{N2}-)_3$, $-Y^{N2}-(Y^{N1}-Y^{N2}-)_3$, $-Y^{N2}-Y^{N1}-Y^{N2}-Y^{N1}(-)_3$,

$-Y^{N2}-Y^{N1}-Y^{N2}-(Y^{N1}-)_3$, $-Y^{N2}-Y^{N1}-(Y^{N2}-Y^{N1}-)_3$, and $-Y^{N2}-(Y^{N1}-Y^{N2}-Y^{N1}-)_3$.

Preferred examples of $Y^N$ include $-Y^{N1}-$, $-Y^{N1}-Y^{N2}-$, $-Y^{N1}-Y^{N2}-Y^{N1}-$, $-Y^{N1}-Y^{N2}(-)_2$, $-Y^{N2}-$, $-Y^{N2}-Y^{N1}-$, $-Y^{N2}-Y^{N1}-Y^{N2}-$, $-Y^{N2}-Y^{N1}(-)_2$. It is preferable that in the modified body of amine, there is -(C=O)- at the end of the amine backbone in one or more $Y^N$, and one or more $Y^N$ is bonded to the nitrogen atom in the amine backbone.

$Y^N$ is preferably $-Y^{N1}-$, $-Y^{N1}-Y^{N2}-$, $-Y^{N1}-Y^{N2}-Y^{N1}-$, $-Y^{N1}-Y^{N2}(-)_2$, $-Y^{N2}-$, $-Y^{N2}-Y^{N1}-$, $-Y^{N2}-Y^{N1}-Y^{N2}-$, $-Y^{N2}-Y^{N1}(-)_2$,

[wherein $Y^{N1}$ is independently at each occurrence
a direct bond,

-O-,

-O-C(=O)-,

-O-C(=O)-O-,

-O-C(=O)-NR'-,

-NR'-,

-NR'-C(=O)-,

-NR'-C(=O)-O-,

-NR'-C(=O)-NR'-,

-C(=O)-,

-C(=O)-O-,

or

-C(=O)-NR'-

-C(=O)-NR'-C(=O)-

(wherein R' is independently at each occurrence a hydrogen atom or a hydrocarbon group having 1 to 30 (for example, 1 to 20, 1 to 10, or 1 to 4) carbon atoms), and
$Y^{N2}$ is a divalent to tetravalent aliphatic hydrocarbon group having 1 to 10 carbon atoms, or a divalent aromatic group (for example, a divalent phenyl group or a divalent triazole group)]. By this, excellent liquid-repellency is imparted to substrates.

Specific examples of $Y^N$ also include:

*-(C=O)-

-O-(C=O)-NR'-

[wherein * means a bond to a nitrogen atom in the amine backbone,

R' is a hydrogen atom or a hydrocarbon group having 1 to 30 (for example, 1 to 20, 1 to 10, or 1 to 4) carbon atoms.]

($Z^N$)

$Z^N$ is a monovalent hydrocarbon group having 1 or more and 40 or less carbon atoms and optionally having a substituent or a monovalent polysiloxane group. The same embodiments in the description in the above (Monovalent

hydrocarbon group optionally having a substituent) and (Monovalent polysiloxane group) apply.

[Examples of modified body of amine]

(Example 1 of modified body of amine)

An example of the modified body of amine is (Example 1 of modified body of amine), which is a compound represented by the following formula:

$N(-Y^N-Z^N{}_n)_p(-H)_q-L^1-[N(-Y^N-Z^N{}_n)_r(-H)_s-L^1-]t-N(-Y^N-Z^N{}_n)_p(-H)_q$ [wherein $Y^N$ is independently at each occurrence a direct bond or a 1+n valent group,
$Z^N$ is independently at each occurrence a linear or branched monovalent hydrocarbon group having 3 or more and 40 or less carbon atoms and optionally having a substituent,
$L^1$ is independently at each occurrence a divalent aliphatic hydrocarbon group having 2 to 20 carbon atoms or an aromatic hydrocarbon group which are optionally interrupted by an oxygen atom and/or a sulfur atom,
n is independently at each occurrence an integer of 1 or more and 3 or less,
p is independently at each occurrence an integer of 0 or more and 2 or less,
q is independently at each occurrence an integer of 0 or more and 2 or less,
p + q is 2 in each $N(-Y^N-Z^N{}_n)_p(-H)_q$,
r is independently at each occurrence 0 or 1,
s is independently at each occurrence 0 or 1,
r + s is 1 in each $N(-Y^N-Z^N{}_n)_r(-H)_s$,
the sum of all p and all r is 1 or more and
t is an integer of 0 or more and 10 or less].

In Example 1 of the modified body of amine, for the details of $Y^N$, $Z^N$ and n, the same embodiments as described above apply.

In Example 1 of the modified body of amine, $L^1$ is a divalent aliphatic hydrocarbon group having 2 to 20 carbon atoms or an aromatic hydrocarbon group which are optionally interrupted by an oxygen atom and/or a sulfur atom, and may be a cyclic, branched or linear hydrocarbon group, and is preferably a chain hydrocarbon group or an aromatic hydrocarbon. $L^1$ may be the hydrocarbon group described in the above [Amine backbone]. The hydrocarbon group may be interrupted by an oxygen atom and/or sulfur atom, may be composed of only a carbon atom, a nitrogen atom and hydrogen atom. $L^1$ may be, for example, a saturated or unsaturated (e.g., saturated) aliphatic hydrocarbon group or an aromatic hydrocarbon group with 1 or 2 hydrocarbon aromatic rings. $L^1$ is preferably a cyclic group having both a ring (e.g., an aromatic ring) and a chain structure (e.g., a linear structure, ether oxygen, or thioether sulfur). Specific examples thereof include 1,3-phenylenebisalkylene group, 1,4-phenylenebisalkylene group, diphenyl ether diyl group, diphenyl thioether diyl group. $L^1$ has 2 or more, 3 or more, 4 or more, 6 or more, 8 or more, 10 or more, or 12 or more, and 20 or less, 18 or less, 16 or less, 14 or less, 12 or less, 10 or less, 8 or less, 6 or less, 4 or less, or 3 or less carbon atoms.

In Example 1 of the modified body of amine, p is independently at each occurrence an integer of 0 or more and 2 or less, q is independently at each occurrence an integer of 0 or more and 2 or less, and p + q is 2 in each $N(-Y^N-Z^N{}_n)_p(-H)_q$. Preferably p is independently at each occurrence an integer of 1 or more and for example, 2.

In Example 1 of the modified body of amine, r is independently at each occurrence 0 or 1, s is independently at each occurrence 0 or 1, and r + s is 1 in each $N(-Y^N-Z^N{}_n)_r(-H)_s$. Preferably p is independently at each occurrence an integer of 1 or more and for example, 2.

The sum of all p and all r is 1 or more, which means that Example 1 of the modified body of amine has one or more $-Y^N-Z^N{}_n$. The sum of all p and all r may be 1 or more, 3 or more, 5 or more, 7 or more, 9 or more, 12 or more (the sum of all q and s may be 0), and 14 or less, 12 or less, 10 or less, 8 or less, 6 or less, or 4 or less.

In Example 1 of the modified body of amine, t is an integer of 0 or more and 10 or less. t may be 0 or more, 1 or more, 2 or more, 4 or more, or 6 or more, and is preferably 0 or more or 2 or more and may be 8 or less, 6 or less, 4 or less, 3 or less, 2 or less, or 1 or less, and for example 0 or 1.

(Example 2 of modified body of amine)

Another example of the modified body of amine is (Example 2 of modified body of amine), which is a compound represented by the formula:

$$N(=Y^N-Z^N{}_p)p(-H)q-L^2(-Y^N-Z^N{}_n)_u$$

[wherein $Y^N$ is independently at each occurrence a direct bond or a 1+n valent group,

$Z^N$ is independently at each occurrence a linear or branched monovalent hydrocarbon group having 3 or more and 40 or less carbon atoms and optionally having a substituent,
$L^2$ is a 1 + u valent aliphatic hydrocarbon group having 2 to 20 carbon atoms or an aromatic hydrocarbon group which are optionally interrupted by an oxygen atom and/or a sulfur atom,
n is independently at each occurrence an integer of 1 or more and 3 or less,
p is an integer of 0 or more and 2 or less,
q is an integer of 0 or more and 2 or less,
p + q is 2,
u is an integer of 1 or more and 3 or less, and
the sum of p and u is 1 or more].

In Example 2 of the modified body of amine, for the details of $Y^N$, $Z^N$ and n, the same embodiments as described above apply.
In Example 2 of the modified body of amine, $L^2$ is a 1+u valent aliphatic hydrocarbon group having 2 to 20 carbon atoms or an aromatic hydrocarbon group which are optionally interrupted by an oxygen atom and/or a sulfur atom, and may be a cyclic, branched or linear hydrocarbon group, and is preferably a chain hydrocarbon group or an aromatic hydrocarbon. $L^2$ may be the hydrocarbon group described in the above [Amine backbone]. The hydrocarbon group may be interrupted by an oxygen atom and/or sulfur atom, may be composed of only a carbon atom, a nitrogen atom and hydrogen atom. $L^2$ may be, for example, a saturated or unsaturated (e.g., saturated) aliphatic hydrocarbon group or an aromatic hydrocarbon group with 1 or 2 hydrocarbon aromatic rings. $L^2$ is preferably a cyclic group having both a ring (e.g., an aromatic ring) and a chain structure (e.g., a linear structure, ether oxygen, or thioether sulfur). Specific examples thereof include 1,3-phenylenebisalkylene group, 1,4-phenylenebisalkylene group, diphenyl ether diyl group, diphenyl thioether diyl group. $L^2$ has 2 or more, 3 or more, 4 or more, 6 or more, 8 or more, 10 or more, or 12 or more, and 20 or less, 18 or less, 16 or less, 14 or less, 12 or less, 10 or less, 8 or less, 6 or less, 4 or less, or 3 or less carbon atoms.
In Example 2 of the modified body of amine, p is an integer of 0 or more and 2 or less, q is an integer of 0 or more and 2 or less, and p + q is 2. p may be preferably 1 or more and for example, 2.
In Example 2 of the modified body of amine, u is an integer of 1 or more and 3 or less. u is 1, 2 or 3, and for example 2 or 3.
In Example 2 of the modified body of amine, the sum of p and u is 1 or more, which means that Example 2 of the modified body of amine has one or more $-Y^N-Z^N_n$. The sum of all p and all u may be 1 or more, 2 or more, 3 or more, 4 or more, or 5 or more (the sum of all q may be 0), and may be 5 or less, 4 or less, 3 or less, or 2 or less.

(Specific Examples)

Specific examples of modified bodies of amine include the compounds represented by the following formulas. In the following formulas, the same embodiments in the above description of $Z^N$ apply to details of Z.

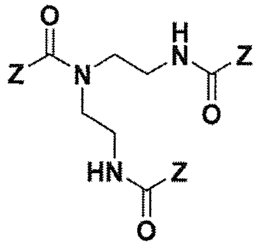

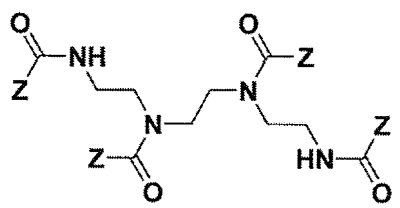

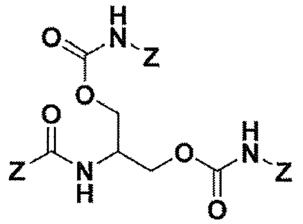

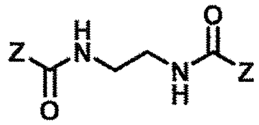

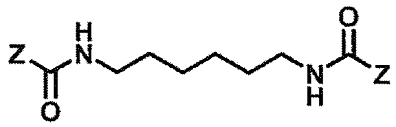

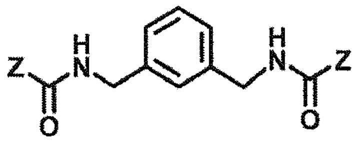

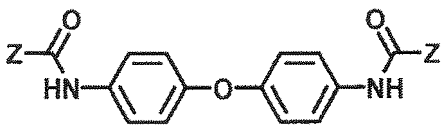

The modified body of amine may be a synthesized wax derived from animal or vegetable oil and fat. The synthesized wax may also be prepared by condensing fatty acid derived from animal or vegetable oil and fat and aliphatic amine or amine containing aromatic. Examples of synthetic wax include a fatty acid amide compound such as a hydroxy fatty acid amide compound, a palmitamide compound, an octadecanoic acid amide compound, a stearic acid amide compound, an arachidic acid amide compound, a behenic acid amide compound, a lignoceric acid amide compound, an oleic acid amide compound, a linoleic acid amide compound, an $\alpha$-linolenic acid amide compound, $\gamma$-linolenic acid amide compound, an arachidonic acid amide compound, an icosapentaenoic acid amide compound and a docosahexaenoic acid amide compound.

[Production Method]

The method for producing the modified body of amine is not limited, and examples thereof include a method in which a modified body of amine is synthesized by allowing various types of amines (raw material amines) to react with a $Z^N$ group-containing carboxylic acid in the presence of a condensing agent, if necessary, and a method in which a modified body of amine is synthesized by allowing amines to react with $Z^N$ group-containing carboxylic acid chloride, acid anhydride, isocyanate or the like. A known condensing agent may be used, and examples thereof include DCC, EDCI, CDI, BOP, COMU, DMT-MM, DPPA and Py-Bop.

(Amine (raw material amine))

Examples of amine (raw material amine), which is a precursor of amine backbone, include those capable of forming amine backbone, such as alkylamine such as methylamine, ethylamine, propylamine, butylamine and dibutylamine; alkylenediamine such as ethylenediamine, propylenediamine, butylenediamine, pentanediamine, hexamethylenediamine, cyclohexanediamine and methylenebiscyclohexylamine; polyalkylenepolyamine such as diethylenetriamine, triethylenetetramine, tris (2-aminoethyl) amine, tetraethylenepentamine, pentaethylenehexamine, dipropylenetriamine, tripropylenetetramine, tris (2-aminopropyl) amine, tetrapropylenepentamine, pentapropylenehexamine, iminobispropylamine, dibutylenetriamine, bis(2-aminoethoxy)ethane, bis(2-aminoethyl) ether, bis [2-(2-aminoethoxy)ethyl] ether, bis[2-(3-aminoprotoxy)ethyl] ether, spermine and spermidine; oxygen or sulfur-containing aliphatic amine such as

1-aminopropanediol, 2-amino-1,3-propanediol, 3-amino-1,2-propanediol, polyoxypropylenediamine and polyoxyethylenediamine; aromatic monoamine such as aniline, 1- or 2-naphthylamine, 1-, 2-, or 9-aminoanthracene, 9-aminophenanthracene and 2-, 3- or 4-aminobiphenyl; monocyclic aromatic polyamine such as o-, m- or p-phenylene diamine, o-, m- or p-xylylenediamine, diaminotoluene and 2,3-, 2,4- or 2,5-tolylenediamine; polycyclic aromatic polyamine such as diaminobiphenyl, bisaminophenoxyphenylpropane, diaminodiphenyl ether, diaminodiphenyl sulfide, diaminodiphenylsulfone, diaminobenzophenone, diaminodiphenylmethane, diaminophenylpropane, diaminophenyl hexafluoropropane, diaminophenylphenylethane, bisaminophenoxybenzene, bisaminobenzoyl benzene, bisaminodimethylbenzyl benzene, aminophenoxybiphenyl, aminophenoxyphenyl ketone, bisaminoditrifluoromethylbenzyl benzene, aminophenoxyphenyl sulfone, aminophenoxyphenyl ether, aminophenoxyphenyl propane, bis(aminophenoxybenzoyl) benzene, bis(aminophenoxy-$\alpha,\alpha$-dimethylbenzyl) benzene, bis[(aminoaryloxy)benzoyl] diphenylether, bis (amino-$\alpha,\alpha$-dimethylbenzylphenoxy) benzophenone, aminophenoxyphenyl sulfide, bis [amino-$\alpha,\alpha$-dimethylbenzylphenoxy]diphenyl sulfone, 4,4'-bis[aminophenoxyphenoxy]diphenyl sulfone, diaminodiaryloxybenzophenone, diaminoaryloxybenzophenone, 3,3'-dimethoxy-4,4'-diaminobiphenyl, 4,4'-diaminotriphenyl methane, 3,3'-dimethyl-4,4'-diaminobiphenyl, 4,4'-methylenebisaniline, 4,4'-oxydianiline, 1,3-bis(4-aminophenoxy)benzene, 4,4'-diaminodiphenylether and 4,4'-bis(aminophenyl)amine; oxygen or sulfur-containing polycyclic aromatic polyamine such as 2,2'-bis[4-(4-aminophenoxy)phenyl]propane, 1,3-bis(4-aminophenoxy)benzene, 1,3-bis(3-aminophenoxy)benzene, 3,4'-diaminodiphenyl ether and 4,4'-diaminodiphenylsulfide; and hydroxyl group-containing polyamine such as 2-hydroxyethylethylenediamine, 2-hydroxyethylpropylenediamine, di-2-hydroxyethylethylenediamine, di-2-hydroxyethylpropylenediamine, 2-hydroxypropylethylenediamine and di-2-hydroxypropylethylenediamine. Polyamine may also be a polymer of a polymerizable compound such as allylamine.

{Modified body of polyol}

The modified body of polyol, which is an example of the hydrophobic compounds (A1) and (A2), will be described. A modified body of polyol is a compound prepared by chemically modifying polyol so that the compound exhibits liquid repellency.

The modified body of polyol may have a melting point of 30°C or more, 40°C or more, 60°C or more, 80°C or more, 100°C or more, or 120°C or more, preferably 40°C or more, 50°C or more, 60°C or more, 70°C or more, or 80°C or more, and 250°C or less, 225°C or less, 200°C or less, 150°C or less, 130°C or less, 120°C or less, 110°C or less, 100°C or less, 80°C or less, or 50°C or less, and for example, 150°C or less, or 100°C or less. The melting point of the modified body of polyol may be measured according to JIS K 2235-1991.

[Structure]

The modified body of polyol may be a polymer having a degree of polymerization of 1 or more. The modified body of polyol may have a degree of polymerization of 2 or more, 3 or more, 5 or more, 6 or more, preferably 7 or more, more preferably 8 or more, and further preferably 9 or more from the viewpoint of the improvement in the liquid-repellency. The modified body of polyol may have a degree of polymerization of 100 or less, preferably 50 or less, more preferably 30 or less, further preferably 15 or less from the viewpoint of the improvement in handling properties of the composition. The degree of polymerization means the repeating number of monomer units constituting the polymer.

The degree of polymerization in the present disclosure means an average degree of polymerization. The average degree of polymerization in the present disclosure is measured under the following conditions.

When the modified body of polyol in the present disclosure is a modified body of polyglycerol obtained by modifying polyglycerol, the degree of polymerization of the modified body of polyol means the average degree of polymerization of the polyglycerol. The average degree of polymerization of polyglycerol refers to an average degree of polymerization (n) calculated from the hydroxyl number determined by the end group analysis. More specifically, the average degree of polymerization and the average molecular weight are calculated from the following (Formula 1) and (Formula 2).

$$\text{(Formula 1) Average molecular weight} = 74n + 18$$

$$\text{Hydroxyl number} = 56110(n+2) / \text{average molecular weight} \quad \text{(Formula 2)}$$

The hydroxyl number in the above (Formula 2) indicates the number of hydroxyl groups in polyglycerol. The hydroxyl number is calculated from the amount of potassium hydroxide necessary for neutralizing acetic acid used for acetylation of free hydroxyl groups contained in 1 g of polyglycerol, which is determined according to The JOCS Standard

Methods for the Analysis of Fats, Oils and Related Materials (I), 2003, edited by Japan Oil Chemists' Society. The hydroxyl number of polyglycerol, which is the raw material, is actually measured by the above Standard Methods for the Analysis of Fats, Oils and Related Materials, and the average degree of polymerization and the average molecular weight of polyglycerol may be calculated by the above relational expression.

When the modified body of polyol in the present disclosure is a modified body of polyvinyl alcohol obtained by modifying polyvinyl alcohol, the degree of polymerization of the modified body of polyol means the average degree of polymerization of the polyvinyl alcohol. The average degree of polymerization of polyvinyl alcohol may be measured according to JIS K 6726, Testing Methods for Polyvinyl Alcohol.

When the modified body of polyol in the present disclosure is a modified body of polysaccharide obtained by modifying polysaccharide, the degree of polymerization of the modified body of polyol means the average degree of polymerization of the polysaccharide. The average degree of polymerization of polysaccharide may be analyzed as follows. The degree of polymerization refers to the number of monosaccharide units in polysaccharide (fructose and glucose units), and the average degree of polymerization means the maximum of the peaks in the results of analysis obtained by a common analytical method such as HPLC, GC or HPAEC as described below. The average degree of polymerization may be measured by using ULTRON PS-80N made by Shinwa Chemical Industries Ltd. (8 × 300 mm) (solvent: water, flow rate: 0.5 ml/ minute, temperature: 50°C) or TSK-GEL G30000 PWXL made by Tosoh Corporation (7.8 × 300 mm) (solvent: water, flow rate: 0.5 ml/ minute, temperature: 50°C) as the column, and a differential refractometer as the detector.

The modified body of polyol may be a low molecular weight compound (having a weight average molecular weight of less than 1,500, less than 1,000 or 500 or less) and/or a high molecular weight compound. The modified body of polyol may have a weight average molecular weight of 100 or more, 200 or more, 300 or more, 400 or more, 500 or more, 1,000 or more, 3,000 or more, 5,000 or more, 10,000 or more, 30,000 or more, 100,000 or more, 300,000 or more, or 500,000 or more, and may have a weight average molecular weight of 10,000,000 or less, 3,000,000 or less, 1,000,000 or less, 750,000 or less, 500,000 or less, 300,000 or less, 100,000 or less, 75,000 or less, 50,000 or less, 30,000 or less, 10,000 or less, 9,000 or less, 8,000 or less, 7,000 or less, 6,000 or less, 5,000 or less, 3,000 or less, 2,000 or less, 1,000 or less, or 500 or less.

The hydroxy group substitution ratio of the modified body of polyol may be 1% or more, 3% or more, 5% or more, 10% or more, 20% or more, 30% or more, 40% or more, 50% or more, 60% or more, 70% or more, 80% or more, 90% or more, or 100%, preferably 10% or more, for example, 30% or more, 40% or more, 50% or more, 60% or more, 70% or more, particularly 80% or more, and 100% or less, 95% or less, 85% or less, 75% or less, 65% or less, 55% or less, 45% or less, 35% or less, 25% or less, 15% or less, and for example, 95% or less. The "substitution ratio" means the proportion (mol%) of modified hydroxy groups out of the hydroxy groups derived from polyol, and may mean the proportion (mol%) of hydroxy groups modified by a monovalent hydrocarbon group having 1 or more and 40 or less carbon atoms and optionally having a substituent or a monovalent polysiloxane group.

The residual ratio of hydroxyl groups in the modified body of polyol may be 1% or more, 3% or more, 5% or more, 10% or more, 20% or more, 30% or more, 40% or more, 50% or more, 60% or more, 70% or more, 80% or more, or 90% or more, and for example, is 5% or more, and may be 100% or less, 95% or less, 85% or less, 75% or less, 65% or less, 55% or less, 45% or less, 35% or less, 25% or less, 15% or less, or 5% or less, and for example, 50% or less, 30% or less, or 10% or less. In this regard, the "residual ratio" means the proportion (mol%) of hydroxyl groups without modification, out of the hydroxy groups derived from the polyol.

The number of modifying groups that the modified body of polyol has may be 2 or more, 5 or more, 7 or more, 8 or more, 9 or more, 10 or more, 12 or more, 15 or more, 30 or more, or 50 or more, and 1,000 or less, 750 or less, 500 or less, 300 or less, 100 or less, 50 or less, 30 or less, or 20 or less. In this regard, the modifying group is preferably a monovalent hydrocarbon group optionally having a substituent or a monovalent polysiloxane group.

The modifying group equivalent of the modified body of polyol may be 150 or more, 250 or more, 350 or more, 450 or more, 550 or more, 650 or more, 750 or more, or 1,000 or more, and 2,500 or less, 2,000 or less, 1,500 or less, 1,000 or less, 750 or less, 500 or less, or 400 or less. The modifying group equivalent is obtained by dividing the weight average molecular weight of modified body of polyol by the number of modifying groups. In this regard, the modifying group is preferably a monovalent hydrocarbon group optionally having a substituent or a monovalent polysiloxane group.

In the modified body of polyol, one or more of hydroxy groups in polyol are substituted by a modifying group. The modifying group is preferably a monovalent hydrocarbon group optionally having a substituent or a monovalent polysiloxane group. The modified body of polyol may have a structure in which polyol is modified by an aliphatic hydrocarbon group having 3 or more and 40 or less (for example, 6 or more and 40 or less) carbon atoms from the viewpoint of the improvement in liquid repellency.

For details of the monovalent hydrocarbon group optionally having a substituent and the monovalent polysiloxane group, the same embodiments in the description in the above (Monovalent hydrocarbon group optionally having a substituent) and (Monovalent polysiloxane group) apply.

$(-Y^O-Z^O_n)$

In the modified body of polyol in the present disclosure, one or more hydroxy groups in polyol are optionally substituted by a group represented by the following formula:

$$-Y^O-Z^O_n$$

[wherein $Y^O$ is a 1+n valent group composed of one or more selected from the group consisting of $Y^{O1}$ and $Y^{O2}$,

$Y^{O1}$ is a group composed of one or more selected from the group consisting of a direct bond, -O-, -C(=O)-, -C(=NR')-,-S-, $-S(=O)_2-$, -C(=S)-, -NR'-, -C(OR')R'-, $-C(OR')(-)_2$ and $-N(-)_2$ (wherein R' is independently at each occurrence a hydrogen atom or a hydrocarbon group having 1 to 30 (for example, 1 to 20, 1 to 10, or 1 to 4) carbon atoms),

$Y^{O2}$ is a group composed of one or more selected from the group consisting of a divalent to tetravalent aliphatic hydrocarbon group having 1 to 40 carbon atoms and optionally having a substituent, a divalent to tetravalent hydrocarbon aromatic ring optionally having a substituent, and a divalent to tetravalent heterocyclic ring optionally having a substituent,

$Z^O$ is a monovalent hydrocarbon group having 1 or more and 40 or less carbon atoms and optionally having a substituent or a monovalent polysiloxane group, and

n is an integer of 1 or more and 3 or less].

$(Y^O)$

$Y^O$ is a 1+n valent group composed of one or more selected from the group consisting of $Y^{O1}$ and $Y^{O2}$,

$Y^{O1}$ is a group composed of one or more selected from the group consisting of a direct bond, -O-, -C(=O)-, -C(=NR')-, -S-, $-S(=O)_2-$, -C(=S)-, -NR'-, -C(OR')R'-, $-C(OR')(-)_2$ and $-N(-)_2$ (wherein R' is independently at each occurrence a hydrogen atom or hydrocarbon group having 1 to 30 (for example, 1 to 20, 1 to 10, or 1 to 4) carbon atoms),

$Y^{O2}$ is a group composed of one or more selected from the group consisting of a divalent to tetravalent aliphatic hydrocarbon group having 1 to 40 carbon atoms and optionally having a substituent, a divalent to tetravalent hydrocarbon aromatic ring optionally having a substituent, and a divalent to tetravalent heterocyclic ring optionally having a substituent.

n is the number of $Z^O$ bonded to $Y^O$, and may be an integer of 1 or more and 3 or less. n may be 1 or more, 2 or more, or 3 or more, and 3 or less, 2 or less, or 1 or less, and for example, 2 or less.

$Y^O$ may have a molecular weight of 10 or more, 50 or more, 100 or more, 200 or more, 300 or more, 500 or more, or 750 or more, and 3,000 or less, 2,500 or less, 2,000 or less, 1,500 or less, 1,000 or less, 750 or less, 500 or less, 300 or less, 200 or less, 100 or less, or 50 or less.

$Y^O$ may include an amide structure. Herein the amide structure may be an amide structure in the broad sense, and may be selected from the amide structure in amide (acid amide), urea, urethane, imide, thioamide, thiourea, thiourethane, thioimide, sulfone amide, sulfone urea, sulfone urethane and sulfone imide. The amide structure may be selected from the group consisting of $-(C=O)N(-)_2$, $-(C=S)N(-)_2$ and $-S(=O)_2N(-)_2$ (each group may be left-right inverted). In this regard, of the bonds possessed by N in the amide structure, at least one may be bonded to a hydrogen atom. The amide structure is preferably $-(C=O)N(-)_2$, and may be an amide structure in a group selected from the group consisting of an amide group, a urea group, a urethane group and an imide group. Inclusion of the amide structure improves liquid repellency.

o $Y^{O1}$

$Y^{O1}$ is a non-hydrocarbon linker.

$Y^{O1}$ is a direct bond or a divalent or higher valent group. $Y^{O1}$ may have a valence of 2 to 4, 2 or 3, or 2. It is preferable that $Y^{O1}$ is not limited to direct bond.

$Y^{O1}$ may have a molecular weight of 10 or more, 50 or more, 100 or more, 200 or more, 300 or more, or 500 or more, and 2,000 or less, 1,500 or less, 1,000 or less, 750 or less, or 500 or less.

$Y^{O1}$ may be composed of one or more selected from the group consisting of a direct bond, -O-, -C(=O)-, $-S(=O)_2-$, -NR'-,-C(OR')R'- and -C(OR') $(-)_2$ (wherein R' is independently at each occurrence a hydrogen atom or a hydrocarbon group having 1 to 30 (for example, 1 to 20, 1 to 10, or 1 to 4) carbon atoms).

Examples of $Y^{O1}$ include:
a direct bond,

-O-,

-O-C(=O)-,

-O-C(=O)-O-,

-O-C(=O)-NR'-,

-NR'-,

-NR'-C(=O)-,

-NR'-C(=O)-O-,

-NR'-C(=O)-NR'-,

-C(=O)-,

-C(=O)-O-,

-C(=O)-NR'-,

$-SO_2-$,

$-SO_2NR'-$,

-C(OR')R'-,

and

$-C(OR')(-)_2$

(wherein R' is independently at each occurrence a hydrogen atom or a hydrocarbon group having 1 to 30 (for example, 1 to 20, 1 to 10, or 1 to 4) carbon atoms).

$Y^{O2}$ may include at least an amide structure. Herein the amide structure may be an amide structure in the broad sense, and may be selected from the amide structure in amide (acid amide), urea, urethane, imide, thioamide, thiourea, thiourethane, thioimide, sulfone amide, sulfone urea, sulfone urethane and sulfone imide. The amide structure may be selected from the group consisting of $-(C=O)N(-)_2$, $-(C=S)N(-)_2$ and $-S(=O)_2N(-)_2$ (each group may be left-right inverted). In this regard, of the bonds possessed by N in the amide structure, at least one may be bonded to a hydrogen atom. The amide structure is preferably $-(C=O)N(-)_2$, and may be an amide structure in a group selected from the group consisting of an amide group, a urea group, a urethane group and an imide group. Inclusion of the amide structure improves liquid repellency.

o $y^{O2}$

$Y^{O2}$ is a linker composed of one or more selected from the group consisting of a hydrocarbon group optionally having a substituent, a hydrocarbon aromatic ring optionally having a substituent and a heterocyclic ring optionally having a substituent.

$Y^{O2}$ may be a hydrocarbon group or a non-hydrocarbon group (including a heteroatom). $Y^{O2}$ may be aliphatic or aromatic. $Y^{O2}$ may be linear, branched or cyclic.

$Y^{O2}$ is a divalent or higher valent group. $Y^{O2}$ may have a valence of, for example, 2 to 4, 2 or 3, or 2.

$Y^{O2}$ may have 1 or more, 2 or more, 3 or more, 4 or more, 6 or more, 8 or more, 10 or more, 12 or more, 14 or more, 16 or more, or 18 or more carbon atoms, and 40 or less, 35 or less, 30 or less, 25 or less, 20 or less, 15 or less, 10 or less, or 5 or less carbon atoms.

$Y^{O2}$ is composed of one or more selected from the group consisting of a divalent to tetravalent aliphatic

hydrocarbon group having 1 to 40 carbon atoms and optionally having a substituent, a divalent to tetravalent hydrocarbon aromatic ring optionally having a substituent, and a divalent to tetravalent heterocyclic ring optionally having a substituent.

The divalent to tetravalent aliphatic hydrocarbon group having 1 to 40 carbon atoms may be a cyclic, branched or linear hydrocarbon group. The divalent to tetravalent aliphatic hydrocarbon group having 1 to 40 carbon atoms may be a saturated or unsaturated (e.g., saturated) aliphatic hydrocarbon group. The aliphatic hydrocarbon group having 1 to 40 carbon atoms may have 1 or more, 2 or more, 3 or more, 4 or more, 6 or more, 8 or more, or 10 or more carbon atoms, and 35 or less, 30 or less, 25 or less, 20 or less, 15 or less, 10 or less, or 5 or less carbon atoms. The aliphatic hydrocarbon group may have a valence of 2 or more, 3 or more, or 4, and 4 or less, 3 or less, or 2.

The aliphatic hydrocarbon group may have a substituent. Examples of substituents include -OR', $-N(R')_2$, -COOR', and a halogen atom (wherein R' is independently at each occurrence a hydrogen atom or a hydrocarbon group having 1 to 30, 1 to 20, 1 to 10, or 1 to 4 carbon atoms). The substituent may have or be free of active hydrogen. The number of substituents may be 6 or less, 5 or less, 4 or less, 3 or less, 2 or less, 1 or less, or 0. In the aliphatic hydrocarbon group having a substituent, the amount of carbon atom relative to the amount of carbon atom and heteroatom may be 70 mol% or more, 80 mol% or more, 90 mol% or more, 95 mol% or more, or 99 mol% or more, and is preferably 75 mol% or more, and may be 95 mol% or less, 90 mol% or less, 85 mol% or less, or 80 mol% or less.

Examples of the divalent to tetravalent hydrocarbon aromatic ring include groups obtained by removing 2 to 4 hydrogen atoms from hydrocarbon aromatic rings such as benzene, naphthalene, anthracene, phenanthrene, tetracene (naphthacene), pentacene, pyrene, and coronene. The number of ring constituting atom of the hydrocarbon aromatic ring is 3 to 20, 4 to 16, or 5 to 12, and preferably 5 to 12. The hydrocarbon aromatic ring may have a valence of 2 or more, 3 or more, or 4, and 4 or less, 3 or less, or 2.

The hydrocarbon aromatic ring may have a substituent. Examples of substituents include -R', -OR', $-N(R')_2$, -COOR' and a halogen atom (wherein R' is independently at each occurrence a hydrogen atom or a hydrocarbon group having 1 to 30, 1 to 20, 1 to 10, or 1 to 4 carbon atoms). The substituent may have or be free of active hydrogen. The number of substituents may be 6 or less, 5 or less, 4 or less, 3 or less, 2 or less, 1 or less, or 0. In the hydrocarbon aromatic ring having a substituent, the amount of carbon atom relative to the amount of carbon atom and heteroatom may be 70 mol% or more, 80 mol% or more, 90 mol% or more, 95 mol% or more, or 99 mol% or more, and is preferably 75 mol% or more, and may be 95 mol% or less, 90 mol% or less, 85 mol% or less, or 80 mol% or less.

The divalent to tetravalent heterocyclic ring may be an aliphatic group or an aromatic group. Examples of the divalent to tetravalent heterocyclic rings include groups obtained by removing 2 to 4 hydrogen atoms from pyridine, pyrazine, pyrimidine, pyridazine, triazine, quinoline, isoquinoline, quinazoline, cinnoline, phthalazine, quinoxaline, pyrrole, indole, furan, benzofuran, thiophene, benzothiophene, pyrazole, imidazole, benzimidazole, triazole, oxazole, benzoxazole, thiazole, benzothiazole, isothiazole, benzisothiazole, pyrrolidine, piperidine, piperazine, imidazolidine, thiazoline, and the like. The number of ring constituting atom of the heterocyclic ring is 3 to 20, 4 to 16, or 5 to 12 and preferably 5 to 12. A valence of the heterocyclic ring may be 2 or more, 3 or more, or 4, and may be 4 or less, 3 or less, or 2.

The heterocyclic ring may have a substituent. Examples of substituents include -R', -OR', $-N(R')_2$, -COOR' and a halogen atom (wherein R' is independently at each occurrence a hydrogen atom or a hydrocarbon group having 1 to 30, 1 to 20, 1 to 10, or 1 to 4 carbon atoms). The substituent may or may not have active hydrogen. The number of substituents may be 6 or less, 5 or less, 4 or less, 3 or less, 2 or less, 1 or less, or 0. In the heterocyclic ring having a substituent, the amount of carbon atom relative to the carbon atom and the heteroatom may be 60 mol% or more, 70 mol% or more, 80 mol% or more, 90 mol% or more, 95 mol% or more, or 99 mol% or more, and for example 65 mol% or more, and may be 95 mol% or less, 90 mol% or less, 85 mol% or less, 80 mol% or less, or 70 mol% or less.

Examples of $Y^{O2}$ include

-Ali-,

-Cy-,

$-Ali(-)_2$,

$-Cy(-)_2$,

$(-)_2Ali-$,

$(-)_2Cy-$,

$(-)_2Ali(-)_2$,

$(-)_2Cy(-)_2$,

-Ali-Cy-,

-Cy-Ali-,

-Cy-Ali-Cy-,

and

-Ali-Cy-Ali-

[wherein Ali is an aliphatic hydrocarbon group having 1 to 20 carbon atoms and Cy is a hydrocarbon aromatic ring or a heterocyclic ring].

Specific examples of $Y^{O2}$ include:

- $-(CH_2)_p-$ (p is 1 to 40, 1 to 20, or 1 to 10),
- a linear hydrocarbon group having 1 to 40, 1 to 20, or 1 to 10 carbon atoms and having an unsaturated bond,
- a branched hydrocarbon group having 1 to 40, 1 to 20, or 1 to 10 carbon atoms, and
- $-(CH_2)_q-Cy-(CH_2)_r-$ (q and r are each independently 0 to 20, for example, 1 to 10, and Cy is a hydrocarbon aromatic ring or a heterocyclic ring).

(Example of $Y^O$)

Examples of $Y^O$ will be described. In the following, R' is independently at each occurrence a hydrogen atom or a hydrocarbon group having 1 to 30 (for example, 1 to 20, 1 to 10, or 1 to 4) carbon atoms.

When $Y^O$ is divalent, examples of $Y^O$ include $-Y^{O1}-$, $-Y^{O1}-Y^{O2}-$, $-Y^{O1}-Y^{O2}-Y^{O1}-$, $-Y^{O1}-Y^{O2}-Y^{O1}-Y^{O2}-$, $-Y^{O2}-$, $-Y^{O2}-Y^{O1}-$, $-Y^{O2}-Y^{O1}-Y^{O2}-$ and $-Y^{O2}-Y^{O1}-Y^{O2}-Y^{O1}-$.

When $Y^O$ is trivalent, examples of $Y^O$ include $-Y^{O1}(-)_2$, $-Y^{O1}-Y^{O2}(-)_2$, $-Y^{O1}-(Y^{O2}-)_2$, $-Y^{O1}-Y^{O2}-Y^{O1}(-)_2$, $-Y^{O1}-Y^{O2}(-Y^{O1}-)_2$, $-Y^{O1}-(Y^{O2}-Y^{O1}-)_2$, $-Y^{O1}-Y^{O2}-Y^{O1}-Y^{O2}(-)_2$, $-Y^{O1}-Y^{O2}-Y^{O1}-(Y^{O2}-)_2$, $-Y^{O1}-Y^{O2}-(Y^{O1}-Y^{O2}-)_2$, $-Y^{O1}-(Y^{O2}-Y^{O1}-Y^{O2}-)_2$; $-Y^{O2}(-)_2$, $-Y^{O2}-Y^{O1}(-)_2$, $-Y^{O2}-(Y^{O1}-)_2$, $-Y^{O2}-Y^{O1}-Y^{O2}(-)_2$, $-Y^{O2}-Y^{O1}(-Y^{O2}-)_2$, $-Y^{O2}-(Y^{O1}-Y^{O2}-)_2$, $-Y^{O2}-Y^{O1}-Y^{O2}-Y^{O1}(-)_2$, $-Y^{O2}-Y^{O1}-Y^{O2}-(Y^{O1}-)_2$, $-Y^{O2}-Y^{O1}-(Y^{O2}-Y^{O1}-)_2$, and $-Y^{O2}-(Y^{O1}-Y^{O2}-Y^{O1}-)_2$.

When $Y^O$ is tetravalent, examples of $Y^O$ include $-Y^{O1}(-)_3$, $-Y^{O1}-Y^{O2}(-)_3$, $-Y^{O1}-(Y^{O2}-)_3$, $-Y^{O1}-Y^{O2}-Y^{O1}(-)_3$, $-Y^{O1}-Y^{O2}(-Y^{O1}-)_3$, $-Y^{O1}-(Y^{O2}-Y^{O1}-)_3$, $-Y^{O1}-Y^{O2}-Y^{O1}-Y^{O2}(-)_3$, $-Y^{O1}-Y^{O2}-Y^{O1}-(Y^{O2}-)_3$, $-YO1-Y^{O2}-(Y^{O1}-Y^{O2}-)_3$, $-Y^{O1}-(Y^{O2}-Y^{O1}-Y^{O2}-)_3$; $-Y^{O2}(-)_3$, $-Y^{O2}-Y^{O1}(-)_3$, $-Y^{O2}-(Y^{O1}-)_2$, $-Y^{O2}-Y^{O1}-Y^{O2}(-)_3$, $-Y^{O2}-Y^{O1}(-Y^{O2}-)_3$, $-Y^{O2}-(Y^{O1}-Y^{O2}-)_3$, $-Y^{O2}-Y^{O1}-Y^{O2}-Y^{O1}(-)_3$, $-Y^{O2}-YO1-Y^{O2}-(Y^{O1}-)_3$, $-Y^{O2}-Y^{O1}-(Y^{O2}-Y^{O1}-)_3$ and $-Y^{O2}-(Y^{O1}-Y^{O2}-Y^{O1}-)_3$.

Preferred examples of $Y^O$ include $-Y^{O1}-$, $-Y^{O1}-Y^{O2}-$, $-Y^{O1}-Y^{O2}-Y^{O1}-$, $-Y^{O1}-Y^{O2}(-)_2$, $-Y^{O2}-$, $-Y^{O2}-Y^{O1}-$, $-Y^{O2}-Y^{O1}-Y^{O2}-$, $-Y^{O2}-Y^{O1}(-)_2$.

(Preferred example of $Y^O$)

$Y^O$ is preferably

$-O-Y^{O11}-$

or

$-O-Y^{O11}-Y^{O21}-Y^{O12}-$

[wherein, independently at each occurrence,

$Y^{O11}$ is a direct bond, -C(=O)-, -C(=O)-NR'- or -C(=S)-NR'-,
$Y^{O21}$ is a hydrocarbon group having 1 to 40 carbon atoms, and
$Y^{O12}$ is -O-, -O-C(=O)-, -O-C(=O)-O-, -C(=O)-NR'-, -O-C(=O)-NR'-, -NR'-, -NR'-C(=O)-, -NR'-C(=O)-O-, -NR'-C(=O)-NR'-,-C(=O)-, -C(=O)-O-, -C(=O)-NR'-, $-SO_2-$, $-SO_2NR'-$, -C(OR')R'-, or $-C(OR')(-)_2$].

$Y^{O11}$ is a non-hydrocarbon linker, and is a direct bond or divalent or higher valent group.

$Y^{O11}$ may have a molecular weight of 10 or more, 50 or more, 100 or more, 200 or more, 300 or more, or 500 or more, and 2,000 or less, 1,500 or less, 1,000 or less, 750 or less, or 500 or less.

$Y^{O11}$ is a direct bond, -C(=O)-, -C(=O)-NR'- or -C(=S)-NR'-.
$Y^{O21}$ is a divalent hydrocarbon linker, and may be a hydrocarbon group having 1 to 40 carbon atoms.
$Y^{O21}$ may have 1 or more, 2 or more, 3 or more, 4 or more, 6 or more, 8 or more, 10 or more, 12 or more, 14 or more, 16 or more, or 18 or more, and 40 or less, 35 or less, 30 or less, 25 or less, 20 or less, 15 or less, 10 or less, or 5 or less carbon atoms.
The hydrocarbon group having 1 to 40 carbon atoms may be cyclic, branched or linear, and may be a saturated or unsaturated (e.g., saturated) aliphatic hydrocarbon group.
Specific examples of $Y^{O21}$ include:

$-(CH_2)_p-$ (p is 1 to 40, 1 to 20, or 1 to 10),
a linear hydrocarbon group having 1 to 40, 1 to 20, or 1 to 10 carbon atoms and having an unsaturated bond,
a branched hydrocarbon group having 1 to 40, 1 to 20, or 1 to 10 carbon atoms, and
$-(CH_2)_q-Cy-(CH_2)_r-$ (q and r are each independently 0 to 20, for example, 1 to 10, and Cy is a hydrocarbon aromatic ring or a heterocyclic ring).

$Y^{O12}$ may be -O-, -O-C(=O)-, -O-C(=O)-O-, -O-C(=O)-NR'-,-NR'-, -NR'-C(=O)-, -NR'-C(=O)-O-, -NR'-C(=O)-NR'-, -C(=O)-,-C(=O)-O-, -C(=O)-NR'-, $-SO_2-$, $-SO_2NR'-$, -C(OR')R'- or-$C(OR')(-)_2$.
$Y^{O12}$ may include at least an amide structure. Herein the amide structure may be an amide structure in the broad sense, and may be selected from the amide structure in amide (acid amide), urea, urethane, imide, thioamide, thiourea, thiourethane, thioimide, sulfone amide, sulfone urea, sulfone urethane and sulfone imide. The amide structure may be selected from the group consisting of $-(C=O)N(-)_2$, $-(C=S)N(-)_2$ and $-S(=O)_2N(-)_2$ (each group may be left-right inverted). In this regard, of the bonds possessed by N in the amide structure, at least one may be bonded to a hydrogen atom. The amide structure is preferably $-(C=O)N(-)_2$, and may be an amide structure in a group selected from the group consisting of an amide group, a urea group, a urethane group and an imide group. Inclusion of the amide structure improves liquid repellency.

($Z^O$)

$Z^O$ is a monovalent hydrocarbon group having 1 or more and 40 or less carbon atoms and optionally having a substituent or a monovalent polysiloxane group. The same embodiments in the description in the above (Monovalent hydrocarbon group optionally having a substituent) and (Monovalent polysiloxane group) apply.

[Other modifying groups]

The hydroxy group of polyol may be substituted by a modifying group other than $-Y^O-Z^O{}_n$. Examples of modifying groups include an anionic group and/ or a cationic group.
Examples of anionic groups include a monomer having a carboxyl group, a sulfonic acid group or a phosphoric acid group.
Examples of salts of the anionic group include alkaline metal salt, alkaline earth metal salt, or an ammonium salt such as methyl ammonium salt, ethanol ammonium salt and triethanol ammonium salt.
Examples of cationic groups include an amino group, which is preferably a tertiary amino group and a quaternary amino group. It is preferable that in the tertiary amino group, two groups bonded to a nitrogen atom, which are the same or different, are an aliphatic group having 1 to 5 carbon atoms (in particular alkyl group), an aromatic group having 6 to 20 carbon atoms (an aryl group), or an aromatic aliphatic group having 7 to 25 carbon atoms (in particular an aralkyl group, e.g., a benzyl group ($C_6H_5-CH_2-$)). It is preferable that in the quaternary amino group, three groups bonded to a nitrogen atom, which are the same or different, are an aliphatic group having 1 to 5 carbon atoms (in particular alkyl group), an aromatic group having 6 to 20 carbon atoms (an aryl group), or an aromatic aliphatic group having 7 to 25 carbon atoms (in particular an aralkyl group, e.g., benzyl group ($C_6H_5-CH_2-$)). In the tertiary amino group and the quaternary amino group, the last group bonded to the nitrogen atom may have a carbon-carbon double bond. The cationic group may be in the form of salt.
The cationic group in the form of salt is a salt with an acid (an organic acid or an inorganic acid). An organic acid such as a carboxylic acid having 1 to 20 carbon atoms (in particular, a monocarboxylic acid such as acetic acid, propionic acid, butyric acid and stearic acid) are preferred.

[Production Method]

The modified body of polyol may be produced by reacting a modifying agent including a modifying group (or a precursor structure of the modifying group) with the hydroxy group of polyol.

(Polyol)

Polyol has two or more hydroxy groups and is a raw material of the modified body of polyol. Polyol has two or more hydroxy groups in the molecule. Polyol may be aliphatic or aromatic, and is preferably aliphatic.

Polyol may have an ether bond. Preferably polyol may have two or more ether bonds. More specifically, polyol is preferably a compound having two or more hydroxy groups and two or more ether bonds. In other words, polyol is preferably polyether having two or more hydroxy groups.

When polyol is a polymer, polyol may have a hydroxy group and an ether bond in the repeating structure of the monomer unit.

Polyol may be a low molecular weight compound (having a weight average molecular weight of, for example, less than 1,000 or 500 or less) and/or a high molecular weight compound. Polyol has a weight average molecular weight of 50 or more, 100 or more, 300 or more, 500 or more, 1,000 or more, 3,000 or more, 5,000 or more, 10,000 or more, 30,000 or more, 100,000 or more, 300,000 or more, or 500,000 or more, and 1,000,000 or less, 750,000 or less, 500,000 or less, 300,000 or less, 100,000 or less, 75,000 or less, 50,000 or less, 30,000 or less, 10,000 or less, 5,000 or less, 3,000 or less, 2,000 or less, 1,000 or less, or 500 or less.

Polyol may have 2 or more, 5 or more, 7 or more, 10 or more, 15 or more, 30 or more, 50 or more, or 100 or more hydroxy groups, and 3,000 or less, 1,000 or less, 750 or less, 500 or less, 300 or less, 100 or less, 50 or less, 30 or less, or 20 or less hydroxy groups.

The hydroxy group equivalent of polyol may be 20 or more, 40 or more, 60 or more, 80 or more, 100 or more, 120 or more, or 150 or more, and 1,000 or less, 800 or less, 600 or less, 400 or less, 200 or less, 100 or less, or 75 or less. Dividing the weight average molecular weight of polyol by the number of hydroxyl groups gives the hydroxy group equivalent of polyol.

Polyol may be a natural product. The natural product may be a high molecular weight natural product, a low molecular weight natural product, or a derivative thereof. The above natural product also includes a compound converted from microorganisms. Examples of polyol include a monosaccharide, an oligosaccharide, a polysaccharide, a sugar alcohol (reducing sugar), a hydroxy acid, an amino acid, vitamin, flavonol, hydroxyhydrocarbon, a polymer of a hydroxy group-containing compound, polyether polyol, polymer polyol, polyester polyol and other polyols.

Examples of monosaccharides include glucose, fructose, galactose and xylose.

Examples of oligosaccharides include sucrose, cycloamylose, cyclodextrin, maltose, trehalose, lactose and sucralose.

Examples of sugar alcohols (reducing sugar) include sorbitol, maltitol, erythritol, isomalt, lactitol, mannitol, xylitol, sorbitan and lactitol.

Examples of polysaccharides include starch, cellulose, curdlan, pullulan, alginic acid, carrageenan, guar gum, chitin, chitosan, locust bean gum, kappa-carrageenan, iota-carrageenan, isomaltodextrin, gellan gum and tamarind seed gum.

Examples of hydroxy acids include ascorbic acid, kojic acid, quinic acid, chlorogenic acid and gluconic acid.

Examples of amino acids include glucosamine.

Examples of vitamins include ascorbic acid and inositol.

Examples of flavonols include catechin, quercetin and anthocyanin.

Examples of hydroxyhydrocarbons include ethylene glycol, propylene glycol, diethylene glycol, triethylene glycol, tetraethylene glycol, neopentyl glycol, trimethylene glycol, glycerol, trimethylolpropane and trimethylolethane. The hydroxyhydrocarbon are a hydrocarbon having a hydroxy group, and may be aliphatic or aromatic, and is preferably aliphatic. The term "hydroxyhydrocarbon" may also mean a hydroxyhydrocarbon other than the compounds included in a different group, such as polysaccharide (other hydroxyhydrocarbons).

Examples of polymers of a hydroxy group-containing compound include polyglycerol, polyvinyl alcohol, hydroxyethyl (meth)acrylate polymer, hydroxypropyl (meth)acrylate polymer and hydroxybutyl (meth)acrylate polymer.

Polyether polyol may be a compound obtained by addition polymerization of alkylene oxide onto an initiator. Examples of initiators include a bifunctional or higher functional compound having a hydroxyl group. Examples of initiators include propylene glycol, polypropylene glycol, ethylene glycol, polyethylene glycol, glycerol, polyglycerol, trimethylol propane, triethanolamine, pentaerythritol, ethylenediamine, aromatic diamine, diethylenetriamine, sorbitol and sucrose. Alkylene oxide include ethylene oxide and propylene oxide. The polyether polyol, which is obtained by addition polymerization of alkylene oxide onto the initiator, is also referred to as polyoxyalkylene polyol, or an oxyalkylene derivative of polyol. Typical examples of polyether polyol include polyoxypropylene triol obtained by addition polymerization of propylene oxide onto glycerol and polyoxypropylene polyglyceryl ether obtained by addition polymerization of propylene oxide onto polyglycerol.

An example of polymer polyol is a compound obtained by polymerizing at least a moiety of polyether polyol in the polyether polyol with an ethylenically unsaturated monomer. Examples of ethylenically unsaturated monomers include acrylonitrile and styrene.

An example of polyester polyol may be a compound obtained by dehydration condensation of a difunctional or higher functional compound having a carboxyl group and a difunctional or higher functional compound having a hydroxy group. Examples of difunctional or higher functional compounds having a carboxyl group include terephthalic acid, isophthalic acid, phthalic acid, methylphthalic acid, trimellitic acid, pyromellitic acid, adipic acid, sebacic acid, succinic acid, maleic acid, fumaric acid, tetrahydrophthalic acid, methyltetrahydrophthalic acid, hexahydrophthalic acid and an acid anhydride thereof. Examples of difunctional or higher functional compounds having a hydroxy group include ethylene glycol, propylene glycol, propanediol, neopentyl glycol, glycerol, trimethylolethane, trimethylolpropane, pentaerythritol and a polymer thereof.

(Modifying agent)

The modifying agent is preferably a compound which is reactive to polyol and comprises the above monovalent hydrocarbon group having 1 or more and 40 or less carbon atoms and optionally having a substituent or a monovalent polysiloxane group.
Examples of modifying agents are as follows:

| | |
|---|---|
| Acid halide | $G(O=)C-Z^{O}$ |
| Acid anhydride | $O(C(=O)-Z^{O})_2$ |
| Carboxylic acid | $HO(O=)C-Z^{O}$ |
| Isocyanate | $O=C=N-Z^{O}$ |
| Thioisocyanate | $S=C=N-Z^{O}$ |
| Epoxy | $(CH_2OCH)\ CH_2O-Z^{O}$ |
| Halide | $G-Z^{O}$ |
| Amine | $H_2N-Z^{O}$ |
| Hydroxy | $HO-Z^{O}$ |

[In the formula, $Z^{O}$ is as described above, and G is a halogen atom (e.g., F, Cl, Br or I)].
$Z^{O}$ in the structure of the above modifying agent may be replaced with any group constituting the modifying group. For example, $Z^{O}$ may be a group having a monovalent hydrocarbon group having 1 or more and 40 or less carbon atoms and optionally having a substituent or a monovalent polysiloxane group, and $Z^{O}$ may be $-Y^{O}-Z^{O}{}_{n}$.
The modified body of polyol may also be synthesized by reacting polyol and a modifying agent. For example, the modified body of polyol may be synthesized by forming an ester bond by reacting a modifying agent, which is an acid halide compound, acid anhydride or carboxylic acid, with the hydroxy group of polyol. Alternatively, the modified body of polyol may be produced by forming an ether bond by reacting a modifying agent, which is a halide compound or an epoxy compound, with the hydroxy group of polyol. Conditions of the reaction between polyol and the modifying agent may be suitably designed by a person skilled in the art, including use of a catalyst (e.g., acid catalyst and base catalyst) and use of a condensing agent depending on the intended product.

{Modified body of polycarboxylic acid}

The modified body of polycarboxylic acid will be described as an example of the hydrophobic compounds (A1) and (A2). A modified body of polycarboxylic acid is a compound prepared by chemically modifying polycarboxylic acid so that polycarboxylic acid exhibits liquid repellency.
The modified body of polycarboxylic acid may have a melting point of 30°C or more, 40°C or more, 60°C or more, 80°C or more, 100°C or more, or 120°C or more, preferably 40°C or more, 50°C or more, 60°C or more, 70°C or more, or 80°C or more, and 250°C or less, 225°C or less, 200°C or less, 150°C or less, 130°C or less, 120°C or less, 110°C or less, 100°C or less, 80°C or less, or 50°C or less, and for example, 150°C or less, or 100°C or less. The melting point of the modified body of polycarboxylic acid may be measured according to JIS K 2235-1991.

[Structure]

The modified body of polycarboxylic acid may be a low molecular weight compound (having a weight average molecular weight of, for example, less than 1,500, less than 1,000 or 500 or less) and/or a high molecular weight compound. The modified body of polycarboxylic acid may have a weight average molecular weight of 100 or more, 200 or more, 300 or more, 400 or more, 500 or more, 1,000 or more, 3,000 or more, 5,000 or more, 10,000 or more, 30,000 or more, 100,000 or more, 300,000 or more, or 500,000 or more, and may have a weight average molecular weight of

1,000,000 or less, 750,000 or less, 500,000 or less, 300,000 or less, 100,000 or less, 75,000 or less, 50,000 or less, 30,000 or less, 10,000 or less, 9,000 or less, 8,000 or less, 7,000 or less, 6,000 or less, 5,000 or less, 3,000 or less, 2,000 or less, 1,000 or less, or 500 or less.

The weight average molecular weight (Mw) and the number average molecular weight (Mn) of the modified body of polycarboxylic acid may be measured by GFC using polyethylene glycol/ polyethylene oxide as a standard sample by the following apparatus under the following conditions.

Separation column: SB-806M (8 mm × 30 mm, Shodex)
Column temperature: 40°C
Solvent for mobile phase: ion-exchanged water
Flow rate of mobile phase: 1.0 mL/min
Sample concentration: 0.5 wt%
Injection amount: 50 μL
Detector: RI detector (Waters 2414 made by Waters)

The weight average molecular weight (Mw), the number average molecular weight (Mn) and polydispersity (Mw/Mn) of the modified body of polycarboxylic acid in terms polystyrene may be determined by gel permeation chromatography (GPC) using tetrahydrofuran (THF) as an eluent and Shodex KF400RL and KF400RH columns (polystyrene gel) made by SHOWA DENKO K.K.

The hydroxy group substitution ratio in the carboxyl group of the modified body of polycarboxylic acid may be 1% or more, 3% or more, 5% or more, 10% or more, 20% or more, 30% or more, 40% or more, 50% or more, 60% or more, 70% or more, 80% or more, 90% or more, or 100%, and is preferably 10% or more, for example, 30% or more, 40% or more, 50% or more, 60% or more, 70% or more, particularly 80% or more, and 100% or less, 95% or less, 85% or less, 75% or less, 65% or less, 55% or less, 45% or less, 35% or less, 25% or less, 15% or less, and is for example, 95% or less. The "substitution ratio" means the proportion (mol%) of modified hydroxy groups out of the hydroxy groups in the carboxyl group derived from polycarboxylic acid, and may mean the proportion (mol%) of hydroxy groups modified by a monovalent hydrocarbon group having 1 or more and 40 or less carbon atoms and optionally having a substituent or a monovalent polysiloxane group.

The residual ratio of hydroxyl groups in the carboxyl group in the modified body of polycarboxylic acid may be 1% or more, 3% or more, 5% or more, 10% or more, 20% or more, 30% or more, 40% or more, 50% or more, 60% or more, 70% or more, 80% or more, or 90% or more, and for example, is 5% or more, and may be 100% or less, 95% or less, 85% or less, 75% or less, 65% or less, 55% or less, 45% or less, 35% or less, 25% or less, 15% or less, or 5% or less, and for example, 50% or less, 30% or less, or 10% or less. In this regard, the "residual ratio" means the proportion (mol%) of hydroxyl groups without modification, out of the hydroxy groups in the carboxyl group derived from polycarboxylic acid.

The number of modifying groups that the modified body of polycarboxylic acid has may be 2 or more, 5 or more, 7 or more, 10 or more, 15 or more, 30 or more, or 50 or more, and 1,000 or less, 750 or less, 500 or less, 300 or less, 100 or less, 50 or less, 30 or less, or 20 or less. In this regard, the modifying group is preferably a monovalent hydrocarbon group optionally having a substituent or a monovalent polysiloxane group.

The modifying group equivalent of the modified body of polycarboxylic acid may be 150 or more, 250 or more, 350 or more, 450 or more, 550 or more, 650 or more, 750 or more, or 1,000 or more, and 2,500 or less, 2,000 or less, 1,500 or less, 1,000 or less, 750 or less, 500 or less, or 400 or less. The modifying group equivalent is obtained by dividing the weight average molecular weight of modified body of polycarboxylic acid by the number of modifying groups. In this regard, the modifying group is preferably a monovalent hydrocarbon group optionally having a substituent or a monovalent polysiloxane group.

In the modified body of polycarboxylic acid, one or more of hydroxy groups in polycarboxylic acid are substituted by a modifying group. The modifying group is preferably a monovalent hydrocarbon group optionally having a substituent or a monovalent polysiloxane group. The modified body of polycarboxylic acid may have a structure in which polycarboxylic acid is modified by an aliphatic hydrocarbon group having 3 or more and 40 or less (for example, 6 or more and 40 or less) carbon atoms from the viewpoint of the improvement in liquid repellency.

For details of the monovalent hydrocarbon group optionally having a substituent and the monovalent polysiloxane group, the same embodiments in the description in the above (Monovalent hydrocarbon group optionally having a substituent) and (Monovalent polysiloxane group) apply.

$(-Y^C-Z^C_n)$

In the modified body of polycarboxylic acid in the present disclosure, one or more hydroxyl groups in the carboxyl group in polycarboxylic acid are substituted by a group represented by the following formula: $-Y^C-Z^C_n$
[wherein $Y^C$ is a 1+n valent group composed of one or more selected from the group consisting of $Y^{C1}$ and $Y^{C2}$,

$Y^{C1}$ is a group composed of one or more selected from the group consisting of a direct bond, -O-, -C(=O)-, -C(=NR')-,-S-, $-S(=O)_2-$, -C(=S)-, -NR'-, -C(OR')R'-, $-C(OR')(-)_2$ and$-N(-)_2$ (wherein R' is independently at each occurrence a hydrogen atom or a hydrocarbon group having 1 to 30 (for example, 1 to 20, 1 to 10, or 1 to 4) carbon atoms),

$Y^{C2}$ is a group composed of one or more selected from the group consisting of a divalent to tetravalent aliphatic hydrocarbon group having 1 to 40 carbon atoms and optionally having a substituent, a divalent to tetravalent hydrocarbon aromatic ring optionally having a substituent, and a divalent to tetravalent heterocyclic ring optionally having a substituent,

$Z^C$ is a monovalent hydrocarbon group having 1 or more and 40 or less carbon atoms and optionally having a substituent or a monovalent polysiloxane group, and

n is an integer of 1 or more and 3 or less].

($Y^C$)

$Y^C$ is a 1+n valent group composed of one or more selected from the group consisting of $Y^{C1}$ and $Y^{C2}$,

$Y^{C1}$ is a group composed of one or more selected from the group consisting of a direct bond, -O-, -C(=O)-, -C(=NR')-,-S-, $-S(=O)_2-$, -C(=S)-, -NR'-, -C(OR')R'-, $-C(OR')(-)_2$ and$-N(-)_2$ (wherein R' is independently at each occurrence a hydrogen atom or a hydrocarbon group having 1 to 30 (for example, 1 to 20, 1 to 10, or 1 to 4) carbon atoms),

$Y^{C2}$ is a group composed of one or more selected from the group consisting of a divalent to tetravalent aliphatic hydrocarbon group having 1 to 40 carbon atoms and optionally having a substituent, a divalent to tetravalent hydrocarbon aromatic ring optionally having a substituent, and a divalent to tetravalent heterocyclic ring optionally having a substituent,

n is the number of $Z^C$ bonded to $Y^C$, and may be an integer of 1 or more and 3 or less. n may be 1 or more, 2 or more, or 3 or more, and may be 3 or less, 2 or less, or 1 or less, and for example, 2 or less.

$Y^C$ may have a molecular weight of 10 or more, 50 or more, 100 or more, 200 or more, 300 or more, 500 or more, or 750 or more, and 3,000 or less, 2,500 or less, 2,000 or less, 1,500 or less, 1,000 or less, 750 or less, 500 or less, 300 or less, 200 or less, 100 or less, or 50 or less.

$Y^C$ may include at least an amide structure. Herein the amide structure may be an amide structure in the broad sense, and may be selected from the amide structure in amide (acid amide), urea, urethane, imide, thioamide, thiourea, thiourethane, thioimide, sulfone amide, sulfone urea, sulfone urethane and sulfone imide. The amide structure may be selected from the group consisting of $-(C=O)N(-)_2$, $-(C=S)N(-)_2$ and $-S(=O)2N(-)_2$ (each group may be left-right inverted). In this regard, of the bonds possessed by N in the amide structure, at least one may be bonded to a hydrogen atom. The amide structure is preferably $-(C=O)N(-)_2$, and may be an amide structure in a group selected from the group consisting of an amide group, a urea group, a urethane group and an imide group. Inclusion of the amide structure improves liquid repellency.

o $Y^{C1}$

$Y^{C1}$ is a non-hydrocarbon linker.

$Y^{C1}$ is a direct bond or a divalent or higher valent group. $Y^{C1}$ may have a valence of 2 to 4, 2 or 3, or 2. It is preferable that $Y^{C1}$ is not limited to direct bond.

$Y^{C1}$ may have a molecular weight of 10 or more, 50 or more, 100 or more, 200 or more, 300 or more, or 500 or more, and 2,000 or less, 1,500 or less, 1,000 or less, 750 or less, or 500 or less.

$Y^{C1}$ may be composed of one or more selected from the group consisting of a direct bond, -O-, -C(=O)-, $-S(=O)_2-$, -NR'-,-C(OR')R'-, and $-C(OR')(-)_2$, (wherein R' is independently at each occurrence a hydrogen atom or a hydrocarbon group having 1 to 30 (for example, 1 to 20, 1 to 10, or 1 to 4) carbon atoms). Examples of $Y^{C1}$ include:
a direct bond,

-O-,

-O-C(=O)-,

-O-C(=O)-O-,

-O-C(=O)-NR'-,

-NR'-,

-NR'-C(=O)-,

-NR'-C(=O)-O-,

-NR'-C(=O)-NR'-,

-C(=O)-,

-C(=O)-O-,

-C(=O)-NR'-,

$-SO_2-$,

$-SO_2NR'-$,

-C(OR')R'-,

and

$-C(OR'')(-)_2$.

(wherein R' is independently at each occurrence a hydrogen atom or a hydrocarbon group having 1 to 30 (for example, 1 to 20, 1 to 10, or 1 to 4) carbon atoms.)

$Y^{C1}$ may include at least an amide structure. Herein the amide structure may be an amide structure in the broad sense, and may be selected from the amide structure in amide (acid amide), urea, urethane, imide, thioamide, thiourea, thiourethane, thioimide, sulfone amide, sulfone urea, sulfone urethane and sulfone imide. The amide structure may be selected from the group consisting of $-(C=O)N(-)_2$, $-(C=S)N(-)_2$ and $-S(=O)_2N(-)_2$ (each group may be left-right inverted). In this regard, of the bonds possessed by N in the amide structure, at least one may be bonded to a hydrogen atom. The amide structure is preferably $-(C=O)N(-)_2$, and may be an amide structure in a group selected from the group consisting of an amide group, a urea group, a urethane group and an imide group. Inclusion of the amide structure improves liquid repellency.

o $Y^{C2}$

$Y^{C2}$ is a linker composed of one or more selected from the group consisting of a hydrocarbon group optionally having a substituent, a hydrocarbon aromatic ring optionally having a substituent and a heterocyclic ring optionally having a substituent.

$Y^{C2}$ may be a hydrocarbon group or a non-hydrocarbon group (including a heteroatom). $Y^{C2}$ may be aliphatic or aromatic. $Y^{C2}$ may be linear, branched or cyclic.

$Y^{C2}$ is a divalent or higher valent group. $Y^{C2}$ may have a valence of, for example, 2 to 4, 2 or 3, or 2.

$Y^{C2}$ may have 1 or more, 2 or more, 3 or more, 4 or more, 6 or more, 8 or more, 10 or more, 12 or more, 14 or more, 16 or more, or 18 or more carbon atoms, and 40 or less, 35 or less, 30 or less, 25 or less, 20 or less, 15 or less, 10 or less, or 5 or less carbon atoms.

$Y^{C2}$ is composed of one or more selected from the group consisting of a divalent to tetravalent aliphatic hydrocarbon group having 1 to 40 carbon atoms and optionally having a substituent, a divalent to tetravalent hydrocarbon aromatic ring optionally having a substituent, and a divalent to tetravalent heterocyclic ring optionally having a substituent.

The divalent to tetravalent aliphatic hydrocarbon group having 1 to 40 carbon atoms may be a cyclic, branched or linear hydrocarbon group. The divalent to tetravalent aliphatic hydrocarbon group having 1 to 40 carbon atoms may be a saturated or unsaturated (e.g., saturated) aliphatic hydrocarbon group. The aliphatic hydrocarbon group having 1 to 40 carbon atoms may have 1 or more, 2 or more, 3 or more, 4 or more, 6 or more, 8 or more, or 10 or more carbon atoms, and 35 or less, 30 or less, 25 or less, 20 or less, 15 or less, 10 or less, or 5 or less carbon atoms. The aliphatic hydrocarbon group may have a valence of 2 or more, 3 or more, or 4, and 4 or less, 3 or less, or 2.

The aliphatic hydrocarbon group may have a substituent. Examples of substituents include -OR', $-N(R')_2$,

-COOR', and a halogen atom (wherein R' is independently at each occurrence a hydrogen atom or a hydrocarbon group having 1 to 30, 1 to 20, 1 to 10, or 1 to 4 carbon atoms). The substituent may or may not have active hydrogen. The number of substituents may be 6 or less, 5 or less, 4 or less, 3 or less, 2 or less, 1 or less, or 0. In the aliphatic hydrocarbon group having a substituent, the amount of carbon atom relative to the carbon atom and the heteroatom may be 70 mol% or more, 80 mol% or more, 90 mol% or more, 95 mol% or more, or 99 mol% or more, and is preferably 75 mol% or more, and may be 95 mol% or less, 90 mol% or less, 85 mol% or less, or 80 mol% or less.

Examples of the divalent to tetravalent hydrocarbon aromatic ring include groups obtained by removing 2 to 4 hydrogen atoms from hydrocarbon aromatic rings such as benzene, naphthalene, anthracene, phenanthrene, tetracene (naphthacene), pentacene, pyrene, and coronene. The number of ring constituting atoms of the hydrocarbon aromatic ring is 3 to 20, 4 to 16, or 5 to 12 and preferably 5 to 12. The valence of the hydrocarbon aromatic ring may be 2 or more, 3 or more, or 4, and may be 4 or less, 3 or less, or 2.

The hydrocarbon aromatic ring may have a substituent. Examples of substituents include -R', -OR', $-N(R')_2$, -COOR' and a halogen atom (wherein R' is independently at each occurrence a hydrogen atom or a hydrocarbon group having 1 to 30, 1 to 20, 1 to 10, or 1 to 4 carbon atoms). The substituent may or may not have active hydrogen. The number of substituents may be 6 or less, 5 or less, 4 or less, 3 or less, 2 or less, 1 or less, or 0. In the hydrocarbon aromatic ring having a substituent, the amount of carbon atom relative to the carbon atom and the heteroatom may be 70 mol% or more, 80 mol% or more, 90 mol% or more, 95 mol% or more, or 99 mol% or more, and is preferably 75 mol% or more, and may be 95 mol% or less, 90 mol% or less, 85 mol% or less, or 80 mol% or less.

The divalent to tetravalent heterocyclic ring may be an aliphatic group or an aromatic group. Examples of the divalent to tetravalent heterocyclic rings include groups obtained by removing 2 to 4 hydrogen atoms from pyridine, pyrazine, pyrimidine, pyridazine, triazine, quinoline, isoquinoline, quinazoline, cinnoline, phthalazine, quinoxaline, pyrrole, indole, furan, benzofuran, thiophene, benzothiophene, pyrazole, imidazole, benzimidazole, triazole, oxazole, benzoxazole, thiazole, benzothiazole, isothiazole, benzisothiazole, pyrrolidine, piperidine, piperazine, imidazolidine, thiazoline, and the like. The number of ring constituting atoms of the heterocyclic ring is 3 to 20, 4 to 16, or 5 to 12 and preferably 5 to 12. The heterocyclic ring may have a valence of 2 or more, 3 or more, or 4, and 4 or less, 3 or less, or 2.

The heterocyclic ring may have a substituent. Examples of substituents include -R', -OR', $-N(R')_2$, -COOR' and a halogen atom (wherein R' is independently at each occurrence a hydrogen atom or a hydrocarbon group having 1 to 30, 1 to 20, 1 to 10, or 1 to 4 carbon atoms). The substituent may have or be free of active hydrogen. The number of substituents may be 6 or less, 5 or less, 4 or less, 3 or less, 2 or less, 1 or less, or 0. In the heterocyclic ring having a substituent, the amount of carbon atom relative to the amount of carbon atom and heteroatom may be 60 mol% or more, 70 mol% or more, 80 mol% or more, 90 mol% or more, 95 mol% or more, or 99 mol% or more, and is for example 65 mol% or more, and may be 95 mol% or less, 90 mol% or less, 85 mol% or less, 80 mol% or less, or 70 mol% or less.

Examples of $Y^{C2}$ include

-Ali-,

-Cy-,

$-Ali(-)_2$,

$-Cy(-)_2$,

$(-)_2Ali-$,

$(-)_2C_Y-$,

$(-)_2Ali(-)_2$,

$(-)_2Cy(-)_2$,

-Ali-Cy-,

-Cy-Ali-,

-Cy-Ali-Cy-,

and

-Ali-Cy-Ali-

[wherein Ali is an aliphatic hydrocarbon group having 1 to 20 carbon atoms and Cy is a hydrocarbon aromatic ring or a heterocyclic ring].

Specific examples of $Y^{C2}$ include:

$-(CH_2)_p-$ (p is 1 to 40, 1 to 20, or 1 to 10),
a linear hydrocarbon group having 1 to 40, 1 to 20, or 1 to 10 carbon atoms and having an unsaturated bond,
a branched hydrocarbon group having 1 to 40, 1 to 20, or 1 to 10 carbon atoms, and
$-(CH_2)_q-Cy-(CH_2)_r-$ (q and r are each independently 0 to 20, for example, 1 to 10, and Cy is a hydrocarbon aromatic ring or a heterocyclic ring).

(Example of $Y^C$)

Examples of $Y^C$ will be described. In the following, R' is independently at each occurrence a hydrogen atom or a hydrocarbon group having 1 to 30 (for example, 1 to 20, 1 to 10, or 1 to 4) carbon atoms.

When $Y^C$ is divalent, examples of $Y^C$ include $-Y^{C1}-$, $-Y^{C1}-Y^{C2}-$, $-Y^{C1}- Y^{C2}-Y^{C1}-$,$-Y^{C1}-Y^{c2}-Y^{c1}-Y^{c2}-$, $-Y^{C2}-$, $-Y^{C2}-Y^{C1}-$, $-Y^{C2}-Y^{C1}-Y^{C2}-$, and $-Y^{C2}-Y^{C1}-Y^{C2}-Y^{C1}-$.

When $Y^C$ is trivalent, examples of $Y^C$ include $-Y^{C1}(-)_2$, $-Y^{C1}-Y^{C2}(-)_2$, $-Y^{C1}-(Y^{C2}-)_2$, $-Y^{C1}-Y^{C2}-Y^{C1}(-)_2$, $-Y^{C1}-Y^{C2}(-Y^{C1}-)_2$, $-Y^{C1}-(Y^{C2}-Y^{C1}-)_2$, $-Y^{C1}-Y^{C2}-Y^{C1}-Y^{C2}(-)_2$, $-Y^{C1}-Y^{C2}-Y^{C1}-(Y^{C2}-)_2$, $-Y^{C1}-Y^{C2}-(Y^{C1}-Y^{C2}-)_2$, $-Y^{C1}-(Y^{C2}-Y^{C1}-Y^{C2}-)_2$; $-Y^{C2}(-)_2$, $-Y^{C2}Y^{C1}(-)_2$, $-Y^{C2}-(Y^{C1}-)_2$, $-Y^{C2}-Y^{C1}-Y^{C2}(-)_2$, $-Y^{C2}Y^{C1}( - Y^{C2}-)_2$, $-Y^{C2}-(Y^{C1}-Y^{C2}-)_2$, $-Y^{C2}-Y^{C1}-Y^{C2}-Y^{C1}(-)_2$, $-Y^{C2}-Y^{C1}-Y^{C2}-(Y^{C1}-)_2$, $- Y^{C2}-Y^{C1}-(Y^{C2}-Y^{C1}-)_2$, and $-Y^{C2}-(Y^{C1}-Y^{C2}-Y^{C1}-)_2$.

When $Y^C$ is tetravalent, examples of $Y^C$ include $-Y^{C1}(-)_3$, $- Y^{C1}-Y^{C2}(-)_3$, $-Y^{C1}-(Y^{C2}-)_3$, $-Y^{C1}-Y^{C2}-Y^{C1}(-)_3$, $-Y^{C1}-Y^{C2}(-Y^{C1}-)_3$, $-Y^{C1}-(Y^{C2}-Y^{C1}-)_3$, $-Y^{C1}-Y^{C2}-Y^{C1}-Y^{C2}(-)_3$, $-Y^{C1}-Y^{C2}-Y^{C1}-(Y^{C2}-)_3$, $-Y^{C1}-Y^{C2}-(Y^{C1}-Y^{C2}-)_3$, $-X^{C1}-(Y^{C2}-Y^{C1}-Y^{C2}-)_3$; $-Y^{C2}(-)_3$, $-Y^{C2}Y^{C1}(-)_3$, $-Y^{C2}-(Y^{C1}-)_3$, $-Y^{C2}Y^{C1}-Y^{C2}(-)_3$, $-Y^{C2}-Y^{C1}( - Y^{C2}-)_3$, $-Y^{C2}- (Y^{C1}-Y^{C2}-)_3$, $-Y^{C2}-Y^{C1}-Y^{C2}-Y^{C1}(-)_3$, $-Y^{C2}-Y^{C1}-Y^{C2}-(Y^{C1}-)_3$, $- Y^{C2}-Y^{C1}-(Y^{C2}-Y^{C1}-)_3$, $-Y^{C2}-(Y^{C1}-Y^{C2}-Y^{C1}-)_3$; .

Preferred examples of $Y^C$ include $-Y^{C1}-$, $-Y^{C1}-Y^{C2}-$, $-Y^{C1}-Y^{C2}-Y^{C1}-$, $-Y^{C1}-Y^{C2}(-)_2$, $-Y^{C2}-$, $-Y^{C2}-Y^{C1}-$, $-Y^{C2}-Y^{C1}-Y^{C2}-$, $-Y^{C2}-Y^{C1}(-)_2$.

(Preferred Example of $Y^C$)

Preferably $Y^C$ may be

$-Y^{C11}-$

or

$-Y^{C11}-Y^{C21}-Y^{C12}-$

wherein, independently at each occurrence,

$Y^{C11}$ is -O- or -NR'-,
$Y^{C21}$ is a hydrocarbon group having 1 to 40 carbon atoms and
$Y^{C12}$ is -O-, -O-C(=O)-, -O-C(=O)-O-, -C(=O)-NR'-, -O-C(=O)-NR'-, -NR'-, -NR'-C(=O)-, -NR'-C(=O)-O-, -NR'-C(=O)-NR'-, - C(=O)-, -C(=O)-O-, -C(=O)-NR'-, $-SO_2-$, $-SO_2NR'-$, -C(OR')R'-, or $-C(OR')(-)_2$.

$Y^{C11}$ is a non-hydrocarbon linker, and is a direct bond or divalent or higher valent group.

$Y^{C11}$ may have a molecular weight of 10 or more, 50 or more, 100 or more, 200 or more, 300 or more, or 500 or more, and 2,000 or less, 1,500 or less, 1,000 or less, 750 or less, or 500 or less.

$Y^{C11}$ may be a direct bond, -C(=O)-, -C(=O)-NR'- or -C(=S)-NR'-.

$Y^{C21}$ is a divalent hydrocarbon linker, and may be a hydrocarbon group having 1 to 40 carbon atoms.

$Y^{C21}$ may have 1 or more, 2 or more, 3 or more, 4 or more, 6 or more, 8 or more, 10 or more, 12 or more, 14 or more, 16 or more, or 18 or more, and 40 or less, 35 or less, 30 or less, 25 or less, 20 or less, 15 or less, 10 or less, or 5 or less carbon atoms.

The hydrocarbon group having 1 to 40 carbon atoms may be cyclic, branched or linear, and may be a saturated or unsaturated (e.g., saturated) aliphatic hydrocarbon group.

Specific examples of $Y^{C21}$ include:

$-(CH_2)_p-$ (p is 1 to 40, 1 to 20, or 1 to 10),
a linear hydrocarbon group having 1 to 40, 1 to 20, or 1 to 10 carbon atoms and having an unsaturated bond,
a branched hydrocarbon group having 1 to 40, 1 to 20, or 1 to 10 carbon atoms, and
$-(CH_2)_q-Cy-(CH_2)_r-$ (q and r are each independently 0 to 20, for example, 1 to 10, and Cy is a hydrocarbon aromatic ring or a heterocyclic ring).

$Y^{C12}$ may be -O-, -O-C(=O)-, -O-C(=O)-O-, -O-C(=O)-NR'-, - NR'-, -NR'-C(=O)-, -NR'-C(=O)-O-, -NR'-C(=O)-NR'-, -C(=O)-, - C(=O)-O-, -C(=O)-NR'-, $-SO_2-$, $-SO_2NR'-$, -C(OR')R'-, or - $C(OR')(-)_2$.

$Y^{C12}$ may include at least an amide structure. Herein the amide structure may be an amide structure in the broad sense, and may be selected from the amide structure in amide (acid amide), urea, urethane, imide, thioamide, thiourea, thiourethane, thioimide, sulfone amide, sulfone urea, sulfone urethane and sulfone imide. The amide structure may be selected from the group consisting of $-(C=O)N(-)_2$, $-(C=S)N(-)_2$ and $-S(=O)_2N(-)_2$ (each group may be left-right inverted). In this regard, of the bonds possessed by N in the amide structure, at least one may be bonded to a hydrogen atom. The amide structure is preferably $-(C=O)N(-)_2$, and may be an amide structure in a group selected from the group consisting of an amide group, a urea group, a urethane group and an imide group. Inclusion of the amide structure improves liquid repellency.

($Z^C$)

$Z^C$ is a monovalent hydrocarbon group having 1 or more and 40 or less carbon atoms and optionally having a substituent or a monovalent polysiloxane group. The same embodiments in the description in the above (Monovalent hydrocarbon group optionally having a substituent) and (Monovalent polysiloxane group) apply.

[Other modifying groups]

The hydroxy group of a carboxyl group of polycarboxylic acid may be substituted by a modifying group other than $-Y^C-Z^C_n$. Examples of modifying groups include an anionic group and/or a cationic group. For the anionic group and/or cationic group, the same embodiments described in [Other modifying groups] in the polyol described above apply.

[Production Method]

The modified body of polycarboxylic acid may be produced by reacting a modifying agent including a modifying group (or a precursor structure of the modifying group) with the hydroxy group of a carboxyl group of polycarboxylic acid.

(Polycarboxylic acid)

Polycarboxylic acid has two or more carboxyl groups and is a raw material of the modified body of polycarboxylic acid. Polycarboxylic acid has two or more carboxyl groups in the molecule. Polycarboxylic acid may be aliphatic or aromatic, and is preferably aliphatic.

Polycarboxylic acid may be a low molecular weight compound (having a weight average molecular weight of, for example, less than 1,000 or 500 or less) and/or a high molecular weight compound. Polycarboxylic acid may have a weight average molecular weight of 100 or more, 300 or more, 500 or more, 1,000 or more, 3,000 or more, 5,000 or more, 10,000 or more, 30,000 or more, 100,000 or more, 300,000 or more, or 500,000 or more, and 1,000,000 or less, 7,500,000 or less, 500,000 or less, 3,000,000 or less, 100,000 or less, 75,000 or less, 50,000 or less, 30,000 or less, 10,000 or less, 5,000 or less, 3,000 or less, 2,000 or less, 1,000 or less, or 500 or less.

Polycarboxylic acid may have 2 or more, 5 or more, 7 or more, 10 or more, 15 or more, 30 or more, 50 or more, or 100 or more carboxyl groups, and 3,000 or less, 1,000 or less, 750 or less, 500 or less, 300 or less, 100 or less, 50 or less, 30 or less, or 20 or less carboxyl groups.

The carboxyl group equivalent of polycarboxylic acid may be 20 or more, 40 or more, 60 or more, 80 or more, 100 or more, 120 or more, 150 or more, and 1,000 or less, 800 or less, 600 or less, 400 or less, 200 or less, 100 or less, or 75 or less. The carboxyl group equivalent of polycarboxylic acid is obtained by dividing the weight average molecular weight of polycarboxylic acid by the number of hydroxyl groups.

Polycarboxylic acid may be a natural product. The natural product may be a high molecular weight natural product, a low molecular weight natural product, or a derivative thereof. The above natural product also includes a compound converted from microorganisms.

Polycarboxylic acid may be at least one selected from the group consisting of a dicarboxylic acid, a tricarboxylic acid, a tetracarboxylic acid, a polymer of a carboxyl group-containing compound.

Dicarboxylic acid has two carboxyl groups, and examples thereof include oxalic acid, malonic acid, succinic acid,

maleic acid, fumaric acid, adipic acid, phthalic acid, terephthalic acid, malic acid, tartaric acid, aldaric acid and a salt thereof.

Tricarboxylic acid has three carboxyl groups, and examples thereof include citric acid, tricarballylic acid, t-aconitic acid, trimellitic acid and a salt thereof.

Tetracarboxylic acid has four carboxyl groups, and examples thereof include pyromellitic acid and a salt thereof.

The polymer of a carboxyl group-containing compound has five or more carboxyl groups, and examples thereof include alginic acid, gum tragacanth, gum arabic, polyacrylic acid, polymethacrylic acid, polymaleic acid, polyaspartic acid, polyglutamic acid, hyaluronic acid, heparin, xanthan gum, gellan gum, carboxymethyl cellulose alginate, galacturonic acid, mannuronic acid and a salt thereof.

(Modifying agent)

The modifying agent is preferably a compound which is reactive to polycarboxylic acid and comprises the above monovalent hydrocarbon group having 1 or more and 40 or less carbon atoms and optionally having a substituent or a monovalent polysiloxane group.

Examples of modifying agents are as follows:

| | |
|---|---|
| Epoxy | $(CH_2OCH)\ CH_2O\text{-}Z^c$ |
| Amine | $H_2N\text{-}Z^c$ |
| Hydroxy | $HO\text{-}Z^c$ |

[In the formula, $Z^C$ is as described above].

$Z^C$ in the structure of the above modifying agent may be replaced with any group constituting the modifying group. For example, $Z^C$ may be a monovalent hydrocarbon group having 1 or more and 40 or less carbon atoms and optionally having a substituent, and for example, $Z^C$ may be $-Y^C\text{-}Z^C{}_n$.

The modified body of polycarboxylic acid may also be synthesized by reacting polycarboxylic acid and a modifying agent. For example, modified body of polycarboxylic acid may be synthesized by forming an ester bond by reacting a modifying agent, which is an epoxy compound, with the carboxy group of polycarboxylic acid. Conditions of the reaction between polycarboxylic acid and the modifying agent may be suitably designed by a person skilled in the art, including use of a catalyst (e.g., acid catalyst and base catalyst) and use of a condensing agent depending on the intended product.

{Oil}

Oil, which is an example of the hydrophobic compounds (A1) and (A2), will be described. The oil may be liquid or solid (wax) at room temperature. The oil may be selected from synthetic oil, mineral oil, animal oil and plant oil. The oil may be a hydrocarbon oil or a non-hydrocarbon oil, and is typically a compound with a higher hydrocarbon structure (having, for example, 10 or more, 20 or more or 30 or more carbon atoms). The hydrocarbon group that the oil may have is as described above. The oil may be different from the modified body of amine, the modified body of polyol and the modified body of polycarboxylic acid described above. The oil is a nonvolatile oil compound and may have a boiling point of, for example, 200°C or more, 250°C or more, or 300°C or more.

The oil may have a melting point of -100°C or more, -75°C or more, -50°C or more, 0°C or more, 30°C or more, 40°C or more, 60°C or more, 80°C or more, 100°C or more, or 120°C or more, preferably 40°C or more, 50°C or more, 60°C or more, 70°C or more, or 80°C or more, 250°C or less, 225°C or less, 200°C or less, 150°C or less, 130°C or less, 120°C or less, 110°C or less, 100°C or less, 80°C or less, 50°C or less, 25°C or less, 0°C or less, -25°C or less, -50°C or less, -75°C or less, or -100°C or less, and for example, 150°C or less, 100°C or less, 50°C or less, 0°C or less, or -50°C or less. The melting point of the oil may be measured according to JIS K 2235-1991.

The oil may be a low molecular weight compound (having a molecular weight of, for example, 1,000 or less, or 500 or less) or a high molecular weight compound. When the oil is a high molecular weight compound, the oil may have a weight average molecular weight of 1,000 or more, 3,000 or more, 5,000 or more, 7,500 or more, 10,000 or more, 30,000 or more, 100,000 or more, 300,000 or more, or 500,000 or more, and 10,000,000 or less, 7,500,000 or less, 5,000,000 or less, 3,000,000 or less, 1,000,000 or less, 750,000 or less, 500,000 or less, 300,000 or less, 100,000 or less, 75,000 or less, 50,000 or less, 30,000 or less, 10,000 or less, 7,500 or less, 5,000 or less, or 3,000 or less.

[Synthetic oil]

The synthetic oil is an oil prepared by chemical synthesis (oil compound), and may be liquid or solid (wax) at room

temperature. Examples of synthetic oils include a hydrocarbon oil; an ester oil; an ether oil; an amide oil; and a silicone oil.

[Mineral oil]

Mineral oil may be liquid or solid (wax) at room temperature. Examples of mineral oils include vaseline, liquid paraffin, paraffin wax, microcrystalline wax, montan wax, ozokerite wax, ceresin wax and petrolatum wax.

[Plant oil, animal oil]

Plant oil and animal oil may be liquid or solid (wax) at room temperature. Examples thereof include soybean oil, rapeseed oil, sunflower oil, safflower oil, peanut oil, corn oil, cottonseed oil, rice bran oil, kapok oil, sesame oil, olive oil, linseed oil, castor oil, jojoba oil, cocoa oil, palm oil, palm kernel oil, coconut oil, hemp seed oil, rice oil, tea seed oil, castor oil, sesame oil, fish oil, shark liver oil, squalene oil, squalene, beef fat, lard (pork fat), sheep fat, neatsfoot oil, whale oil, salmon oil, bonito oil, herring oil and cod oil, a hardened oil and a hydrogenated oil thereof; rice wax, carnauba wax, sunflower wax, candelilla wax, lacquer tree wax, beeswax, lanolin, whale wax and Chinese wax; fatty acids such as stearic acid, capric acid, caproic acid, linoleic acid, linolenic acid, palmitic acid, lauric acid, and eleostearic acid; fatty alcohols such as lauryl alcohol, cetostearyl alcohol, stearyl alcohol, cetyl alcohol, and myristyl alcohol; fatty acid esters such as glycerol monostearate, glycerol monooleate, acetylated monoglyceride, tristearin, tripalmitin and cetyl ester glyceryl palmitostearate; glyceryl behenate; and medium chain triglyceride.

{Example of hydrophobic compounds (A1) and (A2)}

The hydrophobic compound (A1) may be, for example, a modified body of amine, in particular, the aliphatic modified body of amine described above.

The hydrophobic compound (A1) may be, for example, a modified body of amine or wax (e.g., hydrocarbon wax), and may be in particular, a modified body of amine (in particular an aliphatic modified body of amine) described above. Specific examples thereof include:

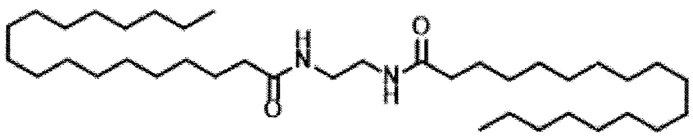

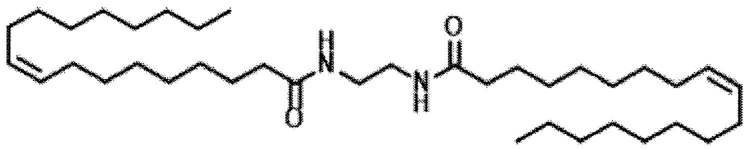

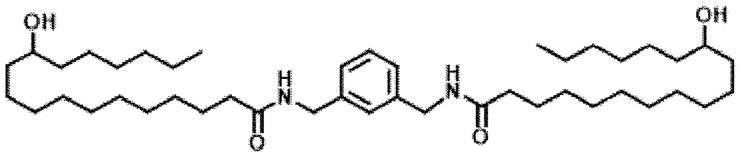

paraffin wax having 20 to 40 carbon atoms.

Examples of hydrophobic compounds (A2) include a monoester compound, a diester compound, a triester compound, a tetraester compound, a polyester compound, a monoamide compound, a diamide compound, a triamide compound and a polyamide compound.

Examples of ester compounds include glycerol ester, polyglycerol ester, sucrose ester, sorbitan ester, pentaerythritol ester, trimellitate, phthalate, adipate, pyromellitate, citrate, benzoate and an ester compound prepared by condensation of alcohol represented by $CH_3(CH_2)_nOH$ (n = 0 to 30, linear or branched structure) and fatty acid.

Examples of amide compounds include a condensate of fatty acid with monoamine, a condensate of fatty acid with diamine, a condensate of fatty acid with triamine, a condensate of fatty acid with tetraamines and a condensate of fatty acid with pentaamine.

The hydrophobic compound (A2) may be, for example, a modified body of polycarboxylic acid, a modified body of polyol or oil described above, and may be a compound having a plurality of (e.g., 2 to 10, 2 to 6, 2 to 4) monovalent aliphatic

hydrocarbon structures (in particular a fatty acid ester structure). Examples of hydrophobic compounds (A2) include fatty acid-modified polyol (e.g., fatty acid-modified sugar), oil and fat, and long chain aliphatic alcohol-modified polycarboxylic acid (e.g., long chain alcohol modified-polyvalent aromatic ring). Specific examples thereof include:

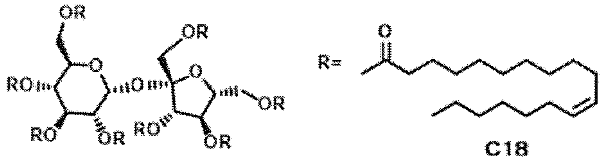

,

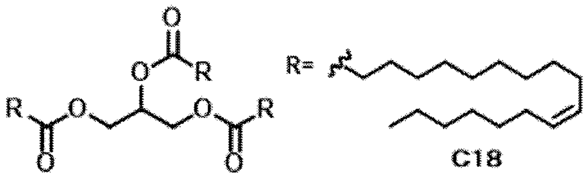

,

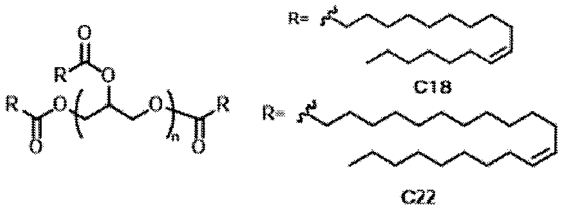

,

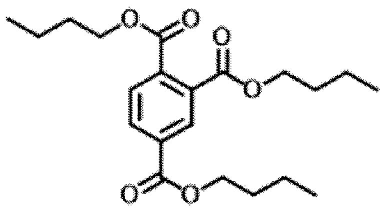

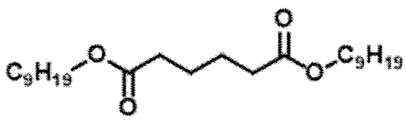

.

{Dispersant}

The composition in the present disclosure may comprise a dispersant. The dispersant may be at least one selected from an organic dispersant and an inorganic dispersant. The dispersant may be at least one selected from an anionic dispersant, a nonionic dispersant, a cationic dispersant, an amphoteric dispersant and an inorganic dispersant.
An organic dispersant and an inorganic dispersant may be used as the dispersant, respectively, or an organic dispersant and an inorganic dispersant may be used in combination.
An organic dispersant may be used as the dispersant. The organic dispersant may be classified into a nonionic dispersant, an anionic dispersant, a cationic dispersant and an amphoteric dispersant. The organic dispersant may mean a surfactant.
The dispersant may have no fluorine.

[Nonionic dispersant]

The dispersant may comprise a nonionic dispersant. The nonionic dispersant may be a nonionic surfactant.
The nonionic dispersant may be of low molecular weight or high molecular weight. The nonionic dispersant may

have a molecular weight of 100 or more, 500 or more, 1,000 or more, 2,000 or more, 4,000 or more, or 6,000 or more, and 100,000 or less, 25,000 or less, 10,000 or less, 7,500 or less, 5,000 or less, 2,500 or less, 750 or less, or 250 or less.

Examples of nonionic dispersant include ether, ester, ester ether, alkanolamide, polyol and amine oxide.

The ether is, for example, a compound having an oxyalkylene group (preferably a polyoxyethylene group).

The ester is, for example, an ester of an alcohol and a fatty acid. The alcohol is, for example, an alcohol which is 1 to 30 hydric (particularly dihydric to decahydric) and has 1 to 50 carbon atoms (particularly 10 to 30 carbon atoms) (for example, an aliphatic alcohol). Examples of the fatty acids are saturated or unsaturated fatty acids having 2 to 50 carbon atoms, particularly 5 to 30 carbon atoms.

The ester ether is, for example, a compound in which an alkylene oxide (particularly ethylene oxide) is added to an ester of an alcohol and a fatty acid. The alcohol is, for example, an alcohol which is 1 to 30 hydric (particularly dihydric to decahydric) and has 1 to 50 carbon atoms (particularly 3 to 30 carbon atoms) (for example, an aliphatic alcohol). Examples of the fatty acids are saturated or unsaturated fatty acids having 2 to 50 carbon atoms, particularly 5 to 30 carbon atoms.

The alkanolamide is formed of for example, a fatty acid and an alkanolamine. The alkanolamide may be a monoalkanolamide or a dialkanolamide. Examples of the fatty acids are saturated or unsaturated fatty acids having 2 to 50 carbon atoms, particularly 5 to 30 carbon atoms. The alkanolamine may be an alkanol with 1 to 3 amino groups and 1 to 5 hydroxyl groups, having 2 to 50, particularly 5 to 30 carbon atoms.

The polyol may be, for example, a dihydric to pentahydric alcohol having 10 to 30 carbon atoms.

The amine oxide may be an oxide (for example, having 5 to 50 carbon atoms) of an amine (secondary amine or preferably tertiary amine).

The nonionic dispersant is preferably a nonionic dispersant having an oxyalkylene group (preferably a polyoxyethylene group). The alkylene group in the oxyalkylene group preferably has 2 to 10 carbon atoms. The number of oxyalkylene groups in the molecule of the nonionic dispersant is generally preferably 2 to 100.

The nonionic dispersant is selected from the group consisting of an ether, an ester, an ester ether, an alkanolamide, a polyol, or an amine oxide, and is preferably a nonionic dispersant having an oxyalkylene group.

The nonionic dispersant may be, for example, an alkylene oxide adduct of a linear and/or branched aliphatic (saturated and/or unsaturated) group, a polyalkylene glycol ester of a linear and/or branched fatty acid (saturated and/or unsaturated), a sorbitan ester of a linear and/or branched fatty acid (saturated and/or unsaturated), a glycerin ester of a linear and/or branched fatty acid (saturated and/or unsaturated), a polyglycerol ester of a linear and/or branched fatty acid (saturated and/or unsaturated), a sucrose ester of a linear and/or branched fatty acid (saturated and/or unsaturated), a polyoxyethylene (POE)/polyoxypropylene (POP) copolymer (random copolymer or block copolymer), and an alkylene oxide adduct of acetylene glycol. Among them, the nonionic dispersant is preferably a dispersant such that the structures of the alkylene oxide addition moiety and polyalkylene glycol moiety are polyoxyethylene (POE) or polyoxypropylene (POP) or POE/POP copolymer (which may be a random or block copolymer, for example.).

Furthermore, the nonionic dispersant may not include an aromatic group.

The nonionic dispersant may be the compound represented by the formula:

$$R^1O\text{-}(CH_2CH_2O)_p\text{-}(R^2O)_q\text{-}R^3$$

[wherein $R^1$ is an alkyl group having 1 to 22 carbon atoms, an alkenyl group or an acyl group, having 2 to 22 carbon atoms, $R^2$ is each independently the same or different and is an alkylene group having 3 or more carbon atoms (for example, 3 to 10),
$R^3$ is a hydrogen atom, an alkyl group having 1 to 22 carbon atoms, or an alkenyl group having 2 to 22 carbon atoms,
p is a numeral of 2 or more,
q is 0 or a numeral of 1 or more.].

$R^1$ preferably has 8 to 20 carbon atoms, particularly 10 to 18 carbon atoms. Preferred examples of $R^1$ include an octyl group, a nonyl group, a trimethylnonyl group, a lauryl group, a tridecyl group, an oleyl group and a stearyl group.

$R^2$ is, for example, a propylene group and a butylene group.

In the nonionic dispersant, for example, p may be a numeral of 3 or more (for example, 5 to 200) and q may be a numeral of 2 or more (for example, 5 to 200). Namely, $-(R^2O)_q$-may form, for example, a polyoxyalkylene chain.

The nonionic dispersant may be, for example, a polyoxyethylene alkylene alkyl ether comprising a hydrophilic polyoxyethylene chain and a hydrophobic oxyalkylene chain (particularly a polyoxyalkylene chain) in the center. The hydrophobic oxyalkylene chain includes, for example, an oxypropylene chain, an oxybutylene chain, and a styrene chain. The oxypropylene chain is preferred among them.

Specific examples of the nonionic dispersants include a condensation product of ethylene oxide with hexylphenol, isooctatylphenol, hexadecanol, oleic acid, an alkane($C_{12}$-$C_{16}$) thiol, a sorbitan monofatty acid ($C_7$-$C_{19}$), an alkyl ($C_{12}$-$C_{18}$)amine, or the like, and a sorbitan fatty acid ester, a glycerin fatty acid ester, a polyglycerin fatty acid ester, a sucrose fatty acid ester, a propylene glycol fatty acid ester, a polyoxyethylene alkyl ether, a polyoxyethylene polyoxypropylene alkyl ether, a polyoxyethylene glycerin fatty acid ester, a polyoxyethylene sorbitan fatty acid ester, and a lecithin derivative. Examples of nonionic dispersants include polyoxyethylene alkyl ether, polyoxyethylene polyoxypropylene alkyl ether, polyoxyethylene polyoxybutylene alkyl ether, polyoxyethylene polyoxypropylene glycol and polyethyleneimine ethoxylate.

The proportion of the polyoxyethylene block can be 5 to 80% by weight, for example, 30 to 75% by weight, particularly 40 to 70% by weight, based on a molecular weight of the nonionic dispersant (copolymer).

The average molecular weight of the nonionic dispersant is generally 300 to 5,000, for example, 500 to 3,000.

For example, the nonionic dispersant may be used singly or in admixture of two or more. The nonionic dispersant may be a mixture of a compound with an HLB (hydrophilic-hydrophobic balance) of less than 15 (particularly 5 or less) and a compound with an HLB of 15 or more. More specifically, it is preferable to select the nonionic dispersant from polyoxyethylene alkyl ether, polyoxyethylene polyoxypropylene alkyl ether, polyoxyethylene and polyoxypropylene having an HLB of 1 to 18, sorbitan fatty acid ester, glycerol fatty acid ester, polyglycerol fatty acid ester, sucrose fatty acid ester, propylene glycol fatty acid ester, polyoxyethylene glycerol fatty acid ester and polyoxyethylene sorbitan fatty acid ester having an HLB of less than 7.

[Cationic dispersant]

The dispersant may comprise a cationic dispersant. The cationic dispersant may be a cationic surfactant. The cationic dispersant may be a compound not having an amide group.

The cationic dispersant may be of low molecular weight (with a molecular weight of 2,000 or less, in particular, 10,000 or less) or of high molecular weight (with a molecular weight of, for example, 2,000 or more). The cationic dispersant may not have an amide group. The cationic dispersant may have a molecular weight of 100 or more, 500 or more, 1,000 or more, 2,000 or more, 4,000 or more, or 6,000 or more, and 1,000,000 or less, 750,000 or less, 500,000 or less, 250,000 or less, 100,000 or less, 50,000 or less, 25,000 or less, 10,000 or less, 7,500 or less, 5,000 or less, 2,500 or less, 750 or less, or 250 or less.

The cationic dispersant may be aliphatic or aromatic, and examples thereof include an ammonium salt (e.g., quaternary ammonium salt). The cationic dispersant may be oxyethylene-added ammonium salt. Specific examples thereof include an amine salt dispersant such as alkylamine salt, an amino alcohol fatty acid derivative, a polyamine fatty acid derivative and imidazoline; a quaternary ammonium salt dispersant such as alkyl trimethyl ammonium salt, dialkyl dimethyl ammonium salt, alkyl dimethyl benzyl ammonium salt, pyridinium salt, alkyl isoquinolinium salt, benzalkonium chloride and benzethonium chloride; and a polymer cationic dispersant such as polyquaternium-1 to 47. Examples of cationic dispersants include alkyl amine salt and quaternary ammonium salt.

The low molecular weight cationic dispersant may be a compound represented by the formula:

$$R^{21}\text{-N+}(\text{-}R^{22})\ (\text{-}R^{23})\ (\text{-}R^{24})X\text{-}$$

wherein $R^{21}$, $R^{22}$, $R^{23}$ and $R^{24}$ are a hydrogen or a hydrocarbon group having 1 to 40 carbon atoms, and X is an anionic group. Specific examples of $R^{21}$, $R^{22}$, $R^{23}$ and $-R^{24}$ include an alkyl group (e.g., a methyl group, a butyl group, a stearyl group, a palmityl group). Specific examples of X include a halogen (e.g., chlorine) and an acid (e.g., hydrochloric acid and acetic acid). The cationic dispersant may be monoalkyltrimethylammonium salt (in which alkyl has 4 to 40 carbon atoms).

More specifically, the low molecular weight cationic dispersant may be an ammonium salt represented by the formula:

$$R^1{}_p\text{-}N^+\text{-}R^2{}_qX^-$$

[wherein $R^1$ is a C12 or higher (e.g., $C_{12}$ to $C_{50}$) linear and/or branched aliphatic (saturated and/or unsaturated) group,

$R^2$ is H or a C1 to 4 alkyl group, a benzyl group, a polyoxyethylene group (in which the number of oxyethylene groups is for example, 1 (in particular 2, and especially 3) to 50) (particularly preferably $CH_3$, $C_2H_5$),
X is a halogen atom (e.g., chlorine) or a $C_1$ to $C_4$ fatty acid salt or a $C_1$ to $C_4$ sulfonate,
p is 1 or 2, q is 2 or 3 and p + q = 4.]
$R^1$ may have 12 to 50, and for example 12 to 30 carbon atoms.

Examples of the low molecular weight cationic dispersants may include dodecyltrimethylammonium acetate, trimethyltetradecylammonium chloride, hexadecyltrimethylammonium bromide, trimethyloctadecylammonium chloride, (dodecylmethylbenzyl)trimethylammonium chloride, benzyldodecyldimethylammonium chloride, methyldodecyl di(hydropolyoxyethylene) ammonium chloride, benzyldodecyl di(hydropolyoxyethylene) ammonium chloride, and N-[2-(diethylamino)ethyl]oleamide hydrochloride.

The high molecular weight cationic dispersant may be a polymer having a cationic group (for example, an ammonium group, a quaternary ammonium group) (for example, polypolyquaternium-1 to 47). Examples of high molecular weight cationic dispersants include a cationic natural product (in particular, cationic sugar) such as cationic starch, cationic cellulose (e.g., O-(2-hydroxy-3-(trimethylammonio)propylhydroxyethyl cellulose chloride), cationic guar gum, cationic xanthan gum and chitosan; a polymer of a cationic group-containing monomer such as aziridine, vinyl imidazole, aminoalkyl methacrylate, N,N,N',N'-tetramethyl-2-butene-1,4-diamine, quaternary dimethyl ammonium ethyl methacrylic acid, diallyldimethylammonium chloride, dimethylaminopropylamine and quaternary vinyl imidazole.

[Anionic dispersant]

The dispersant may comprise an anionic dispersant. The anionic dispersant may be an anionic surfactant. The dispersant may not include an anionic dispersant.

The anionic dispersant may be of low molecular weight or high molecular weight. The anionic dispersant may have a molecular weight of 100 or more, 500 or more, 1,000 or more, 2,000 or more, 4,000 or more, or 6,000 or more, and 100,000 or less, 25,000 or less, 10,000 or less, 7,500 or less, 5,000 or less, 25,000 or less, 750 or less, or 250 or less.

Examples of the anionic dispersant include an alkyl ether sulfate, an alkyl sulfate, an alkenyl ether sulfate, an alkenyl sulfate, an olefin sulfonate, an alkanesulfonate, a saturated or unsaturated fatty acid salt, an alkyl or alkenyl ether carbonate, an $\alpha$-sulfone fatty acid salt, a N-acylamino acid dispersant, a phosphate mono- or diester dispersant, and a sulfosuccinic acid ester. Examples of anionic dispersants include a carboxylic acid salt (e.g., fatty acid salt).

[Amphoteric dispersant]

The dispersant may comprise an amphoteric dispersant. The amphoteric dispersant may be an amphoteric surfactant.

The amphoteric dispersant may be of low molecular weight or high molecular weight. The amphoteric dispersant may have a molecular weight of 100 or more, 500 or more, 1,000 or more, 2,000 or more, 4,000 or more, or 6,000 or more, and 100,000 or less, 25,000 or less, 10,000 or less, 7,500 or less, 5,000 or less, 25,000 or less, 750 or less, or 250 or less.

Examples of the amphoteric dispersants include, for example, alanines, imidazolinium betaines, amidobetaines, and acetic acid betaine, and specific examples of the amphoteric dispersants include, for example, lauryl betaine, stearyl betaine, lauryl carboxymethyl hydroxyethyl imidazolinium betaine, lauryl dimethylamino acetic acid betaine, and fatty acid amidopropyldimethylaminoacetic acid betaine.

[Inorganic dispersant]

The dispersant may comprise an inorganic dispersant.

The inorganic dispersant has an average primary particle size of 5 nm or larger, 30 nm or larger, 100 nm or larger, 1 $\mu$m or larger, 10 $\mu$m or larger, or 25 $\mu$m or larger, and 100 $\mu$m or smaller, 50 $\mu$m or smaller, 10 $\mu$m or smaller, 1 $\mu$m or smaller, 500 nm or smaller, or 300 nm or smaller. The average primary particle size may be measured by a microscope, for example, a scanning electron microscope or a transmission electron microscope. The inorganic dispersant may be hydrophilic particles.

Examples of inorganic dispersants include polyvalent metal phosphate such as tricalcium phosphate, magnesium phosphate, aluminum phosphate, zinc phosphate and hydroxyapatite; carbonate such as calcium carbonate and magnesium carbonate; silicate such as calcium metasilicate; sulfate such as calcium sulfate and barium sulfate; and hydroxide such as calcium hydroxide, magnesium hydroxide and aluminum hydroxide.

[Amount of Dispersant]

The amount of dispersant may be 0.01 parts by weight or more, 0.1 parts by weight or more, 1 part by weight or more, 3 parts by weight or more, 5 parts by weight or more, 10 parts by weight, 15 parts by weight or more, 20 parts by weight or more, 50 parts by weight or more, 75 parts by weight or more, or 100 parts by weight or more, relative to 100 parts by weight of the hydrophobic compound (A), and may be 500 parts by weight or less, 300 parts by weight or less, 200 parts by weight or less, 100 parts by weight or less 30 parts by weight or less, 20 parts by weight or less, 10 parts by weight or less, 5 parts by weight or less, 3 parts by weight or less, or 1 part by weight or less.

{Liquid medium}

The composition in the present disclosure may comprise a liquid medium. The liquid medium may be water, an organic solvent, or a mixture of water and an organic solvent. The composition in the present disclosure may include at least water, and may be an aqueous dispersion.

Examples of the organic solvents include esters (for example, esters having 2 to 40 carbon atoms, specifically ethyl acetate and butyl acetate), ketones (for example, ketones having 2 to 40 carbon atoms, specifically methyl ethyl ketone and diisobutyl ketone), alcohols (for example, alcohols having 1 to 40 carbon atoms, specifically isopropyl alcohol), aromatic solvents (for example, toluene and xylene), petroleum-based solvents (for example, alkanes having 5 to 10 carbon atoms, specifically, naphtha and kerosene). The organic solvent is preferably a water-soluble organic solvent. The water-soluble organic solvent may include a compound having at least one hydroxy group (for example, polyol such as alcohol and glycol solvent, and an ether form of polyol (for example, a monoether form)). These may be used alone, or two or more of them may be used in combination.

[Amount of liquid medium]

The amount of liquid medium may be 1 part by weight or more, 3 parts by weight or more, 5 parts by weight or more, 10 parts by weight or more, 20 parts by weight or more, 30 parts by weight or more, 40 parts by weight or more, or 50 parts by weight or more, 100 parts by weight or more, 200 parts by weight or more, 300 parts by weight or more, 500 parts by weight or more, or 1,000 parts by weight or more, and 3,000 parts by weight or less, 2,000 parts by weight or less, 1,000 parts by weight or less, 500 parts by weight or less, 200 parts by weight or less, 175 parts by weight or less, 150 parts by weight or less, 125 parts by weight or less, 100 parts by weight or less, 80 parts by weight or less, 60 parts by weight or less, 40 parts by weight or less, 20 parts by weight or less, or 10 parts by weight or less relative to 1 part by weight of the hydrophobic compound (A).

The amount of water may be 1 part by weight or more, 3 parts by weight or more, 5 parts by weight or more, 10 parts by weight or more, 20 parts by weight or more, 30 parts by weight or more, 40 parts by weight or more, 50 parts by weight or more, 100 parts by weight or more, 200 parts by weight or more, 300 parts by weight or more, 500 parts by weight or more, or 1,000 parts by weight or more, and 3,000 parts by weight or less, 2,000 parts by weight or less, 1,000 parts by weight or less, 500 parts by weight or less, 200 parts by weight or less, 175 parts by weight or less, 150 parts by weight or less, 125 parts by weight or less, 100 parts by weight or less, 80 parts by weight or less, 60 parts by weight or less, 40 parts by weight or less, 20 parts by weight or less, or 10 parts by weight or less based on 1 part by weight of the hydrophobic compound (A).

The amount of the organic solvent may be 1 part by weight or more, 3 parts by weight or more, 5 parts by weight or more, 10 parts by weight or more, 20 parts by weight or more, 30 parts by weight or more, 40 parts by weight or more, 50 parts by weight or more, 100 parts by weight or more, 200 parts by weight or more, 300 parts by weight or more, 500 parts by weight or more, or 1,000 parts by weight or more, and 3,000 parts by weight or less, 2,000 parts by weight or less, 1,000 parts by weight or less, 500 parts by weight or less, 200 parts by weight or less, 175 parts by weight or less, 150 parts by weight or less, 125 parts by weight or less, 100 parts by weight or less, 80 parts by weight or less, 60 parts by weight or less, 40 parts by weight or less, 20 parts by weight or less, or 10 parts by weight or less relative to 1 part by weight of the hydrophobic compound (A).

{Organic Acid}

The composition of the present disclosure may contain an organic acid. As the organic acid, a known organic acid can be used. Examples of the organic acid preferably include, for example, a carboxylic acid, a sulfonic acid, and a sulfinic acid, with the carboxylic acid being particularly preferred. Examples of the carboxylic acid include, for example, formic acid, acetic acid, propionic acid, butyric acid, oxalic acid, succinic acid, glutaric acid, adipic acid, malic acid, and citric acid, with the formic acid or acetic acid being particularly preferred. In the present disclosure, one type of organic acid may be used, or two or more thereof may be combined for use. For example, formic acid and acetic acid may be combined for use.

[Amount of Organic Acid]

The amount of organic acid may be 0.1 parts by weight or more, 1 part by weight or more, 3 parts by weight or more, 5 parts by weight or more, 10 parts by weight or more, 15 parts by weight or more, 20 parts by weight or more, 50 parts by weight or more, 75 parts by weight or more, or 100 parts by weight or more, relative to 100 parts by weight of the hydrophobic compound (A), and may be 500 parts by weight or less, 300 parts by weight or less, 200 parts by weight or less, 100 parts by weight or less, 50 parts by weight or less, 40 parts by weight or less, 30 parts by weight or less, 20 parts by weight or less, 10 parts by weight or less, or 5 parts by weight or less. The amount of organic acid may be adjusted so that a

pH of the composition is 3 to 10, for example 5 to 9, particularly 6 to 8. For example, the composition may be acidic (pH of 7 or less, for example 6 or less).

{Curing Agent}

The composition of the present disclosure may contain a curing agent (active hydrogen-reactive compound or active hydrogen-containing compound).

The curing agent (cross-linking agent) in the composition can cure the hydrophobic compound (A) well. The curing agent may be an active hydrogen reactive compound or an active hydrogen-containing compound, which reacts with active hydrogen or the active hydrogen-reactive group that each of the hydrophobic compounds (A1) and (A2) has. Examples of the active hydrogen-reactive compound include an isocyanate compound, epoxy compound, chloromethyl group-containing compound, carboxyl group-containing compound, and hydrazide compound. Examples of the active hydrogen-containing compound include a hydroxyl group-containing compound, an amino group-containing compound and a carboxyl group-containing compound, a ketone group-containing compound, a hydrazide compound, and a melamine compound.

The curing agent may contain an isocyanate compound. The isocyanate compound may be a polyisocyanate compound. The polyisocyanate compound is a compound having two or more isocyanate groups in one molecule. The polyisocyanate compound serves as a cross-linking agent. Examples of the polyisocyanate compound include, for example, an aliphatic polyisocyanate, an alicyclic polyisocyanate, an araliphatic polyisocyanate, an aromatic polyisocyanate, and derivatives of these polyisocyanates. The isocyanate compound may be a blocked isocyanate compound (for example, a blocked polyisocyanate compound). The blocked isocyanate compound is a compound in which an isocyanate group of an isocyanate compound is masked with a blocking agent to inhibit reaction.

Examples of the aliphatic polyisocyanates are aliphatic triisocyanates such as trimethylene diisocyanate, tetramethylene diisocyanate, hexamethylene diisocyanate, pentamethylene diisocyanate, 1,2-propylene diisocyanate, 1,2-butylene diisocyanate, 2,3-butylene diisocyanate, 1,3-butylene diisocyanate, 2,4,4- or 2,2,4-trimethylhexamethylene diisocyanate, an aliphatic diisocyanate of 2,6-diisocyanatomethylcaproate, and aliphatic triisocyanates such as lysine ester triisocyanate, 1,4,8-triisocyanateoctane, 1,6,11-triisocyanatoundecane, 1,8-diisocyanato-4-isocyanatomethyloctane, 1,3,6-triisocyanatohexane, 2,5,7-trimethyl-1,8-diisocyanato-5-isocyanatomethyloctane. These may be used singly or in combination of two or more thereof.

Examples of the alicyclic polyisocyanates include, for example, an alicyclic diisocyanate and an alicyclic triisocyanate. Specific examples of the alicyclic polyisocyanate include 1,3-cyclopentene diisocyanate, 3-isocyanatomethyl-3,5,5-trimethylcyclohexyl isocyanate (isophorone diisocyanate), and 1,3,5-triisocyanatocyclohexane. These may be used singly or in combination of two or more thereof.

Examples of the aromatic-aliphatic polyisocyanate include an aromatic-aliphatic diisocyanate and aromatic-aliphatic triisocyanate. Specific examples of the araliphatic polyisocyanate include 1,3- or 1,4-xylylene diisocyanate or a mixture thereof, 1,3- or 1,4-bis(1-isocyanato-1-methylethyl)benzene (tetramethyl xylylene diisocyanate) or a mixture thereof, and 1,3,5-triisocyanatomethylbenzene. These may be used singly or in combination of two or more thereof.

Examples of the aromatic polyisocyanates include an aromatic diisocyanate, aromatic triisocyanate, and aromatic tetraisocyanate. Specific examples of the aromatic polyisocyanate include, for example, m-phenylene diisocyanate, p-phenylene diisocyanate, 4,4'-diphenyl diisocyanate, 1,5-naphthalene diisocyanate, 2,4'- or 4,4'-diphenylmethane diisocyanate, or a mixture thereof, 2,4- or 2,6-tolylene diisocyanate or a mixture thereof, triphenylmethane-4,4',4''-triisocyanate, and 4,4'-diphenylmethane-2,2',5,5'-tetraisocyanate. These may be used singly or in combination of two or more thereof.

Examples of the derivative of the polyisocyanate include various derivatives such as a dimer, trimer, biuret, allophanate, carbodiimide, urethodione, urethoimine, isocyanurate, and iminooxadiazinedione of the aforementioned polyisocyanate compounds. These may be used singly or in combination of two or more thereof.

These polyisocyanates can be used singly or in combination of two or more thereof.

As the polyisocyanate compound, a blocked polyisocyanate compound (blocked isocyanate), which is a compound obtained by blocking isocyanate groups of the polyisocyanate compound with a blocking agent, is preferably used. The blocked polyisocyanate compound is preferably used because it is relatively stable even in solution.

The blocking agent is an agent that blocks free isocyanate groups. The blocked polyisocyanate compound, for example, can be heated 100°C or higher, for example, 130°C or higher to regenerate isocyanate groups, facilitating a reaction with hydroxy groups. Examples of the blocking agent include, for example, a phenolic compound, lactam-based compound, aliphatic alcohol-based compound, and oxime-based compound. The polyisocyanate compound may be used singly or in combination of two or more thereof.

The epoxy compound is a compound having an epoxy group. Examples of the epoxy compound include epoxy compounds having a polyoxyalkylene group, such as a polyglycerol polyglycidyl ether and a polypropylene glycol diglycidyl ether; as well as a sorbitol polyglycidyl ether.

The chloromethyl group-containing compound is a compound having a chloromethyl group. Examples of the chloromethyl group-containing compound include, for example, a chloromethyl polystyrene.

The carboxyl group-containing compound is a compound having a carboxyl group. Examples of the carboxyl group-containing compound include, for example, a (poly)acrylic acid, and a (poly)methacrylic acid.

Specific examples of the ketone group-containing compound include, for example, a (poly)diacetone acrylamide, and diacetone alcohol.

Specific examples of the hydrazide compound include, for example, hydrazine, a carbohydrazide, and adipic acid hydrazide.

Specific examples of the melamine compound include, for example, a melamine resin and a methyl etherified melamine resin.

[Amount of Curing Agent]

The amount of the curing agent may be 0.1 parts by weight or more, 1 part by weight or more, 3 parts by weight or more, 5 parts by weight or more, 10 parts by weight or more, 15 parts by weight or more, 20 parts by weight or more, 50 parts by weight or more, 75 parts by weight or more, or 100 parts by weight or more, relative to 100 parts by weight of the hydrophobic compound (A), and may be 500 parts by weight or less, 300 parts by weight or less, 200 parts by weight or less, 100 parts by weight or less, 50 parts by weight or less, 40 parts by weight or less, 30 parts by weight or less, 20 parts by weight or less, 10 parts by weight or less, and 5 parts by weight or less.

{Other Component}

The composition may contain a component other than the aforementioned components. Examples of the other components include, for example, polysaccharides, a paper strengthening agent, an agglomerating agent, a yield improver, a coagulant, a binder resin, an anti-slip agent, a sizing agent, a paper strengthening agent, a filler, an antistatic agent, an antiseptic agent, an ultraviolet absorber, an antibacterial agent, a deodorant, and a fragrance. These may be used singly or in combination of two or more thereof.

In addition to the above components, as other components, for example, other water-repellent and/or oil-repellent agents, a dispersant, a texture modifier, a softening agent, a flame retarder, a coating material fixing agent, a wrinkle-resistant agent, a drying rate adjuster, a cross-linking agent, a film formation agent, a compatibilizer, an antifreezing agent, a viscosity adjuster, an ultraviolet absorber, an antioxidant, a pH adjuster, an insect repellent, an antifoaming agent, an anti-shrinkage agent, a laundry wrinkle-resistant agent, a shape retention agent, a drape retention agent, an ironing improving agent, a brightening agent, a whitening agent, fabric softening clay, a migration-proofing agent such as a polyvinylpyrrolidone, a polymer dispersant, a soil release agent, a scum dispersant, a fluorescent brightening agent such as 4,4-bis(2-sulfostyryl)biphenyldisodium (Tinopal CBS-X manufactured by Ciba Specialty Chemicals Plc), a dye fixing agent, an anti-color fading agent such as 1,4-bis(3-aminopropyl)piperazine, a stain removing agent, enzymes such as cellulase, amylase, protease, lipase, and keratinase as fiber surface modifiers, a foam inhibitor, and silk protein powder that can impart texture and functions of silk such as moisture absorption and release properties, and surface modified products or emulsified dispersions thereof (for example, K-50, K-30, K-10, A-705, S-702, L-710, FP series (Idemitsu Petrochemical Co., Ltd.), hydrolyzed silk liquid (Jomo), SILKGEN G Soluble S (ICHIMARU PHARCOS Co., Ltd.)), an antifouling agent (for example, a nonionic polymer compound composed of an alkylene terephthalate and/or an alkylene isophthalate units and a polyoxyalkylene unit (for example, FR627 manufactured by GOO CHEMICAL CO., LTD.), SRC-1 manufactured by Clariant (Japan), K. K.), can be compounded. These may be used singly or in combination of two or more thereof.

[Amount of Other Component]

Each amount or the total amount of other components may be 0.1 parts by weight or more, 1 part by weight or more, 3 parts by weight or more, 5 parts by weight or more, 10 parts by weight or more, 15 parts by weight or more, 20 parts by weight or more, 50 parts by weight or more, 75 parts by weight or more, or 100 parts by weight or more, relative to 100 parts by weight of the hydrophobic compound (A), and may be 500 parts by weight or less, 300 parts by weight or less, 200 parts by weight or less, 100 parts by weight or less, 50 parts by weight or less, 40 parts by weight or less, 30 parts by weight or less, 20 parts by weight or less, 10 parts by weight or less, or 5 parts by weight or less.

<Kit of additive for papermaking>

While the composition containing the hydrophobic compound (A) has been described above, a substrate may be treated with the hydrophobic compound (A1) and the hydrophobic compound (A2) in the form of a separate treatment

agent (a kit of additive for papermaking).

The kit of additive for papermaking of the present disclosure comprises a first agent and a second agent, wherein the first agent comprises a hydrophobic compound (A1) and the second agent comprises a hydrophobic compound (A2) which is different from the hydrophobic compound (A1), and the kit may be used by separately adding and mixing the first agent and the second agent to a pulp substrate. The first agent may be added to and mixed with the pulp substrate, and then the second agent may be added thereto and mixed therewith, or may be added in the reverse order.

The first agent and the second agent may include the components in the composition described above, and the same embodiments in the description of the above composition apply to the first agent and the second agent.

<Pulp composition>

The pulp composition in the present disclosure comprises pulp and a hydrophobic compound (A). The pulp composition in the present disclosure is obtained by treating pulp with the above composition containing the hydrophobic composition (A) as a treatment agent.

{Pulp}

The pulp composition contains pulp, and the pulp, which is a pulp substrate, is treated with the composition containing the hydrophobic compound (A) described above (treatment agent). The pulp substrate may be in the form of pulp alone, pulp slurry, or a pulp product. Examples of pulp substrates include bleached or unbleached chemical pulp such as kraft pulp or sulfite pulp; bleached or unbleached high-yield pulp such as groundwood pulp, mechanical pulp, or thermomechanical pulp; pulp slurry including the above pulp; and a pulp product such as paper, a paper container and a paper molded body made of wastepaper pulp such as wastepaper of newspapers, magazines and cardboard, or deinked wastepaper. Specific examples of the paper products include, for example, a food packaging material, a food container, gypsum liner board base paper, coated base paper, medium-quality paper, a general liner and core, neutral pure white roll paper, a neutral liner, a rustproof liner, and metal pasted paper, kraft paper, neutral printing writing paper, neutral coated base paper, neutral PPC paper, neutral thermal paper, neutral pressure-sensitive base paper, neutral inkjet paper and neutral information paper, and molded paper (mold container). Preferred examples of pulp products include a food packaging material and a food container, and in particular, a pulp formed article for food contact.

[Amount of pulp]

The amount of pulp may be 0.1% by weight or more, 0.5% by weight or more, 1% by weight or more, 3% by weight or more, 5% by weight or more, 10% by weight or more, 20% by weight or more, 30% by weight or more, 50% by weight or more, 75% by weight or more, or 90% by weight or more, and 99% by weight or less, 75% by weight or less, 50% by weight or less, 40% by weight or less, 30% by weight or less, 20% by weight or less, 10% by weight or less, 5% by weight or less, 4% by weight or less, or 3% by weight or less in the pulp composition. Typically, when the pulp composition is prepared by internal addition, the amount of pulp may be 30% by weight or less in the pulp composition; when the pulp composition is prepared by external addition, the amount of pulp may be 75% by weight or more in the pulp composition.

{Liquid medium}

The pulp composition may comprise a liquid medium. The liquid medium may be water, an organic solvent, or a mixture of water and an organic solvent. The liquid medium is typically an aqueous medium, and in particular, water. The liquid medium may comprise a liquid medium derived from repellent.

[Amount of liquid medium]

The amount of the liquid medium may be 0.1% by weight or more, 0.5% by weight or more, 1% by weight or more, 3% by weight or more, 5% by weight or more, 10% by weight or more, 20% by weight or more, 30% by weight or more, 50% by weight or more, 75% by weight or more, 90% by weight or more, or 95% by weight or more, and 99% by weight or less, 75% by weight or less, 50% by weight or less, 40% by weight or less, 30% by weight or less, 20% by weight or less, 10% by weight or less, 5% by weight or less, 4% by weight or less, or 3% by weight or less in the pulp composition. Typically, when the pulp composition is prepared by internal addition, the amount of the liquid medium is 50% by weight or more, and in particular 90% by weight or more in the pulp composition; when the pulp composition is prepared by external addition, the amount of the liquid medium may be 30% by weight or less, and in particular, 10% by weight or less in the pulp composition.

{Hydrophobic compound (A)}

The pulp composition may comprise the hydrophobic compound (A) in the treatment agent.

[Amount of hydrophobic compound (A)]

The amount of the treatment agent added to the pulp substrate may be adjusted to achieve the desired amount of the hydrophobic compound (A). The amount of the hydrophobic compound (A) may be 0.1% by weight or more, 0.3% by weight or more, 0.5% by weight or more, 0.75% by weight or more, 1.0% by weight or more, 2.0% by weight or more, or 3.0% by weight or more, and 10% by weight or less, 7.5% by weight or less, 5.0% by weight or less, 4.0% by weight or less, 3.0% by weight or less, 2.0% by weight or less, 1.0% by weight or less, 0.75% by weight or less, or 0.5% by weight or less, preferably 5.0% by weight or less, and more preferably 3.0% by weight or less relative to pulp.

In the external addition treatment, the amount of the hydrophobic compound (A) contained in the coating layer may be 0.01 $g/m^2$ or more, 0.03 $g/m^2$ or more, 0.05 $g/m^2$ or more, 0.1 $g/m^2$ or more, 0.3 $g/m^2$ or more, 0.5 $g/m^2$ or more, or 1.0 $g/m^2$ or more, and 5.0 $g/m^2$ or less, 4.0 $g/m^2$ or less, 3.0 $g/m^2$ or less, 2.0 $g/m^2$ or less, 1.0 $g/m^2$ or less, 0.5 $g/m^2$ or less, 0.3 $g/m^2$ or less, or 0.1 $g/m^2$ or less.

{Paper strength agent}

The pulp composition may comprise a paper strength agent. Examples of paper strength agents include:

a polyacrylamide-based paper strength agent such as cationic polyacrylamide, anionic polyacrylamide and amphoteric polyacrylamide;
a polysaccharide-based paper strength agent such as starch, enzyme modified starch, thermochemically modified starch, oxidized starch, esterified starch, etherified starch (e.g., hydroxyethylated starch), aldehyde starch, cationized starch, starch, xanthan gum, gum karaya, welan gum, guar gum, pectin, tamarind gum, carrageenan, chitosan, gum arabic, locust bean gum, cellulose, alginic acid, agar, dextran, cellulose, carboxymethylcellulose, hydroxyethylcellulose, hydroxypropylcellulose, chitin nanofiber, cellulose nanofiber and pullulan, and a modified polysaccharide thereof (e.g., a modified polysaccharide prepared by introducing a hydroxyl group or a cationic group thereinto);
a polyamide-based paper strength agent such as polyamide resin, polyamine resin, polyamide-polyamine resin, polyamide-epichlorohydrin resin, polyamide-polyamine-epichlorohydrin resin, polyamide-polyurea-formaldehyde resin and epoxidized polyamide resin;
a urea/melamine paper strength agent such as urea resin, melamine resin, urea-formaldehyde resin and melamine-formaldehyde resin;
a polyvinyl alcohol paper strength agent such as polyvinyl alcohol, completely saponified polyvinyl alcohol, partially saponified polyvinyl alcohol, carboxyl modified polyvinyl alcohol, silanol modified polyvinyl alcohol, cation modified polyvinyl alcohol and terminal alkyl modified polyvinyl alcohol; and
a styrene butadiene copolymer, polyvinyl acetate, a vinyl chloride-vinyl acetate copolymer, polyvinyl chloride, polyvinylidene chloride, polyacrylic ester, fatty acid diamide, polyethyleneimine resin and ketone aldehyde resin.
A polyacrylamide-based paper strength agent, a polysaccharide-based paper strength agent and a polyamide-based paper strength agent are preferred as the paper strength agent in the present disclosure.

[Amount of paper strength agent]

The amount of the paper strength agent may be 0.1% by weight or more, 0.3% by weight or more, 0.5% by weight or more, 0.75% by weight or more, 1.0% by weight or more, 2.0% by weight or more, or 3.0% by weight or more, and 10% by weight or less, 7.5% by weight or less, 5.0% by weight or less, 4.0% by weight or less, 3.0% by weight or less, 2.0% by weight or less, 1.0% by weight or less, 0.75% by weight or less, or 0.5% by weight or less, and is preferably 5.0% by weight or less based on the pulp.

{Sizing agent}

The pulp composition may comprise a sizing agent. Examples of sizing agents include a cationic sizing agent, an anionic sizing agent, a neutral sizing agent and an amphoteric sizing agent, a rosin-based sizing agent (for example, an acidic rosin-based sizing agent and a neutral rosin-based sizing agent), alkyl ketene dimer and alkenyl succinic anhydride.

[Amount of sizing agent]

The amount of the sizing agent may be 0.1% by weight or more, 0.2% by weight or more, 0.3% by weight or more, 0.5% by weight or more, 0.75% by weight or more, 1.0% by weight or more, 2.0% by weight or more, or 3.0% by weight or more, and 10% by weight or less, 7.5% by weight or less, 5.0% by weight or less, 4.0% by weight or less, 3.0% by weight or less, 2.0% by weight or less, 1.0% by weight or less, 0.75% by weight or less, or 0.5% by weight or less based on the pulp.

{Other additives}

The pulp composition may also include an additive used for producing a pulp product in addition to the above components, such as a fixing agent (e.g., aluminum sulfate), an organic acid (e.g., formic acid, acetic acid), an agglomerating agent, an yield improver, a dye, a fluorescent dye, a slime control agent, and an antifoaming agent. While the pulp composition includes a component derived from the composition containing the hydrophobic compound (A) (treatment agent), the respective components included in the composition containing the hydrophobic compound (A) described above may be added to the pulp composition as an additive.
The amount of the above additives may be, respectively, 0.1% by weight or more, 1% by weight or more, 3% by weight or more, 5% by weight or more, and 30% by weight or less, 20% by weight or less, 10% by weight or less, or 5% by weight or less relative to the pulp.

<Method for producing product>

The method for producing a product of the present disclosure may comprise a step of treating a substrate with the composition of the present disclosure including the hydrophobic composition (A) as a treatment agent (in particular, a repellent)
Substrate to be treated with the treatment agent in the present disclosure are not limited, and are preferably a fiber substrate, may be a textile substrate or a pulp substrate, and in particular, a pulp substrate.
Examples of substrates include an animal or plant natural fiber such as cotton, hemp, wool and silk, polyamide, a synthetic fiber such as polyamide, polyester, polyvinyl alcohol, polyacrylonitrile, polyvinyl chloride and polypropylene, a semi-synthetic fiber such as rayon and acetate, an inorganic fiber such as glass fiber, carbon fiber and asbestos fiber, and a mixed fiber thereof. Textile products include a woven fabric, a knitted fabric and a nonwoven fabric, a fabric in the form of clothing (e.g., water-repellent clothing, e.g., raincoats) and a carpet, but treatment may also be done on fibers, yarns and intermediate fiber products (e.g., slivers or coarse yarns) before being made into fabric.
Examples of substrates to be treated with the treatment agent according to the present disclosure are not limited to fiber substrates, but also include stone, a filter (e.g., an electrostatic filter), a dust mask, a fuel cell component (e.g., a gas diffusion electrode and a gas diffusion support), glass, wood, leather, fur, asbestos, brick, cement, metal and oxide, a ceramic product, plastics, a painted surface, and plaster.
When the substrate is glass, the glass product to be produced may be an optical component. Some layer (or film) may be formed on the surface (outermost layer) of the glass substrate, such as a hard coat layer or antireflection layer. Both a single-layer antireflection layer and a multilayer antireflection layer may be used for the antireflection layer. Examples of inorganic substances that can be used for the antireflection layer include $SiO_2$, SiO, $ZrO_2$, $TiO_2$, TiO, $Ti_2O_3$, $Ti_2O_5$, $Al_2O_3$, $Ta_2O_5$, $CeO_2$, MgO, $Y_2O_3$, $SnO_2$, $MgF_2$ and $WO_3$. These inorganic substances may be used alone or in combination of two or more (e.g., in a mixture). When forming a multilayer antireflection layer, it is preferable to use $SiO_2$ and/or SiO for the outermost layer. If the article to be produced is an optical glass component for a touch panel, it may have a thin film of transparent electrode, e.g., indium tin oxide (ITO) or indium zinc oxide, on part of the surface of the substrate (glass). The substrate may also have an insulating layer, an adhesive layer, a protective layer, a decorative frame layer (I-CON), an atomizing film layer, a hard coating film layer, a polarizing film, a phase difference film, and a liquid crystal display module, depending on its specific specifications and the like.

{Method for producing pulp product}

The method for producing a product of the present disclosure is preferably a method for producing a pulp product, and may comprise a step of treating a pulp substrate with a repellent. The pulp substrate is treated with a repellent to give a pulp composition. A pulp product may be obtained by subjecting the resulting pulp composition to processing such as drying, heating and forming according to need.
For the types and compositions of the pulp substrate and the repellent, the same embodiments in the description in the above [Pulp composition] apply. The composition of the present disclosure can be applied to a substrate as a treatment agent (particularly a repellent) by a conventionally known method. The treatment method may be a method for dispersing the repellent in the present disclosure in an organic solvent or water, if necessary, to dilute it and allowing it to

adhere to an inside of a pulp substrate and/or on a surface thereof and drying by a known method such as dip coating, spray coating, and foam coating. After drying, a pulp product to which a solid component of the repellent has been adhered, is obtained. If necessary, the repellent of the present disclosure may be applied in combination with a suitable cross-linking agent, and curing may be carried out. The concentration of the repellent in the treatment agent to be in contact with the pulp substrate, which may be changed depending on the purpose of use, may be 0.01 to 10% by weight, and for example, 0.05 to 5% by weight.

The repellent can be applied to a pulp substrate by any of methods known for treating a pulp substrate with liquid. The pulp substrate may be immersed in the repellent, the pulp substrate and the repellent may be mixed, or solution may be adhered or sprayed onto the pulp substrate. The treated pulp substrate is preferably dried and cured by heating in order to develop liquid-repellency. The heating temperature may be, for example, 100°C to 200°C, 100°C to 170°C, or 100°C to 120°C. In the present disclosure, the heating time may be 5 seconds to 60 minutes, for example, 30 seconds to 3 minutes.

As the method for treating a pulp substrate, an internal addition treatment method in which repellent is added to pulp before papermaking (e.g., pulp slurry), or an external addition treatment method in which repellent is applied to pulp after papermaking (e.g., a pulp product), can be employed. Examples of internal addition treatment methods include mixing and dipping, and the internal addition treatment method may include a step of adding a repellent to pulp slurry and mixing it with stirring. Examples of external treatment methods include spraying and coating, and more specifically a pound-type two-roll size press, a gate roll type size press and a rod metering type size press. The treatment may be external addition treatment or internal addition treatment. For example, when the pulp substrate is paper, the repellent may be applied to paper, or solution may be adhered or sprayed onto paper, or the repellent may be mixed with pulp slurry before papermaking to perform treatment.

The method of treatment may be internal addition treatment in which a repellent is added to pulp slurry before papermaking. The internal addition treatment may include, but is not limited to, one or more of a step of adding the repellent to pulp slurry and mixing it with stirring; a step of sucking and dehydrating the pulp composition prepared in the step through a net-like body of predetermined shape and depositing the pulp composition then to form a pulp formed article intermediate; and a step of molding and drying the pulp formed article intermediate by using a heated molding mold to obtain a pulp formed article. After having been lightly dried at room temperature or elevated temperature, the treated paper may be optionally subjected to heat treatment, depending on the nature of the paper. The temperature of the heat treatment may be 150°C or higher, 180°C or higher, or 210°C or higher, and may be 300°C or lower, 250°C or lower, or 200°C or lower, particularly 80°C to 180°C. Carrying out the heat treatment in such a temperature range enables exhibiting, for example, excellent oil resistance and water resistance. The pulp substrate which has undergone internal addition treatment may be subjected to external addition treatment to be treated with the repellent, allowing another wax and paper strength agent to be adhered to the surface.

The treatment method may be an external addition treatment in which repellent is applied to a pulp substrate after papermaking. The size press used in external addition treatment may be classified depending on the coating method as follows. One coating method involves supplying a coating liquid (size liquid) to a nip portion formed by passing paper between two rubber rolls, creating a pool of the coating liquid called a pond, and allowing the paper to pass through this pool to coat both sides of the paper with the size liquid, which is a method employed for a so-called pound-type two-roll size press. Another coating method is a method used for a gate roll type size press in which a size liquid is applied by a surface transfer type, and a rod metering type size press. In the pound-type two-roll size press, the size liquid easily penetrates into an inside of paper, and in the surface transfer type, a size liquid component is likely to stay on a surface of the paper. In the surface transfer type, a coating layer is likely to stay on a surface of paper more than in the pound-type two-roll size press, and the amount of coating layer formed on the surface is more than in the pound-type two-roll size press. In the present disclosure, even in the case of using the former pound-type two-roll size press, performance can be imparted to paper. After having been lightly dried at room temperature or elevated temperature, the paper treated in such a manner is arbitrarily accompanied by heat treatment that can have a temperature range of up to 300°C, for example up to 200°C, and particularly the temperature range of 80°C to 180°C, depending on the nature of the paper, as a result of which excellent oil resistance, and/or water resistance, and the like can be exhibited.

Embodiments have been described above, but it will be understood that various modifications can be made to embodiments and details without departing from the spirit and the scope of the claims.

Examples

Hereinafter, the present disclosure will be described in detail with reference to Examples, but the present disclosure is not limited to these Examples.

<Test Method>

The test procedures are as follows.

[Preparation of hydrophobic compound (A)]

A mixture obtained by melting and mixing the hydrophobic compound (A1) and the hydrophobic compound (A2) at the melting point or higher and allowing it to cool at room temperature was used as the hydrophobic compound (A).

[Preparation of mold]

Mold was formed using an automatic mold molding machine. In the lower part thereof, a net-like body was arranged on a pulp mold molding mold made of metal with many suction holes, a metal tank was arranged in the upper part, and pulp slurry was charged in the upper metal tank. From the opposite side of the pulp mold molding mold to the side where the net-like body was arranged, the pulp-containing aqueous composition was suctioned and dehydrated through the pulp mold molding mold and the net-like body in 0.1 to 1 MPa by a vacuum pump, and solids (pulp, etc.) contained in the pulp-containing aqueous composition were allowed to deposit on the net-like body to obtain a pulp mold intermediate. Next, the resulting pulp mold intermediate was dried by applying pressure of 0.1 to 1 MPa thereto from the tops and bottoms of male and female molding molds made of metal, which have been heated to 60 to 200°C. Thus, a pulp mold product formed into the shape of a container was produced.

[Practical oil-resistance test (25°C)]

Mold was pre-treated by storing under conditions of 23°C and a humidity of 50% for 12 hours. After pouring 100 ml of corn oil at 25°C into the mold and allowing it to stand at room temperature for 45 minutes, the corn oil was removed from the mold, and the degree of oil staining in the mold was evaluated. The evaluation scores were set as follows according to the degree of staining.

5: No stains inside the pulp mold.
4: Stains inside the pulp mold. No stains on the backside.
3: Stains the inside the pulp mold. Slight stain bleed out on the backside.
2: Stains inside the pulp mold. The area of stain bleed out to the backside is less than 50% of the total area.
1: Stains inside the pulp mold. The area of stain bleed out to the backside is 50% or more and less than 100% of the total area.
0: Stains over the backside.

[Practical oil-resistance test (65°C)]

Mold was pre-treated by storing under conditions of 23°C and a humidity of 50% for 12 hours. After pouring 100 ml of corn oil at 65°C into the mold and allowing it to stand at room temperature for 45 minutes, the corn oil was removed from the mold, and the degree of oil staining in the mold was evaluated. The evaluation scores were set as follows according to the degree of staining.

5: No stains inside the mold.
4: Stains inside the mold. No stains on the backside.
3: Stains inside the mold. Slight stain bleed out on the backside.
2: Stains inside the mold. The area of stain bleed out to the backside is less than 50% of the total area.
1: Stains inside the mold. The area of stain bleed out to the backside is 50% or more and less than 100% of the total area.
0: Stains over the backside

[Practical water-resistance test (100°C)]

Mold was pre-treated by storing under conditions of 23°C and a humidity of 50% for 12 hours. After pouring 100 ml of water at 100°C into the mold and allowing it to stand at room temperature for 30 minutes, the water was removed from the mold, and the degree of staining in the mold was evaluated. The evaluation scores were set as follows according to the degree of staining.

5: No stains inside the mold.
4: Stains inside the mold. No stains on the backside.
3: Stains inside the mold. Slight stain bleed out on the backside.
2: Stains inside the mold. The area of stain bleed out to the backside is less than 50% of the total area.

1: Stains inside the mold. The area of stain bleed out to the backside is 50% or more and less than 100% of the total area.
0: Stains over the backside.

[Hexadecane contact angle (HD contact angle)]

A solution (dispersion) of the hydrophobic compound (A1) or the hydrophobic compound (A2) with a solid concentration of 1.0% was prepared. The solution prepared was sonicated at 40°C for 60 minutes.

The solution (dispersion) was spin-coated on a silicon wafer under conditions of 2,500 rpm and 25 seconds to give a spin-coated film. This was heated at 140°C for 1 minute to give a silicon wafer treated with the compound. Chloroform was used as the solvent or the dispersion medium. 2 μL of HD (hexadecane) was dropped on the silicon wafer treated with the compound, and the static contact angle one second after the droplet reached the wafer was determined as the HD contact angle of the respective hydrophobic compounds.

[Water contact angle]

A solution (dispersion) of the hydrophobic compound (A1) or the hydrophobic compound (A2) with a solid concentration of 1.0% was prepared. The solution prepared was sonicated at 40°C for 60 minutes.

The solution (dispersion) was spin-coated on a silicon wafer under conditions of 2,500 rpm and 25 seconds to give a spin-coated film. This was heated at 140°C for 1 minute to give a silicon wafer treated with the compound. Chloroform was used as the solvent or the dispersion medium. 2 μL of water was dropped on the silicon wafer treated with the compound, and the static contact angle one second after the droplet reached the wafer was determined as the water contact angle of the respective hydrophobic compounds.

[Low temperature shift width of endothermic peak of hydrophobic compound (A1)]

The temperature of each of the hydrophobic compound (A) and the hydrophobic compound (A1) was increased from -20°C to 180°C at 10°C/ minute under a nitrogen atmosphere, and with the hydrophobic compound (A1) as the hydrophobic compound (A), the low temperature shift width (°C) of the endothermic peak of the hydrophobic compound (A1) at the highest temperature in the measurement range was determined.

[Method of measuring melting point]

The melting point was calculated by differential scanning calorimetry (DSC). In the DSC measurement, each sample was cooled to -20°C under nitrogen atmosphere (nitrogen flow rate 50 ml/ minute) at a rate of 10°C/ minute, and then the temperature was increased to 180°C at a rate of 10°C/ minute, and then the compound was cooled to -20°C at a rate of 10°C/ minute. After that, the endothermic peaks observed in the temperature increase process in the second step in which the temperature was increased at a rate of 10°C/ minute were measured.

[Method of calculating solubility parameter (SP value) by Fedors method]

For the solubility parameter (SP value) based on the Fedors method, the solubility parameter at 25°C was calculated according to the group contribution method of Fedors (addition of atomic groups) using the Fedors method (Polym. Eng. Sci., 14 (2), 147-154 (1974)).

[Test of penetration of compound]

The hydrophobic compound (A) was placed in an iron container 30 mm wide, 30 mm long, and 20 mm deep, heated at 180°C for 30 minutes to melt it, and then allowed to cool to 25°C to prepare a test piece. The penetration was measured according to JIS K 2235 6.4

[Penetration of residue]

An aqueous dispersion of the hydrophobic compound (A) was heated at 100°C for 2 days to remove the liquid medium from the hydrophobic compound (A) to give residue. The resulting residue was placed in a iron container 30 mm wide, 30 mm long, and 20 mm deep, heated at 180°C for 30 minutes to melt it, and then allowed to cool to 25°C to prepare a test piece. The penetration was measured according to JIS K 2235 6.4

[Method of measuring Shore A hardness of compound]

Each of the hydrophobic compound (A) and the hydrophobic compound (A1) was placed in a iron container 30 mm wide, 30 mm long, and 20 mm deep, heated at 180°C for 30 minutes to melt it, and then allowed to cool to 25°C to prepare a test piece. Shore A hardness after 1 second [1s], Shore A hardness after 3 seconds [3s] and Shore A hardness at the peak intensity [PEAK] were calculated using Durometer Type P2-A manufactured by KOBUNSHI KEIKI CO., LTD. The difference in Shore A hardness ([Shore A hardness of hydrophobic compound (A1)] - [Shore A hardness of hydrophobic compound (A)]) was also calculated from the results obtained.

[Method of measuring Shore A hardness of residue]

An aqueous dispersion of the hydrophobic compound (A) was heated at 100°C for 2 days to remove the liquid medium from the hydrophobic compound (A) to give residue. The resulting residue was placed in a iron container 30 mm wide, 30 mm long, and 20 mm deep, heated at 180°C for 30 minutes to melt it, and then allowed to cool to 25°C to prepare a test piece. Shore A hardness after 1 second [1s], Shore A hardness after 3 seconds [3s] and Shore A hardness at the peak intensity [PEAK] were calculated using Durometer Type P2-A manufactured by KOBUNSHI KEIKI CO., LTD.

<Example 1>

2 g of N,N'-ethylene bis(octadecanamide) (biobased content: 97%, melting point: 143°C, hexadecane contact angle: 36.1°, Fedors SP value: 9.6) as the hydrophobic compound (A1), 1.4 g of corn oil (Japan Corn Starch Co., Ltd., state at 25°C: liquid) as the hydrophobic compound (A2), 0.16 g of polyethylene glycol trimethylnonyl ether (HLB 13.1), and 0.04 g of polyethylene glycol trimethylnonyl ether (HLB 8.1) were mixed, melted and mixed by heating at 180°C for 30 minutes to give a solid.

10 g of water was added to the solid and the solid was pulverized by a spatula. Subsequently, 6.6 g of water was added thereto, and the mixture was treated by using a homogenizer at 10,000 rpm for 20 minutes to give a water-dispersion composition containing the hydrophobic compound (A) (volume abundance ratio of particles of 100 μm or larger 21%, volume median diameter 53.3 μm).

The water-dispersion composition was added to pulp slurry with a concentration of 0.5% by weight so that the ratio of the hydrophobic compound (A1) was 3% by weight in terms of solid content, relative to pulp, to prepare a pulp-containing aqueous composition. The pulp-containing aqueous composition was charged into an automatic mold molding machine to prepare a mold.

The mold was subjected to the practical oil-resistance test (25°C), the practical oil-resistance test (65°C) and the practical water-resistance test (100°C), all of which scored 4 points.

Shore A hardness-1 was measured by using a mixture prepared by mixing 70 parts by mass of corn oil (Japan Corn Starch Co., Ltd., state at 25°C: liquid) as the hydrophobic compound (A2), to 100 parts by mass of N,N'-ethylene bis(octadecanamide) (biobased content: 97%, melting point: 143°C, hexadecane contact angle: 36.1°, Fedors SP value: 9.6) as the hydrophobic compound (A1).

<Example 2>

A water-dispersion composition of a composition containing the hydrophobic compound (A) (volume abundance ratio of particles of 100 μm or larger 19%, volume median diameter: 47.9 μm) was prepared in the same manner as in Example 1 except for changing the amount of the corn oil as the hydrophobic compound (A2), to 0.70 g.

The water-dispersion composition was added to pulp slurry with a concentration of 0.5% by weight so that the ratio of the hydrophobic compound (A1) was 3% by weight in terms of solid content, relative to pulp, to prepare a pulp-containing aqueous composition. The pulp-containing aqueous composition was charged into an automatic mold molding machine to prepare a mold.

The mold was subjected to the practical oil-resistance test (25°C), the practical oil-resistance test (65°C) and the practical water-resistance test (100°C), all of which scored 4 points.

Shore A hardness-1 was measured by using a mixture prepared by mixing 35 parts by mass of corn oil (Japan Corn Starch Co., Ltd., state at 25°C: liquid) as the hydrophobic compound (A2), to 100 parts by mass of N,N'-ethylene bis(octadecanamide) (biobased content: 97%, melting point: 143°C, hexadecane contact angle: 36.1°, Fedors SP value: 9.6) as the hydrophobic compound (A1).

<Example 3>

A water-dispersion composition of a composition containing the hydrophobic compound (A) (volume abundance

ratio of particles of 100 μm or larger 23%, volume median diameter: 47.9 μm) was prepared in the same manner as in Example 1 except for changing the corn oil to triolein (state at 25°C: liquid, Fedors SP value: 8.93) as the hydrophobic compound (A2).

The water-dispersion composition was added to pulp slurry with a concentration of 0.5% by weight so that the ratio of the hydrophobic compound (A1) was 3% by weight in terms of solid content, relative to pulp, to prepare a pulp-containing aqueous composition. The pulp-containing aqueous composition was charged into an automatic mold molding machine to prepare a mold.

The mold was subjected to the practical oil-resistance test (25°C), the practical oil-resistance test (65°C) and the practical water-resistance test (100°C), all of which scored 4 points.

<Example 4>

A water-dispersion composition of a composition containing the hydrophobic compound (A) (volume abundance ratio of particles of 100 μm or larger 24%, volume median diameter: 49.3 μm) was prepared in the same manner as in Example 1 except for changing the corn oil to triolein (state at 25°C: liquid, Fedors SP value: 8.93) as the hydrophobic compound (A2), and changing the amount used to 0.70 g.

The water-dispersion composition was added to pulp slurry with a concentration of 0.5% by weight so that the ratio of the hydrophobic compound (A1) was 3% by weight in terms of solid content, relative to pulp, to prepare a pulp-containing aqueous composition. The pulp-containing aqueous composition was charged into an automatic mold molding machine to prepare a mold.

The mold was subjected to the practical oil-resistance test (25°C), the practical oil-resistance test (65°C) and the practical water-resistance test (100°C), all of which scored 4 points.

<Example 5>

A water-dispersion composition of a composition containing the hydrophobic compound (A) (volume abundance ratio of particles of 100 μm or larger 22%, volume median diameter 52.3 μm) was prepared in the same manner as in Example 1 except for changing the corn oil to trilinolein (state at 25°C: liquid, Fedors SP value: 8.951) as the hydrophobic compound (A2).

The water-dispersion composition was added to pulp slurry with a concentration of 0.5% by weight so that the ratio of the hydrophobic compound (A1) was 3% by weight in terms of solid content, relative to pulp, to prepare a pulp-containing aqueous composition. The pulp-containing aqueous composition was charged into an automatic mold molding machine to prepare a mold.

The mold was subjected to the practical oil-resistance test (25°C), the practical oil-resistance test (65°C) and the practical water-resistance test (100°C), all of which scored 4 points.

<Example 6>

A water-dispersion composition of a composition containing the hydrophobic compound (A) (volume abundance ratio of particles of 100 μm or larger 19%, volume median diameter 47.9 μm) was prepared in the same manner as in Example 1 except for changing the corn oil to trilinolein (state at 25°C: liquid, Fedors SP value: 8.951) as the hydrophobic compound (A2), and changing the amount used to 0.70 g.

The water-dispersion composition was added to pulp slurry with a concentration of 0.5% by weight so that the ratio of the hydrophobic compound (A1) was 3% by weight in terms of solid content, relative to pulp, to prepare a pulp-containing aqueous composition. The pulp-containing aqueous composition was charged into an automatic mold molding machine to prepare a mold.

The mold was subjected to the practical oil-resistance test (25°C), the practical oil-resistance test (65°C) and the practical water-resistance test (100°C), all of which scored 4 points.

<Example 7>

2 g of N,N'-ethylene bis(oleic acid amide) (biobased content: 97%, melting point: 116°C, hexadecane contact angle: 42.7°) as the hydrophobic compound (A1), 1.4 g of corn oil (Japan Corn Starch Co., Ltd., state at 25°C: liquid) as the hydrophobic compound (A2), 0.16 g of polyethylene glycol trimethylnonyl ether (HLB 13.1), and 0.04 g of polyethylene glycol trimethylnonyl ether (HLB 8.1) were mixed, melted and mixed by heating at 180°C for 30 minutes to give a solid.

10 g of water was added to the solid and the solid was pulverized by a spatula. Subsequently, 6.6 g of water was added thereto, and the mixture was treated by using a homogenizer at 10,000 rpm for 20 minutes to give a water-dispersion composition of a composition containing the hydrophobic compound (A) (volume abundance ratio of particles of 100 μm or larger 18%, volume median diameter 47.3 μm).

The water-dispersion composition was added to pulp slurry with a concentration of 0.5% by weight so that the

ratio of the hydrophobic compound (A1) was 7% by weight in terms of solid content, relative to pulp, to prepare a pulp-containing aqueous composition. The pulp-containing aqueous composition was charged into an automatic mold molding machine to prepare a mold.

The mold was subjected to the practical oil-resistance test (25°C) and the practical oil-resistance test (65°C), both of which scored 4 points.

<Example 8>

A water-dispersion composition of a composition containing the hydrophobic compound (A) (volume abundance ratio of particles of 100 μm or larger 19%, volume median diameter 46.2 μm) was prepared in the same manner as in Example 7 except for changing the amount of the corn oil as the hydrophobic compound (A2), to 0.70 g.

The water-dispersion composition was added to pulp slurry with a concentration of 0.5% by weight so that the ratio of the hydrophobic compound (A1) was 7% by weight in terms of solid content, relative to pulp, to prepare a pulp-containing aqueous composition. The pulp-containing aqueous composition was charged into an automatic mold molding machine to prepare a mold.

The mold was subjected to the practical oil-resistance test (25°C), the practical oil-resistance test (65°C) and the practical water-resistance test, all of which scored 4 points.

<Example 9>

A water-dispersion composition of a composition containing the hydrophobic compound (A) (volume abundance ratio of particles of 100 μm or larger 17%, volume median diameter 45.6 μm) was prepared in the same manner as in Example 1 except for changing the amount of the corn oil as the hydrophobic compound (A2), to 2.2 g.

The water-dispersion composition was added to pulp slurry with a concentration of 0.5% by weight so that the ratio of the hydrophobic compound (A1) was 3% by weight in terms of solid content, relative to pulp, to prepare a pulp-containing aqueous composition. The pulp-containing aqueous composition was charged into an automatic mold molding machine to prepare a mold.

The mold was subjected to the practical oil-resistance test (25°C), the practical oil-resistance test (65°C) and the practical water-resistance test, all of which scored 4 points.

<Example 10>

2 g of N,N'-ethylene bis(octadecanamide) (biobased content: 97%, melting point: 143°C, hexadecane contact angle: 36.1°) as the hydrophobic compound (A1), 1.4 g glyceryl tridecanoate (state at 25°C: liquid, Fedors SP value: 9.138) as the hydrophobic compound (A2), 0.16 g of polyethylene glycol trimethylnonyl ether (HLB 13.1), and 0.04 g of polyethylene glycol trimethylnonyl ether (HLB 8.1) were mixed, melted and mixed by heating at 180°C for 30 minutes to give a solid.

10 g of water was added to the solid and the solid was pulverized by a spatula. Subsequently, 6.6 g of water was added thereto, and the mixture was treated by using a homogenizer at 7,500 rpm for 20 minutes to give a water-dispersion composition of a composition containing the hydrophobic compound (A) (volume abundance ratio of particles of 100 μm or larger 23%, volume median diameter 40.35 μm).

The water-dispersion composition was added to pulp slurry with a concentration of 0.5% by weight so that the ratio of the hydrophobic compound (A1) was 5% by weight in terms of solid content, relative to pulp, to prepare a pulp-containing aqueous composition. The pulp-containing aqueous composition was charged into an automatic mold molding machine to prepare a mold.

The mold was subjected to the practical oil-resistance test (65°C), which scored 4 points.

<Example 11>

2 g of N,N'-ethylene bis(octadecanamide) (biobased content: 97%, melting point: 143°C, hexadecane contact angle: 36.1°) as the hydrophobic compound (A1), 1.4 g of glyceryl trioctanoate (state at 25°C: liquid, Fedors SP value: 9.251) as the hydrophobic compound (A2), 0.16 g of polyethylene glycol trimethylnonyl ether (HLB 13.1), and 0.04 g of polyethylene glycol trimethylnonyl ether (HLB 8.1) were mixed, melted and mixed by heating at 180°C for 30 minutes to give a solid.

10 g of water was added to the solid and the solid was pulverized by a spatula. Subsequently, 6.6 g of water was added thereto, and the mixture was treated by using a homogenizer at 7,500 rpm for 20 minutes to give a water-dispersion composition of a composition containing the hydrophobic compound (A) (volume abundance ratio of particles of 100 μm or larger 26%, volume median diameter: 57.06 μm).

The water-dispersion composition was added to pulp slurry with a concentration of 0.5% by weight so that the ratio of the hydrophobic compound (A1) was 5% by weight in terms of solid content, relative to pulp, to prepare a pulp-containing aqueous composition. The pulp-containing aqueous composition was charged into an automatic mold molding machine to prepare a mold.

The mold was subjected to the practical oil-resistance test (65°C), which scored 4 points.

<Example 12>

2 g of N,N'-ethylene bis(octadecanamide) (biobased content: 97%, melting point: 143°C, hexadecane contact angle: 36.1°) as the hydrophobic compound (A1), 1.4 g of tributyl trimellitate (state at 25°C: liquid, Fedors SP value: 10.185) as the hydrophobic compound (A2), 0.16 g of polyethylene glycol trimethylnonyl ether (HLB 13.1), and 0.04 g of polyethylene glycol trimethylnonyl ether (HLB 8.1) were mixed, melted and mixed by heating at 180°C for 30 minutes to give a solid.

10 g of water was added to the solid and the solid was pulverized by a spatula. Subsequently, 6.6 g of water was added thereto, and the mixture was treated by using a homogenizer at 7,500 rpm for 20 minutes to give a water-dispersion composition of a composition containing the hydrophobic compound (A) (volume abundance ratio of particles of 100 μm or larger 17%, volume median diameter: 44.58 μm).

The water-dispersion composition was added to pulp slurry with a concentration of 0.5% by weight so that the ratio of the hydrophobic compound (A1) was 5% by weight in terms of solid content, relative to pulp, to prepare a pulp-containing aqueous composition. The pulp-containing aqueous composition was charged into an automatic mold molding machine to prepare a mold.

The mold was subjected to the practical oil-resistance test (25°C), the practical oil-resistance test (65°C) and the practical water-resistance test (100°C), all of which scored 4 points.

<Example 13>

2 g of N,N'-ethylene bis(octadecanamide) (biobased content: 97%, melting point: 143°C, hexadecane contact angle: 36.1°) as the hydrophobic compound (A1), 0.7 g of sucrose oleic acid ester (state at 25°C: liquid, HLB: 1) as the hydrophobic compound (A2), 0.16 g of polyethylene glycol trimethylnonyl ether (HLB 13.1), and 0.04 g of polyethylene glycol trimethylnonyl ether (HLB 8.1) were mixed, melted and mixed by heating at 180°C for 30 minutes to give a solid.

10 g of water was added to the solid and the solid was pulverized by a spatula. Subsequently, 6.6 g of water was added thereto, and the mixture was treated by using a homogenizer at 7,500 rpm for 20 minutes to give a water-dispersion composition of a composition containing the hydrophobic compound (A) (volume abundance ratio of particles of 100 μm or larger 17%, volume median diameter: 44.58 μm).

The water-dispersion composition was added to pulp slurry with a concentration of 0.5% by weight so that the ratio of the hydrophobic compound (A1) was 5% by weight in terms of solid content, relative to pulp, to prepare a pulp-containing aqueous composition. The pulp-containing aqueous composition was charged into an automatic mold molding machine to prepare a mold.

The mold was subjected to the practical oil-resistance test (25°C) and the practical oil-resistance test (65°C), both of which scored 4 points.

<Example 14>

2 g of N,N'-ethylene bis(octadecanamide) (biobased content: 97%, melting point: 143°C, hexadecane contact angle: 36.1°) as the hydrophobic compound (A1), 0.7 g of sucrose erucic acid ester (state at 40°C: liquid, HLB: 2) as the hydrophobic compound (A2), 0.16 g of polyethylene glycol trimethylnonyl ether (HLB 13.1), and 0.04 g of polyethylene glycol trimethylnonyl ether (HLB 8.1) were mixed, melted and mixed by heating at 180°C for 30 minutes to give a solid.

10 g of water was added to the solid and the solid was pulverized by a spatula. Subsequently, 6.6 g of water was added thereto, and the mixture was treated by using a homogenizer at 7,500 rpm for 20 minutes to give a water-dispersion composition of a composition containing the hydrophobic compound (A) (volume abundance ratio of particles of 100 μm or larger 17%, volume median diameter: 44.58 μm).

The water-dispersion composition was added to pulp slurry with a concentration of 0.5% by weight so that the ratio of the hydrophobic compound (A1) was 5% by weight in terms of solid content, relative to pulp, to prepare a pulp-containing aqueous composition. The pulp-containing aqueous composition was charged into an automatic mold molding machine to prepare a mold.

The mold was subjected to the practical oil-resistance test (25°C) and the practical oil-resistance test (65°C), both of which scored 4 points.

<Example 15>

2 g of N,N'-ethylene bis(octadecanamide) (biobased content: 97%, melting point: 143°C, hexadecane contact angle: 36.1°) as the hydrophobic compound (A1), 0.7 g of decaglycerol decaoleic acid ester (polymerization degree 10, hydroxy substitution ratio: 10/12*100 [83.3%], state at 25°C: liquid, HLB: 3.3) as the hydrophobic compound (A2), 0.16 g of polyethylene glycol trimethylnonyl ether (HLB 13.1), and 0.04 g of polyethylene glycol trimethylnonyl ether (HLB 8.1) were mixed, melted and mixed by heating at 180°C for 30 minutes to give a solid.

10 g of water was added to the solid and the solid was pulverized by a spatula. Subsequently, 6.6 g of water was added thereto, and the mixture was treated by using a homogenizer at 7,500 rpm for 20 minutes to give a water-dispersion composition of a composition containing the hydrophobic compound (A) (volume abundance ratio of particles of 100 μm or larger 17%, volume median diameter: 44.58 μm).

The water-dispersion composition was added to pulp slurry with a concentration of 0.5% by weight so that the ratio of the hydrophobic compound (A1) was 5% by weight in terms of solid content, relative to pulp, to prepare a pulp-containing aqueous composition. The pulp-containing aqueous composition was charged into an automatic mold molding machine to prepare a mold.

The mold was subjected to the practical oil-resistance test (25°C) and the practical oil-resistance test (65°C), both of which scored 4 points.

<Example 16>

2 g of N,N'-ethylene bis(octadecanamide) (biobased content: 97%, melting point: 143°C, hexadecane contact angle: 36.1°) as the hydrophobic compound (A1), 0.7 g of hexaglycerol pentaoleic acid ester (polymerization degree 6, hydroxy substitution ratio: 5/8*100 [62.5%], state at 25°C: liquid, HLB: 4.7) as the hydrophobic compound (A2), 0.16 g of polyethylene glycol trimethylnonyl ether (HLB 13.1), and 0.04 g of polyethylene glycol trimethylnonyl ether (HLB 8.1) were mixed, melted and mixed by heating at 180°C for 30 minutes to give a solid.

10 g of water was added to the solid and the solid was pulverized by a spatula. Subsequently, 6.6 g of water was added thereto, and the mixture was treated by using a homogenizer at 7,500 rpm for 20 minutes to give a water-dispersion composition of a composition containing the hydrophobic compound (A) (volume abundance ratio of particles of 100 μm or larger 17%, volume median diameter 44.58 μm).

The water-dispersion composition was added to pulp slurry with a concentration of 0.5% by weight so that the ratio of the hydrophobic compound (A1) was 5% by weight in terms of solid content, relative to pulp, to prepare a pulp-containing aqueous composition. The pulp-containing aqueous composition was charged into an automatic mold molding machine to prepare a mold.

The mold was subjected to the practical oil-resistance test (25°C) and the practical oil-resistance test (65°C), both of which scored 4 points.

<Example 17>

2 g of N,N'-ethylene bis(octadecanamide) (biobased content: 97%, melting point: 143°C, hexadecane contact angle: 36.1°) as the hydrophobic compound (A1), 0.7 g of decaglycerol octaerucic acid ester (polymerization degree 10, hydroxy substitution ratio: 8/12*100 [66.7%], state at 25°C: liquid, HLB: 3.7) as the hydrophobic compound (A2), 0.16 g of polyethylene glycol trimethylnonyl ether (HLB 13.1), and 0.04 g of polyethylene glycol trimethylnonyl ether (HLB 8.1) were mixed, melted and mixed by heating at 180°C for 30 minutes to give a solid.

10 g of water was added to the solid and the solid was pulverized by a spatula. Subsequently, 6.6 g of water was added thereto, and the mixture was treated by using a homogenizer at 7,500 rpm for 20 minutes to give a water-dispersion composition of a composition containing the hydrophobic compound (A) (volume abundance ratio of particles of 100 μm or larger 17%, volume median diameter 44.58 μm).

The water-dispersion composition was added to pulp slurry with a concentration of 0.5% by weight so that the ratio of the hydrophobic compound (A1) was 5% by weight in terms of solid content, relative to pulp, to prepare a pulp-containing aqueous composition. The pulp-containing aqueous composition was charged into an automatic mold molding machine to prepare a mold.

The mold was subjected to the practical oil-resistance test (25°C) and the practical oil-resistance test (65°C), both of which scored 4 points.

<Example 18>

2 g of N,N'-ethylene bis(octadecanamide) (biobased content: 97%, melting point: 143°C, hexadecane contact angle: 36.1°) as the hydrophobic compound (A1), 1.4 g of diisononyl adipate (state at 25°C: liquid, Fedors SP value: 9.00)

as the hydrophobic compound (A2), 0.16 g of polyethylene glycol trimethylnonyl ether (HLB 13.1), and 0.04 g of polyethylene glycol trimethylnonyl ether (HLB 8.1) were mixed, melted and mixed by heating at 180°C for 30 minutes to give a solid.

10 g of water was added to the solid and the solid was pulverized by a spatula. Subsequently, 6.6 g of water was added thereto, and the mixture was treated by using a homogenizer at 7,500 rpm for 20 minutes to give a water-dispersion composition of a composition containing the hydrophobic compound (A) (volume abundance ratio of particles of 100 μm or larger 17%, volume median diameter 44.58 μm).

The water-dispersion composition was added to pulp slurry with a concentration of 0.5% by weight so that the ratio of the hydrophobic compound (A1) was 5% by weight in terms of solid content, relative to pulp, to prepare a pulp-containing aqueous composition. The pulp-containing aqueous composition was charged into an automatic mold molding machine to prepare a mold.

The mold was subjected to the practical oil-resistance test (25°C) and the practical oil-resistance test (65°C), both of which scored 4 points.

<Comparative Example 1>

2 g of N,N'-ethylene bis(octadecanamide) pulverized to an average particle size of 18 μm by dry pulverization (biobased content: 97%, melting point: 143°C, hexadecane contact angle: 36.1°) as the hydrophobic compound (A1), 0.16 g of polyethylene glycol trimethylnonyl ether (HLB 13.1), 0.04 g of polyethylene glycol trimethylnonyl ether (HLB 8.1) and 17.8 g of water were added and stirred to give a water-dispersion composition (volume abundance ratio of particles of 100 μm or larger: 4.3%, volume median diameter: 18 μm).

The water-dispersion composition was added to pulp slurry with a concentration of 0.5% by weight so that the ratio of the hydrophobic compound (A1) was 3% by weight in terms of solid content, relative to pulp, to prepare a pulp-containing aqueous composition. The pulp-containing aqueous composition was charged into an automatic mold molding machine to prepare a mold.

The mold was subjected to the practical oil-resistance test (25°C), the practical oil-resistance test (65°C) and the practical water-resistance test, and the score of the practical oil-resistance test (25°C) was 1 point.

The water-dispersion composition was added to pulp slurry with a concentration of 0.5% by weight so that the ratio of the hydrophobic compound (A1) was 5% by weight in terms of solid content, relative to pulp, to prepare a pulp-containing aqueous composition. The pulp-containing aqueous composition was charged into an automatic mold molding machine to prepare a mold.

The mold was subjected to the practical oil-resistance test (25°C), the practical oil-resistance test (65°C) and the practical water-resistance test, and the score of the practical oil-resistance test (25°C) was 1 point.

<Comparative Example 2>

2 g of N,N'-ethylene bis(oleic acid amide) pulverized to an average particle size of 7.4 μm by dry pulverization (biobased content: 97%, melting point: 116°C, hexadecane contact angle: 42.7°) as the hydrophobic compound (A1), 0.16 g of polyethylene glycol trimethylnonyl ether (HLB 13.1), 0.04 g of polyethylene glycol trimethylnonyl ether (HLB 8.1) and 17.8 g of water were added and stirred to give a water-dispersion composition (volume abundance ratio of particles of 100 μm or larger 1.4%, volume median diameter 7.8 μm).

The water-dispersion composition was added to pulp slurry with a concentration of 0.5% by weight so that the ratio of the hydrophobic compound (A1) was 3% by weight in terms of solid content, relative to pulp, to prepare a pulp-containing aqueous composition. The pulp-containing aqueous composition was charged into an automatic mold molding machine to prepare a mold.

The mold was subjected to the practical oil-resistance test (25°C), the practical oil-resistance test (65°C) and the practical water-resistance test, and the score of the practical oil-resistance test (25°C) was 1 point and the score of the practical oil-resistance test (65°C) was 4 points.

<Comparative Example 3>

A water-dispersion composition was prepared in the same manner as in Example 1 except for using tripropylene glycol (state at 25°C: liquid, octanol/ water partition coefficient: -0.50, Fedors SP value: 12.385) as a non-hydrophobic compound of a water-miscible liquid, instead of the hydrophobic compound (A2).

The water-dispersion composition was added to pulp slurry with a concentration of 0.5% by weight so that the ratio of the hydrophobic compound (A1) was 3% by weight in terms of solid content, relative to pulp, to prepare a pulp-containing aqueous composition. The pulp-containing aqueous composition was charged into an automatic mold molding machine to prepare a mold.

The mold was subjected to the practical oil-resistance test (25°C), which scored 1 point.

<Comparative Example 4>

A water-dispersion composition was prepared in the same manner as in Example 1 except for using tripropylene glycol (state at 25°C: liquid, octanol/water partition coefficient: - 0.50, Fedors SP value: 12.385) as a non-hydrophobic compound of a water-miscible liquid, instead of the hydrophobic compound (A2), and changing the amount used to 0.70 g.

The water-dispersion composition was added to pulp slurry with a concentration of 0.5% by weight so that the ratio of the hydrophobic compound (A1) was 3% by weight in terms of solid content, relative to pulp, to prepare a pulp-containing aqueous composition. The pulp-containing aqueous composition was charged into an automatic mold molding machine to prepare a mold.

The mold was subjected to the practical oil-resistance test (25°C), which scored 1 point.

<Comparative Example 5>

A water-dispersion composition was prepared in the same manner as in Example 1 except for using 3-methoxy-3-methyl-1-butanol (state at 25°C: liquid, octanol/ water partition coefficient: 1.07, Fedors SP value: 10.489) as a non-hydrophobic compound of a water-miscible liquid, instead of the hydrophobic compound (A2).

The water-dispersion composition was added to pulp slurry with a concentration of 0.5% by weight so that the ratio of the hydrophobic compound (A1) was 3% by weight in terms of solid content, relative to pulp, to prepare a pulp-containing aqueous composition. The pulp-containing aqueous composition was charged into an automatic mold molding machine to prepare a mold.

The mold was subjected to the practical oil-resistance test (25°C), which scored 1 point.

<Comparative Example 6>

A water-dispersion composition was prepared in the same manner as in Example 1 except for using 3-methoxy-3-methyl-1-butanol (state at 25°C: liquid, octanol/ water partition coefficient: 1.07, Fedors SP value: 10.489) as a non-hydrophobic compound of a water-miscible liquid, instead of the hydrophobic compound (A2), and changing the amount used to 0.70 g.

The water-dispersion composition was added to pulp slurry with a concentration of 0.5% by weight so that the ratio of the hydrophobic compound (A1) was 3% by weight in terms of solid content, relative to pulp, to prepare a pulp-containing aqueous composition. The pulp-containing aqueous composition was charged into an automatic mold molding machine to prepare a mold.

The mold was subjected to the practical oil-resistance test (25°C), which scored 1 point.

<Comparative Example 7>

2 g of paraffin wax (melting point 69.8°C) as the hydrophobic compound (A1), 0.2 g of polyethylene oxide alkyl ether (in which alkyl has 6 to 16 carbon atom, HLB: 7) and 17.8 g of water were mixed to give an aqueous dispersion. The aqueous dispersion was heated to 85°C and then treated by a ultrasonic homogenizer for 20 minutes to give a water-dispersion composition. The resulting water-dispersion composition had the following properties.

Median diameter D50: 0.8 $\mu$m
Volume abundance ratio of particle with particle size of 100 $\mu$m or larger: 0%
Volume abundance ratio of particle with particle size of 10 $\mu$m or larger: 12%

The water-dispersion composition of the hydrophobic compound (A1) was added to pulp slurry with a concentration of 0.5% by weight so that the ratio of the hydrophobic compound (A1) was 10% by weight in terms of solid content, relative to pulp, to prepare a pulp-containing aqueous composition. The pulp-containing aqueous composition was charged into an automatic mold molding machine to prepare a mold. The mold was subjected to the practical oil-resistance test (25°C), which scored 1 point.

<Examples 19 to 24/Comparative Example 8>

The tests were performed in the same manner as in Example 1 except for preparing the hydrophobic compound (A) with the composition shown in Table 3.

The results are summarized in the following tables.

[Table 1]

| | | | Example | | | | | | | | | | | | Comparative Example | | | | | |
|---|---|---|---|---|---|---|---|---|---|---|---|---|---|---|---|---|---|---|---|---|
| | | | 1 | 2 | 3 | 4 | 5 | 6 | 7 | 8 | 9 | 10 | 11 | 12 | 1 | 2 | 3 | 4 | 5 | 6 |
| Hydrophobic Compound (A1) | N,N'-ethylenebis(octadecanamide) | g | 2 | 2 | 2 | 2 | 2 | 2 | - | - | 2 | 2 | 2 | 2 | 2 | - | 2 | 2 | 2 | 2 |
| | | Part(s) by mass (wt%) | 100 | 100 | 100 | 100 | 100 | 100 | - | - | 100 | 100 | 100 | 100 | 100 | - | 100 | 100 | 100 | 100 |
| | N,N'-ethylenebis(oleic acid amide) | g | - | - | - | - | - | - | 2 | 2 | - | - | - | - | - | 2 | - | - | - | - |
| | | Part(s) by mass (wt%) | - | - | - | - | - | - | 100 | 100 | - | - | - | - | - | 100 | - | - | - | - |
| Hydrophobic Compound (A2) | Corn oil | g | 1.4 | 0.7 | - | - | - | - | 1.4 | 0.7 | 2.2 | - | - | - | - | - | - | - | - | - |
| | | Part(s) by mass (wt%) | 70 | 35 | - | - | - | - | 70 | 35 | 1.1 | - | - | - | - | - | - | - | - | - |
| | Triolein | g | - | - | 1.4 | 0.7 | - | - | - | - | - | - | - | - | - | - | - | - | - | - |
| | | Part(s) by mass (wt%) | - | - | 70 | 35 | - | - | - | - | - | - | - | - | - | - | - | - | - | - |
| | Trilinolein | g | - | - | - | - | 1.4 | 0.7 | - | - | - | - | - | - | - | - | - | - | - | - |
| | | Part(s) by mass (wt%) | - | - | - | - | 70 | 35 | - | - | - | - | - | - | - | - | - | - | - | - |
| | Glyceryl tridecanoate | g | - | - | - | - | - | - | - | - | - | 1.4 | - | - | - | - | - | - | - | - |
| | | Part(s) by mass (wt%) | - | - | - | - | - | - | - | - | - | 70 | - | - | - | - | - | - | - | - |
| | Glyceryl trioctanoate | g | - | - | - | - | - | - | - | - | - | - | 1.4 | - | - | - | - | - | - | - |
| | | Part(s) by mass (wt%) | - | - | - | - | - | - | - | - | - | - | 70 | - | - | - | - | - | - | - |
| | Tributyl trimellitate | g | - | - | - | | - | - | - | - | - | - | - | 1.4 | - | - | - | - | - | - |
| | | Part(s) by mass (wt%) | - | - | - | | - | - | - | - | - | - | - | 70 | - | - | - | - | - | - |
| Comparative compound | Tripropylene glycol | g | - | - | - | - | - | - | - | - | - | - | - | - | - | - | 1.4 | 0.7 | - | - |
| | | Part(s) by mass (wt%) | - | - | - | - | - | - | - | - | - | - | - | - | - | - | 70 | 35 | - | - |
| | 3-methoxy-3-methyl-1-butanol | g | - | - | - | - | - | - | - | - | - | - | - | - | - | - | - | - | 1.4 | 0.7 |
| | | Part(s) by mass (wt%) | - | - | - | - | - | - | - | - | - | - | - | - | - | - | - | - | 70 | 35 |
| Results of evaluation | Practical oil-resistance test (25°C) | Score (point(s)) | 4 | 4 | 4 | 4 | 4 | 4 | 4 | 4 | 4 | - | - | 4 | 1 | 1 | 1 | 1 | 1 | 1 |
| | Practical oil-resistance test (65°C) | Score (point(s)) | 4 | 4 | 4 | 4 | 4 | 4 | 4 | 4 | 4 | 4 | 4 | 4 | 4 | 4 | - | - | - | - |
| | Practical water-resistance test (100°C) | Score (point(s)) | 4 | 4 | 4 | 4 | 4 | 4 | - | - | - | - | - | 4 | - | - | - | - | - | - |
| | Shore A hardness of hydrophobic compound (A) | Shore A hardness [1s] | 10.9 | 2.9 | 4.3 | 23.6 | 13.4 | 24.2 | 19.2 | 43.3 | 13.8 | 13.6 | 11.2 | 20.5 | 80.9 | 73.1 | - | - | - | - |
| | | Shore A hardness [3s] | 10.3 | 3.2 | 4 | 23.7 | 12.6 | 23.6 | 17.9 | 43.1 | 13.4 | 12.9 | 11 | 20.4 | 80.7 | 72.4 | - | - | - | - |
| | | Shore A hardness [PEAK] | 13.4 | 11.6 | 4.6 | 26.2 | 16 | 33.9 | 22.3 | 44.1 | 15.4 | 15.4 | 13.3 | 22.1 | 81.1 | 73.4 | - | - | - | - |
| | [Shore A hardness of hydrophobic compound (A1)]-[Shore A hardness of hydrophobic compound (A)] | Shore A hardness [1s] | 70.0 | 78.0 | 76.6 | 57.3 | 67.5 | 56.7 | 53.9 | 29.8 | 67.1 | 67.3 | 69.7 | 60.4 | - | - | - | - | - | - |
| | | Shore A hardness [3s] | 70.4 | 77.5 | 76.7 | 57 | 68.1 | 57.1 | 54.5 | 29.3 | 67.3 | 67.8 | 69.7 | 60.3 | - | - | - | - | - | - |
| | | Shore A hardness [PEAK] | 67.7 | 69.5 | 76.5 | 54.9 | 65.1 | 47.2 | 51.1 | 29.3 | 65.7 | 65.7 | 67.8 | 59 | - | - | - | - | - | - |
| | Shore A hardness of residue | Shore A hardness [1s] | 18.2 | 46.13 | 8.4 | 17.3 | - | 49.5 | 18.9 | 43.1 | 13.5 | 11.3 | 10.4 | 7 | 80.5 | 72.3 | - | - | - | - |
| | | Shore A hardness [3s] | 17.4 | 45.98 | 8 | 16.8 | - | 45.8 | 17.6 | 42.9 | 13.2 | 11.1 | 9.8 | 6.9 | 80.1 | 71.3 | - | - | - | - |
| | | Shore A hardness [PEAK] | 22.4 | 46.65 | 12.9 | 21.3 | - | 56.1 | 21.9 | 43.6 | 15.2 | 13.3 | 12.4 | 7.1 | 80.9 | 72.6 | - | - | - | - |
| | Low temperature shift width of endothermic peak of hydrophobic compound (A1) | °C | 6.2 | 4.2 | 7.7 | 5 | - | 3.8 | 6.8 | 10.4 | 7.7 | 6.4 | 7.2 | 9.4 | - | - | 80.8 | - | - | - |

[Table 2]

| | | | Example | | | | | | Comparative Example |
|---|---|---|---|---|---|---|---|---|---|
| | | | 13 | 14 | 15 | 16 | 17 | 18 | 7 |
| Hydrophobic compound (A1) | N,N'-ethylenebis(octadecanamide) | g | 2 | 2 | 2 | 2 | 2 | 2 | - |
| | | Part(s) by mass (wt%) | 100 | 100 | 100 | 100 | 100 | 100 | - |
| | Paraffin wax | g | - | - | - | - | - | - | 2 |
| | | Part(s) by mass (wt%) | - | - | - | - | - | - | 100 |

(continued)

| | | | Example | | | | | | Comparative Example |
|---|---|---|---|---|---|---|---|---|---|
| | | | 13 | 14 | 15 | 16 | 17 | 18 | 7 |
| Hydrophobic compound (A2) | Sucrose oleic acid ester (HLB: 1) | g | 0.7 | - | - | - | - | - | - |
| | | Part(s) by mass (wt%) | 35 | - | - | - | - | - | - |
| | Sucrose erucic acid ester (HLB: 2) | g | - | 0.7 | - | - | - | - | - |
| | | Part(s) by mass (wt%) | - | 35 | - | - | - | - | - |
| | Decaglycerol decaoleic acid ester (HLB: 3.3) | g | - | - | 0.7 | - | - | - | - |
| | | Part(s) by mass (wt%) | - | - | 35 | - | - | - | - |
| | Hexaglycerol pentaoleic acid ester (HLB: 4.7) | g | - | - | - | 0.7 | - | - | - |
| | | Part(s) by mass (wt%) | - | - | - | 35 | - | - | - |
| | Decaglycerol octaerucic acid ester (HLB: 3.7) | g | - | - | - | - | 0.7 | - | - |
| | | Part(s) by mass (wt%) | - | - | - | - | 35 | - | - |
| | Diisononyl adipate | g | - | - | - | - | - | 1.4 | - |
| | | Part(s) by mass (wt%) | - | - | - | - | - | 70 | - |

(continued)

| | | | Example | | | | | | Comparative Example |
|---|---|---|---|---|---|---|---|---|---|
| | | | 13 | 14 | 15 | 16 | 17 | 18 | 7 |
| Results of evaluation | Practical oil-resistance test (25°C) | Score (point(s)) | 4 | 4 | 4 | 4 | 4 | 4 | 1 |
| | Practical oil-resistance test (65°C) | Score (point(s)) | 4 | 4 | 4 | 4 | 4 | 4 | - |
| | Shore A hardness of hydrophobic compound (A) | Shore A hardness [1s] | 17 | 31.1 | 34.9 | 26.3 | 26.6 | 15 | 11.7 |
| | | Shore A hardness [3s] | 15.3 | 28.2 | 34 | 24.2 | 24.8 | 14.8 | 7.7 |
| | | Shore A hardness [PEAK] | 30.9 | 38.6 | 41.2 | 33.5 | 33.5 | 15.5 | 46.8 |
| | [Shore A hardness of hydrophobic compound (A1)]-[Shore A hardness of hydrophobic compound (A)] | Shore A hardness [1s] | 63.9 | 49.8 | 46 | 54.6 | 54.3 | 65.9 | - |
| | | Shore A hardness [3s] | 65.4 | 52.5 | 46.7 | 56.5 | 55.9 | 65.9 | - |
| | | Shore A hardness [PEAK] | 50.2 | 42.5 | 39.9 | 47.5 | 47.6 | 65.6 | - |
| | Shore A hardness of residue | Shore A hardness [1s] | 28.4 | 19 | 19.4 | 33 | 21.2 | 15.5 | - |
| | | Shore A hardness [3s] | 24.6 | 16.7 | 17.2 | 29.7 | 19.9 | 15.7 | - |
| | | Shore A hardness [PEAK] | 37.8 | 24 | 28.8 | 45.9 | 23.3 | 16.5 | - |
| | Low temperature shift width of endothermic peak of hydrophobic compound (A1) | °C | 4.5 | 5.1 | 4.2 | 4.3 | 4.5 | 11.7 | - |

[Table 3]

| | | | Example | | | | | | Comparative Example |
|---|---|---|---|---|---|---|---|---|---|
| | | | 19 | 20 | 21 | 22 | 23 | 24 | 8 |
| Hydrophobic compound (A1) | N,N'-ethylenebis(octadecanamide) | g | - | - | - | 2 | 2 | 2 | - |
| | | Part(s) by mass (wt%) | - | - | - | 100 | 100 | 100 | - |
| | N,N'-ethylenebis(oleic acid amide) | g | 2 | - | - | - | - | - | - |
| | | Part(s) by mass (wt%) | 100 | - | - | - | - | - | - |
| | m-xylylenebis [12-hydroxyoctadecanamide] | g | - | 2 | - | - | - | - | 2 |
| | | Part(s) by mass (wt%) | - | 100 | - | - | - | - | 100 |
| | Paraffin wax | g | - | - | 2 | - | - | - | - |
| | | Part(s) by mass (wt%) | - | - | 100 | - | - | - | - |
| Hydrophobic compound (A2) | Triolein | g | 1.4 | - | - | - | - | - | - |
| | | Part(s) by mass (wt%) | 70 | - | - | - | - | - | - |
| | Tributyl trimellitate | g | - | 1.4 | - | - | - | - | - |
| | | Part(s) by mass (wt%) | - | 70 | - | - | - | - | - |
| | Decaglycerol decaoleic acid ester | g | - | - | 1.4 | - | - | - | - |
| | | Part(s) by mass (wt%) | - | - | 70 | - | - | - | - |
| | Sucrose lauric acid ester (HLB: 1) | g | - | - | - | 1.4 | - | - | - |
| | | Part(s) by mass (wt%) | - | - | - | 70 | - | - | - |
| | Sucrose oleic acid ester (HLB: 1) | g | - | - | - | - | 1.4 | - | - |
| | | Part(s) by mass (wt%) | - | - | - | - | 70 | - | - |
| | Sucrose stearic acid ester (HLB: 1 or less) | g | - | - | - | - | - | 1.4 | - |
| | | Part(s) by mass (wt%) | - | - | - | - | - | 70 | - |

(continued)

| | | | Example | | | | | | Comparative Example |
|---|---|---|---|---|---|---|---|---|---|
| | | | 19 | 20 | 21 | 22 | 23 | 24 | 8 |
| Results of evaluation | Practical oil-resistance test (25°C) | Score (point(s)) | 3 | 3 | 3 | 4 | 4 | 4 | 1 |
| | Practical oil-resistance test (65°C) | Score (point(s)) | 4 | 4 | 3 | 4 | 4 | 4 | 4 |
| | Shore A hardness of Hydrophobic compound (A) | Shore A hardness [1s] | 9.8 | 4.8 | 2.0 | 21.6 | 67.9 | 63.0 | 59.4 |
| | | Shore A hardness [3s] | 9.0 | 7.0 | 2.6 | 12.6 | 67.9 | 63.0 | 59.4 |
| | | Shore A hardness [PEAK] | 12.3 | 9.8 | 12.8 | 48.8 | 67.9 | 63.1 | 59.4 |
| | [Shore A hardness of hydrophobic compound (A1)]-[Shore A hardness of hydrophobic compound (A)] | Shore A hardness [1s] | 63.3 | 54.6 | 9.7 | 59.3 | 13.0 | 17.9 | - |
| | | Shore A hardness [3s] | 63.4 | 52.4 | 5.1 | 68.1 | 12.8 | 17.7 | - |
| | | Shore A hardness [PEAK] | 61.1 | 49.6 | 34.0 | 32.3 | 13.2 | 18.0 | - |
| | Shore A hardness of residue | Shore A hardness [1s] | - | - | - | - | - | - | - |
| | | Shore A hardness [3s] | - | - | - | - | - | - | - |
| | | Shore A hardness [PEAK] | - | - | - | - | - | - | - |
| | Low temperature shift width of endothermic peak of hydrophobic compound (A1) | °C | 15 | 8.95 | 0.74 | 7.0 | 5.3 | 5.1 | - |

Properties of the compounds are summarized in the following table.

[Table 4]

| | | Melting point (°C) | Contact angle | | Fedors SP value |
|---|---|---|---|---|---|
| | | | Water (°) | H.D. (°) | SP value |
| Hydrophobic compound (A1) | N,N'-ethylenebis(octadecanamide) | 146.0 | 85 | 36.1 | 9.6 |
| | N,N'-ethylenebis(oleic acid amide) | 116.5 | 103.4 | 42.7 | 9.63 |

(continued)

| | | Melting point (°C) | Contact angle | | Fedors SP value |
|---|---|---|---|---|---|
| | | | Water (°) | H.D. (°) | SP value |
| Hydrophobic compound (A2) | Corn oil | 20 or less | - | - | - |
| | Triolein | 20 or less | - | - | 8.93 |
| | Trilinolein | 20 or less | - | - | 8.951 |
| | Glyceryl tripalmitate | 20°C or less | - | - | 8.971 |
| | Glyceryl tridecanoate | 20 or less | - | - | 9.138 |
| | Glyceryl trioctanoate | 20 or less | - | - | 9.251 |
| | Glyceryl tri(2-ethylhexanoate) | 20 or less | - | - | 9.1 |
| | Ethyl linoleate | 20 or less | - | - | 8.642 |
| | Tributyl trimellitate | 20 or less | - | - | 10.185 |
| | Purified castor oil | 20 or less | - | - | 10.178 |
| | Nonyl adipate | 20 or less | - | - | 9.003 |
| | Heptyl adipate | 20 or less | - | - | 9.08 |
| | Tris(2-ethylhexyl) trimellitate | 20 or less | - | - | 9.489 |
| Comparative compound | Tripropylene glycol | 20 or less | - | - | 12.385 |
| | 3-methoxy-3-methyl-1-butanol | 20 or less | - | - | 10.489 |

**Claims**

1. A composition comprising a hydrophobic compound (A) consisting of a hydrophobic compound (A1) and a hydrophobic compound (A2) which is different from the hydrophobic compound (A1), wherein
an endothermic peak in differential scanning calorimetry of the hydrophobic compound (A1) is shifted to a lower temperature by 0.5°C or more and 80°C or less in differential scanning calorimetry of the hydrophobic compound (A).

2. The composition according to claim 1, wherein the composition is a water-dispersion composition.

3. The composition according to claim 1 or 2, wherein the composition is a repellent.

4. The composition according to any one of claims 1 to 3, wherein the hydrophobic compound (A1) has a hexadecane contact angle of 30° or more.

5. The composition according to any one of claims 1 to 4, wherein the endothermic peak is a melting peak of the hydrophobic compound (A1).

6. The composition according to any one of claims 1 to 5, wherein the hydrophobic compound (A1) and the hydrophobic compound (A2) are each independently a compound having a hydrocarbon group having 6 or more and 40 or less carbon atoms.

7. The composition according to any one of claims 1 to 6, wherein the hydrophobic compound (A1) and the hydrophobic compound (A2) are each independently a compound selected from the group consisting of a modified body of amine, a modified body of polyol, a modified body of polycarboxylic acid and another liquid or solid oil.

8. The composition according to any one of claims 1 to 7, wherein

   the hydrophobic compound (A1) has an amide structure, and
   the hydrophobic compound (A2) has no amide structure.

**9.** The composition according to any one of claims 1 to 8, wherein

the hydrophobic compound (A1) is a compound selected from the group consisting of a modified body of amine, a modified body of polyol, a modified body of polycarboxylic acid, paraffin wax and microcrystalline wax;
the modified body of amine is a compound which has an amine backbone and one or more groups represented by the following formula:

$$-Y^N-Z^N{}_n$$

wherein $Y^N$ is a 1+n valent group composed of one or more selected from the group consisting of $Y^{N1}$ and $Y^{N2}$,
$Y^{N1}$ is a group composed of one or more selected from the group consisting of a direct bond, -O-, -C(=O)-, -C(=NR')-, - C(=S)-, -S-, $-S(=O)_2-$, -NR'-, -C(OR')R'-, $-C(OR')(-)_2$ and $-N(-)_2$, wherein R' is independently at each occurrence a hydrogen atom or a hydrocarbon group having 1 to 30 carbon atoms,
$Y^{N2}$ is a group composed of one or more selected from the group consisting of a divalent to tetravalent aliphatic hydrocarbon group having 1 to 40 carbon atoms and optionally having a substituent, a divalent to tetravalent hydrocarbon aromatic ring optionally having a substituent, and a divalent to tetravalent heterocyclic ring optionally having a substituent,
$Z^N$ is a monovalent hydrocarbon group having 1 or more and 40 or less carbon atoms and optionally having a substituent or a monovalent polysiloxane group, and
n is an integer of 1 or more and 3 or less, and
in which at least one $-Y^N-Z^N{}_n$ is bonded to the nitrogen atom of the amine backbone;
the modified body of polyol is a compound formed by replacing one or more hydroxy groups in the polyol with a group represented by the following formula:

$$-Y^O-Z^O{}_n$$

wherein $Y^O$ is a 1+n valent group composed of one or more selected from the group consisting of $Y^{O1}$ and $Y^{O2}$,
$Y^{O1}$ is a group composed of one or more selected from the group consisting of a direct bond, -O-, -C(=O)-, -C(=NR')-, - C(=S)-, -S-, $-S(=O)_2-$, -NR'-, -C(OR')R'-, $-C(OR')(-)_2$ and $-N(-)_2$, wherein R' is independently at each occurrence a hydrogen atom or a hydrocarbon group having 1 to 30 carbon atoms,
$Y^{O2}$ is a group composed of one or more selected from the group consisting of a divalent to tetravalent aliphatic hydrocarbon group having 1 to 40 carbon atoms and optionally having a substituent, a divalent to tetravalent hydrocarbon aromatic ring optionally having a substituent, and a divalent to tetravalent heterocyclic ring optionally having a substituent,
$Z^O$ is a monovalent hydrocarbon group having 1 or more and 40 or less carbon atoms and optionally having a substituent or a monovalent polysiloxane group, and
n is an integer of 1 or more and 3 or less;
the modified body of polycarboxylic acid is a compound formed by replacing a hydroxy group in one or more carboxyl groups in the polycarboxylic acid with a group represented by the following formula:

$$-Y^C-Z^C{}_n$$

wherein $Y^C$ is a 1+n valent group composed of one or more selected from the group consisting of $Y^{C1}$ and $Y^{C2}$,
$Y^{C1}$ is a group composed of one or more selected from the group consisting of a direct bond, -O-, -C(=O)-, -C(=NR')-, - C(=S)-, -S-, $-S(=O)_2-$, -NR'-, -C(OR')R'-, $-C(OR')(-)_2$ and $-N(-)_2$, wherein R' is independently at each occurrence a hydrogen atom or a hydrocarbon group having 1 to 30 carbon atoms,
$Y^{C2}$ is a group composed of one or more selected from the group consisting of a divalent to tetravalent aliphatic hydrocarbon group having 1 to 40 carbon atoms and optionally having a substituent, a divalent to tetravalent hydrocarbon aromatic ring optionally having a substituent, and a divalent to tetravalent heterocyclic ring optionally having a substituent,
$Z^C$ is a monovalent hydrocarbon group having 1 or more and 40 or less carbon atoms and optionally having a substituent or a monovalent polysiloxane group, and
n is an integer of 1 or more and 3 or less.

**10.** The composition according to any one of claims 1 to 9, wherein

the hydrophobic compound (A2) has a hydrocarbon group having 3 or more carbon atoms, and
a melting point of the hydrophobic compound (A2) is 40°C or less.

**11.** The composition according to any one of claims 1 to 10, wherein

a melting point of the hydrophobic compound (A1) is 50°C or more, and
the melting point of the hydrophobic compound (A2) is 40°C or less.

**12.** The composition according to any one of claims 1 to 11, wherein the melting point of the hydrophobic compound (A1) is 30°C or more higher than the melting point of the hydrophobic compound (A2).

**13.** The composition according to any one of claims 1 to 12, wherein the amount of the hydrophobic compound (A1) is 15% by weight or more and 95% by weight or less based on the hydrophobic compound (A)

**14.** The composition according to any one of claims 1 to 13, wherein the amount of the hydrophobic compound (A2) is 5 parts by weight or more and 500 parts by weight or less based on 100 parts by weight of the hydrophobic compound (A1).

**15.** The composition according to any one of claims 1 to 14, wherein

the composition comprises a dispersant, and
the amount of the dispersant is 0.1 parts by weight or more and 100 parts by weight or less based on 100 parts by weight of the hydrophobic compound (A).

**16.** A kit of additive for papermaking, comprising a first agent and a second agent, wherein

the first agent comprises a hydrophobic compound (A1), and
the second agent comprises a hydrophobic compound (A2) which is different from the hydrophobic compound (A1),
wherein an endothermic peak in differential scanning calorimetry of the hydrophobic compound (A1) is shifted to a lower temperature by 0.5°C or more and 80°C or less in differential scanning calorimetry of the hydrophobic compound (A), and
wherein the kit is used by separately adding and mixing the first agent and the second agent to a pulp substrate.

**17.** A product comprising:

a substrate, and
a hydrophobic compound (A) consisting of a hydrophobic compound (A1) and a hydrophobic compound (A2) which is different from the hydrophobic compound (A1),
wherein an endothermic peak in differential scanning calorimetry of the hydrophobic compound (A1) is shifted to a lower temperature by 0.5°C or more and 80°C or less in differential scanning calorimetry of the hydrophobic compound (A) .

**18.** The product according to claim 17, wherein

the substrate is a pulp substrate, and
the product is a pulp product.

**19.** A method for producing a product, comprising treating a substrate with the composition according to any one of claims 1 to 15 or the kit of additive for papermaking according to claim 16.

**INTERNATIONAL SEARCH REPORT**

International application No.
**PCT/JP2024/044222**

**A. CLASSIFICATION OF SUBJECT MATTER**

***C08L 91/00***(2006.01)i; ***C08K 5/20***(2006.01)i; ***C08L 83/08***(2006.01)i; ***C09K 3/18***(2006.01)i; ***D21H 17/03***(2006.01)i; ***D21H 21/16***(2006.01)i
FI: C08L91/00; C08K5/20; C08L83/08; C09K3/18 101; D21H17/03; D21H21/16

According to International Patent Classification (IPC) or to both national classification and IPC

**B. FIELDS SEARCHED**

Minimum documentation searched (classification system followed by classification symbols)

C08L91/00; C08K5/20; C08L83/08; C09K3/18; D21H17/03; D21H21/16

Documentation searched other than minimum documentation to the extent that such documents are included in the fields searched

Published examined utility model applications of Japan 1922-1996
Published unexamined utility model applications of Japan 1971-2025
Registered utility model specifications of Japan 1996-2025
Published registered utility model applications of Japan 1994-2025

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 5-302065 A (TOKAI PULP KK) 16 November 1993 (1993-11-16)<br>claims, examples | 1-15, 17-19<br>16 |
| X<br>A | JP 2011-111703 A (KAGAWA PREFECTURE) 09 June 2011 (2011-06-09)<br>claims, examples | 1-15, 17-19<br>16 |
| X | WO 2023/182272 A1 (MITSUBISHI CHEMICAL CORPORATION) 28 September 2023 (2023-09-28)<br>claims, paragraphs [0124]-[0125], examples | 1-19 |
| X | JP 62-263279 A (MITSUBISHI CHEMICAL CORPORATION) 16 November 1987 (1987-11-16)<br>claims, page 4, upper right column, examples | 1-19 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **07 February 2025** | **18 February 2025** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/044222**

| Patent document cited in search report | Publication date (day/month/year) | Patent family member(s) | Publication date (day/month/year) |
|---|---|---|---|
| JP 5-302065 A | 16 November 1993 | (Family: none) | |
| JP 2011-111703 A | 09 June 2011 | KR 10-0990529 B1 | |
| WO 2023/182272 A1 | 28 September 2023 | CN 118900896 A | |
| JP 62-263279 A | 16 November 1987 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2005060921 A
- FR 627


### Non-patent literature cited in the description


- *Polym. Eng. Sci.*, 1974, vol. 14 (2), 147
- *Eng. Sci.*, 1974, vol. 14 (2), 147
- **W. G. GRIFFIN**. *J. Soc. Cosmetic Chemists*, 1949, vol. 1, 311
- **W. G. GRIFFIN**. *J. Soc. Cosmetic Chemists*, 1954, vol. 5, 249
- *Polym. Eng. Sci.*, 1974, vol. 14 (2), 147-154